# EUROPEAN PATENT APPLICATION

(11) **EP 4 535 544 A1**
(43) Date of publication of application: **09.04.2025**
(21) Application number: 23811909.3
(22) Date of filing: 26.05.2023
(51) Int. Cl.: H01M 50/451, H01G 9/02, H01G 11/52, H01M 50/414, H01M 50/417, H01M 50/434, H01M 50/437, H01M 50/44, H01M 50/443, H01M 50/463, H01M 50/489

(54) **SEPARATOR FOR POWER STORAGE DEVICES, AND POWER STORAGE DEVICE COMPRISING SAME**

(30) Priority: 27.05.2022 JP 2022087222
(71) Applicant: Asahi Kasei Battery Separator Corporation, Tokyo 100-0006 (JP)
(72) Inventor: MISAWA, Kazushi, Tokyo 100-0006 (JP); MACHIDA, Naoki, Tokyo 100-0006 (JP)
(74) Representative: dompatent von Kreisler Selting Werner - Partnerschaft von Patent- und Rechtsanwälten mbB
(86) International application number: PCT/JP2023/019773
(87) International publication number: WO 2023/229037

(57) **Abstract**

The present invention provides a separator for power storage devices, the separator comprising a base material 10 which is a polyolefin microporous membrane that contains a polyolefin as a main component, and a cover layer 20 which is arranged on at least one surface of the base material 10. With respect to this separator for power storage devices, the cover layer 20 contains an inorganic filler 1 and a thermoplastic polymer; the thermoplastic polymer forms particulate polymers 2 that protrude from an inorganic filler portion L1; and the coefficient of static friction of the cover layer 20 is 0.40 to 0.60.

## Description

### FIELD

The present disclosure relates to a separator for an electricity storage device and an electricity storage device comprising the same.

### BACKGROUND

Electricity storage devices, such as lithium-ion secondary batteries, are being actively developed. In general, an electricity storage device includes a positive electrode, a negative electrode, and a microporous membrane separator between them. The separator has the function of preventing direct contact between the positive electrode and the negative electrode and allowing ions to permeate through the electrolyte solution held in the micropores thereof. The separator is required to have safety performance such as a characteristic to quickly stop the battery reaction at the time of abnormal heating (fuse characteristics), and performance to maintain its shape even at high temperatures and prevent dangerous situations in which the positive electrode and the negative electrode directly react (short-circuit resistance characteristics).

Non-aqueous secondary batteries such as lithium-ion secondary batteries are commerciallyavailable in various shapes such as cylindrical, square, and pouch-like, depending on the application. The battery production method varies depending on the shape of the battery. For example, the production method for a square battery includes the steps of pressing a laminate of electrodes and a separator or a wound body in which a laminate of electrodes and a separator are wound, and inserting into a rectangular exterior can.

In particular, in recent years, in order to increase the capacity of electricity storage devices, the volume of the electricity storage device has been reduced by hot pressing a laminate of electrodes and a separator, or by hot pressing a wound body obtained by winding a laminate of electrodes and a separator. In this case, in order to affix the electrodes and the separator after hot pressing and maintain the volume at the time of pressing, there is known a technology in which a covering layer containing a thermoplastic polymer which exhibits an adhesive function under certain conditions is arranged on the substrate to improve the adhesion between the entire separator and the electrodes.

Patent Literature 1 describes a separator comprising a porous coating layer containing organic polymer particles for the purpose of enhancing safety by increasing the binding strength between the separator and the electrodes without performing a moisture-induced phase separation process for the organic binder polymer or a process of secondary coating of an adhesive layer. In this separator, the organic polymer particles protrude to a height of 0.1 µm or more and 3 µm or less from the surface of the porous coating layer.

Patent Literature 2 describes a separator comprising a functional layer containing inorganic particles and a particulate polymer to provide a separator having excellent adhesion and heat resistance, and an improved electrolyte solution injection property. When the surface of this functional layer is viewed in a plan view, the ratio of the area occupied by the inorganic particles per unit area of the surface of the functional layer is greater than 90%, the volume average particle size of the particulate polymer is within a specific range, and the volume average particle size of the particulate polymer is greater than the thickness of the inorganic particle layer.

Patent Literature 3 describes a separator having a functional layer containing inorganic particles and a particulate polymer, for the purpose of providing a functional layer for an electrochemical element that has excellent process adhesion and can cause the electrochemical element to exhibit excellent cycle characteristics. This functional layer has a particle-shedding portion, and when the surface of the functional layer for an electrochemical element is viewed in a plan view, the ratio of the area of the particle-shedding portion to the total area of the particulate polymer and the particle-shedding portion is 0.1% or more and 40.0% or less, and the volume average particle size of the particulate polymer is greater than the thickness of the inorganic particle layer containing the inorganic particles.

Patent literature 4 focuses on the lamination property, insulation property, curling, adhesion to electrodes, and application of polyvinylidene fluoride (PVDF) of a non-aqueous secondary battery separator, as well as the cycle characteristics of a non-aqueous secondary battery, and describes, regarding a laminate in which a resin-containing porous layer is laminated on at least one side of a porous film containing polyolefin as a primary component, the relationship between the critical surface tension of the outermost surface of the porous layer and the critical surface tension of the interface side of the porous film, or the relationship between an increase in dielectric strength relative to an increase in the amount of resin contained per unit area of the porous layer and an increase in dielectric strength relative to an increase in the amount of polyolefin contained per unit area of the porous film. Patent Literature 4 further describes that this porous layer may have a specific coefficient of dynamic friction when formed as a functional layer.

### [CITATION LIST]

### [PATENT LITERATURE]

[PTL 1] Korean Patent Publication No. 10-2016-0118979
[PTL 2] WO 2020/175079
[PTL 3] WO 2021/085144
[PTL 4] WO 2016/031466

### SUMMARY

### [TECHNICAL PROBLEM]

However, these conventional separators have the following problems. For example, in Patent Literature 1, since the adhesive polymer has poor dispersibility in a coating material state, there are parts on the separator where the adhesive polymer aggregates, which causes unevenness in the adhesive strength with the electrode, resulting in a problem of a decrease in the overall adhesive strength and a problem of a deterioration in heat resistance (heat shrinkage resistance). In Patent Literature 2 and 3, the binding strength of the covering layer is insufficient, and there is still room for improvement in suppressing powder flaking during the production process and in adhesive strength with the electrode. It should be noted that, even if the technology described in Patent Literature 4 related to the productivity of a non-aqueous secondary battery comprising electrodes, there is still room for improvement in the productivity of a separator for a non-aqueous secondary battery.

Furthermore, in accordance with improvements in electrode materials and high-density modularization of multiple nonaqueous secondary batteries (single cells) (increasing the module volume energy density), there remains a demand for improvements in the output characteristics (rate characteristics) and/or cycle characteristics of a battery comprising a separator.

In view of the circumstances described above, an object of the present invention is to provide a separator for an electricity storage device with which productivity can be improved, and an electricity storage device comprising the same.

### [SOLUTION TO PROBLEM]

Examples of embodiments of the present disclosure are listed below.
[1] A separator for an electricity storage device, comprising a substrate which is a polyolefin microporous membrane comprising a polyolefin as a primary component, and
   a covering layer arranged on at least one surface of the substrate, wherein
   the covering layer comprises an inorganic filler and a particulate, thermoplastic polymer,
   the particulate thermoplastic polymer comprises a protruding particulate polymer, which protrudes from a surface of the inorganic filler portion, and
   a coefficient of static friction of the covering layer is 0.40 or more and 0.60 or less.
[2] The separator for an electricity storage device according to Item 1, wherein a part of a surface of the protruding particulate polymer is missing.
[3] The separator for an electricity storage device according to Item 1 or 2, wherein in surface observation of the covering layer, a ratio of an area of a particulate polymer-shedding portion to a total area of the particulate polymer is 10% or less.
[4] The separator for an electricity storage device according to any one of Items 1 to 3, wherein the covering layer is formed in a gradient shape so as to be thicker toward the protruding particulate polymer, and
   when a thickness of the inorganic filler portion is defined as L1 and a maximum distance from a boundary between the substrate and the covering layer to an outer surface of the inorganic filler, which is formed in the gradient shape, is defined as L2, an average value of a gradient ratio L2/L1 of the covering layer is 1.2 or more.
[5] The separator for an electricity storage device according to any one of Items 1 to 4, wherein the covering layer is formed in a gradient shape so as to be thicker toward the protruding particulate polymer, and
   when a thickness of the inorganic filler portion is defined as L1, a maximum distance from a boundary between the substrate and the covering layer to an outer surface of the inorganic filler, which is formed in the gradient shape, is defined as L2, and a maximum distance from a boundary between the substrate and the covering layer to a contour of the protruding particulate polymer is defined as L3, an average value of a coverage rate (L2-L1)/(L3-L1) of the protruding particulate polymer is 0.4 or more.
[6] The separator for an electricity storage device according to any one of Items 1 to 5, wherein 20% or more of the protruding particulate polymer is in contact with the surface of the substrate.
[7] The separator for an electricity storage device according to any one of Items 1 to 6, wherein the covering layer has a 180° peel strength from the substrate of 200 gf/cm or more.
[8] The separator for an electricity storage device according to any one of Items 1 to 7, wherein in surface observation of the covering layer, a coefficient of variation (cv) of areas (sᵢ) of Voronoi polygons which are obtained by Voronoi division using the protruding particulate polymers as generating points is 0.10 or more and 0.60 or less.
[9] The separator for an electricity storage device according to any one of Items 1 to 8, a number of the protruding particulate polymers is 50% or more of a total number of the particulate, thermoplastic polymers contained in the covering layer.
[10] The separator for an electricity storage device according to any one of Items 1 to 9, wherein a particle size distribution of the particulate, thermoplastic polymer is 1.1 or less.
[11] The separator for an electricity storage device according to any one of Items 1 to 10, wherein the particulate polymer is a primary particle.
[12] The separator for an electricity storage device according to Item 11, wherein an average particle size of the primary particles is 1 µm or more and 10 µm or less.
[13] The separator for an electricity storage device according to any one of Items 1 to 12, wherein a TD thermal shrinkage rate at 130°C for 1 hour is 5% or less.
[14] The separator for an electricity storage device according to any one of Items 1 to 13, wherein a TD thermal shrinkage rate at 150°C for 1 hour is 5% or less.
[15] The separator for an electricity storage device according to any one of Items 1 to 14, wherein an amount of the particulate polymer is 1 part by weight or more and 50 parts by weight or less relative to 100 parts by weight of the inorganic filler contained in the covering layer.
[16] The separator for an electricity storage device according to any one of Items 1 to 15, wherein the protruding particulate polymer protrudes by 0.1-fold or greater the thickness of an inorganic filler portion.
[17] The separator for an electricity storage device according to any one of Items 1 to 16, wherein the protruding particulate polymer includes at least one selected from the group consisting of a copolymer containing a (meth)acrylate as a monomer, a styrene-butadiene copolymer, and a copolymer containing a fluorine atom.
[18] The separator for an electricity storage device according to any one of Items 1 to 17, wherein the protruding particulate polymer comprises a copolymer containing (meth)acrylic acid, butyl (meth)acrylate, and ethylhexyl (meth)acrylate as monomers.
[19] The separator for an electricity storage device according to any one of Items 1 to 18, wherein the protruding particulate polymer comprises a copolymer containing a polyfunctional (meth)acrylate as a monomer.
[20] The separator for an electricity storage device according to any one of Items 1 to 19, wherein a methylene chloride soluble content in the separator for an electricity storage device is 0.05% by weight or more and 0.80% by weight or less relative to the total weight of the separator for an electricity storage device.
[21] The separator for an electricity storage device according to any one of Items 1 to 20, wherein a total amount of metal cations contained in the covering layer is 0.1 ppm or more and 100 ppm or less based on the total weight of the covering layer.
[22] An electricity storage device, comprising the separator for an electricity storage device according to any one of Items 1 to 21.

### [ADVANTAGEOUS EFFECTS OF INVENTION]

According to the present disclosure, since winding misalignment of the separator for an electricity storage device can be prevented, winding misalignment of a wound body of the separator for an electricity storage device and the electrodes can be prevented, and/or, for example, in the production of a separator for an electricity storage device or an electricity storage device, the gripping performance between the membrane of the separator for an electricity storage device and the roller can be improved, whereby the membrane can be transported with low tension during slitting and curling in the longitudinal direction (MD) of the separator can be reduced or eliminated, the productivity of the separator for an electricity storage device can be improved.

### BRIEF DESCRIPTION OF DRAWINGS

FIG. 1 is a schematic view of a surface of a covering layer of an embodiment of the present invention.
FIG. 2 is a view of a cross-section taken along line A-A of FIG. 1.
FIG. 3 is a schematic view showing an example of observation of the surface of the covering layer of the present embodiment.
FIG. 4 shows an example of results of identifying the protruding particulate polymers of FIG. 3.
FIG. 5 is an example of a result of Voronoi division on FIG. 4.
FIG. 6 is an example of results of extracting Voronoi polygons corresponding to closed regions in FIG. 5.
FIG. 7 is an example of a method for setting ten areas covering 95 fields of view.
FIG. 8 is a schematic view showing that a part of the particulate polymer surface protruding from the inorganic filler portion is missing in the covering layer according to the present embodiment.
FIG. 9 is a schematic view showing an inspection jig for evaluating step misalignment and a wound body set thereon.

### DESCRIPTION OF EMBODIMENTS

Hereinafter, exemplary embodiments of the present disclosure (hereinafter, abbreviated as "the present embodiment") will be described in detail, but the present disclosure is not limited to the present embodiment.

As used herein, the longitudinal direction (MD) means the machine direction of the microporous membrane continuous molding, and transverse direction (TD) means the direction crossing the MD of the microporous membrane at an angle of 90°.

In the present description, the upper and lower limits of each numerical range can be arbitrarily combined. Furthermore, a certain constituent material comprising a specific component as a primary component means that the content of the specific component constitutes the largest weight in the weight of the material. Unless otherwise specified, the physical properties or numerical values described in the present description are measured or calculated by the methods described in the Examples. The scale, shape, length, etc., of each part shown in the drawings may be exaggerated for greater clarity.

### <<Separator for Electricity Storage Device>>

The separator for an electricity storage device of the present embodiment comprises a substrate which is a polyolefin microporous membrane comprising a polyolefin as a primary component, and a covering layer arranged on at least one surface of the substrate. The covering layer comprises an inorganic filler and a particulate polymer that is a thermoplastic polymer.

### <Amount of Particulate Polymer>

The amount of particulate polymer is 1 part by weight or more and 50 parts by weight or less, preferably 3 parts by weight or more and 30 parts by weight or less, more preferably 5 parts by weight or more and 20 parts by weight or less, and further preferably 5 parts by weight or more and 15 parts by weight or less, relative to 100 parts by weight of the inorganic filler. When the amount of particulate polymer is 1 part by weight or more and 50 parts by weight or less, it is possible to increase the adhesive strength with the electrodes while maintaining ion permeability. From the viewpoint of improving heat shrinkage resistance, the amount is preferably 10 parts by weight or less.

### <Protruding Amount of Particulate Polymer>

The particulate polymer may comprise a particulate polymer protruding from the covering layer by 0.1-fold or more the thickness of the inorganic filler portion of the covering layer.

In the present description, the "thickness of the inorganic filler portion of the covering layer" means the distance (L1) between the surface of the polyolefin microporous membrane and the outermost surface of the layer of inorganic fillers stacked thereon (layer of inorganic fillers), and is measured from an SEM image of a cross-section of the covering layer. It should be noted that the "inorganic filler portion" means the portion that does not contain particulate polymer and is 1.5D or more away from the center of each protruding particulate polymer in the horizontal direction (the surface direction of the covering layer) when the diameter of each protruding particulate polymer is D. The measurement conditions are explained in the Examples.

Since the protrusion of the particulate polymer is 0.1-fold or more the thickness of the inorganic filler portion, the adhesive strength with the electrode can be increased. Since the protrusion of the particulate polymer is 0.1-fold or more the thickness of the inorganic filler portion, gaps are formed between the separator and the electrodes. These gaps can mitigate the effects of expansion/contraction of the electrodes accompanying charging and discharging of the electricity storage device, suppress distortion of the wound body, and improve cycle characteristics. From this viewpoint, the protrusion of the particulate polymer is preferably 0.2-fold or more or 0.3-fold or more. From the viewpoint of preventing the particulate polymer from shedding from the separator, the protrusion of the particulate polymer is preferably 5-fold or less, more preferably 4-fold or less, 3-fold or less, 2-fold or less, 1-fold or less, or 0.4-fold or less.

In the present description, "protruding" means that the particulate polymer protrudes toward the surface side of the covering layer beyond the "thickness of the inorganic filler portion." In the protruding portion of the particulate polymer (hereinafter referred to as the "protruding portion"), a part of the protruding portion may be covered with the inorganic filler. From the viewpoint of preventing disengagement of the particulate polymer from the covering layer and obtaining a higher adhesive strength, it is preferable that a part of the periphery of the protruding portion be covered with the inorganic filler. From the viewpoint of obtaining a higher adhesive strength by securing the contact area between the particulate polymer and the electrodes, it is preferable that the center of the protruding portion be exposed on the surface of the covering layer.

In the present description, the "state in which the particulate polymer protrudes by 0.1-fold or more the thickness of the inorganic filler portion" means that when the thickness of the inorganic filler portion measured from an SEM image of the cross section of the covering layer is L1 and the maximum distance from the boundary between the substrate and covering layer to the contour of the protruding particulate polymer is L3, the average value of the ratio (L3-L1)/L1 is 0.1 or more. In the present description, "the maximum distance from the boundary between the substrate and covering layer to the contour of the protruding particulate polymer" means the distance to the point on the contour of the protruding particulate polymer that is farthest from the boundary between the substrate and covering layer.

In the present description, the "state in which the particulate polymer protrudes from the covering layer by 0.1-fold or more the thickness of the inorganic filler portion of the covering layer" means, in other words, that the maximum distance (L3) from the boundary line between the substrate and covering layer to the contour of the protruding particulate polymer, as measured from an SEM image of the cross section of the covering layer, is 1.1-fold or more the thickness (L1) of the inorganic filler portion of the covering layer.

The number of protruding particulate polymers is preferably 50% or more of the total number of particulate polymers contained in the covering layer. According to this, the mode of operation and effect of the protruding particulate polymer can suitably be obtained. The ratio of the number of protruding particulate polymers to the total number of particulate polymers contained in the covering layer (number of protruding particulate polymers/total number of particulate polymers) is also expressed as the protrusion ratio, and is positioned as one of the indicators of the degree of protrusion of the particulate polymer in the covering layer. The protrusion ratio is more preferably 60% or more, 70% or more, or 80% or more, and the theoretical upper limit thereof is 100%.

### <Gradient Shape of Covering Layer, Contact Ratio Between Particulate Polymer and Substrate, 180° Peel Strength>

The separator for an electricity storage device of the present embodiment preferably has one or more of the following features (1) to (3):
(1) the covering layer is formed in a gradient shape so as to become thicker toward the protruding particulate polymer;
(2) 20% or more of the protruding particulate polymers are in contact with a surface of the substrate; and
(3) the 180° peel strength of the covering layer from the substrate (hereinafter also simply referred to as "180° peel strength") is 200 gf/cm or more.

### Feature (1):

In the separator for an electricity storage device, the covering layer is preferably formed in a gradient shape so as to become thicker toward the protruding particulate polymer. This prevents disengagement of the particulate polymer from the covering layer, and increases the adhesive strength with the electrodes. In the present description, the term "gradient shape" means that when the thickness of the inorganic filler portion of the covering layer is defined as L1 and the maximum distance from the boundary between the substrate and the covering layer to the outer surface of the inorganic filler of the covering layer formed in a gradient shape is defined as L2, the average value of the gradient ratio L2/L1 of the covering layer is 1.1 (for example, 1.10) or more.

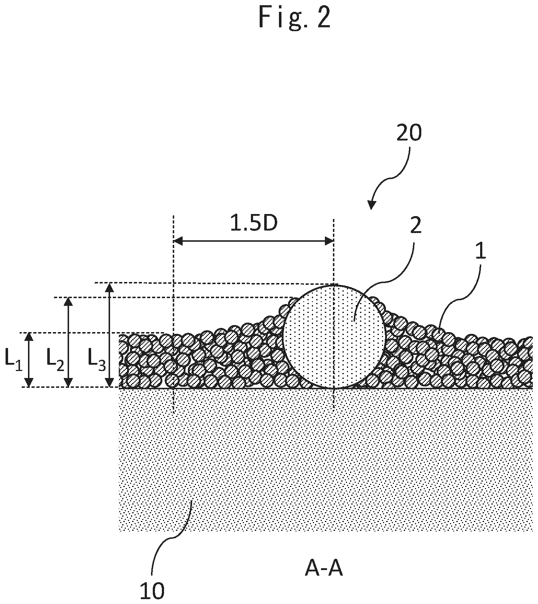

Regarding the relationship between L1 and L2, refer to the schematic view of FIG. 2. The gradient is preferably such that the thickness of the covering layer changes continuously so that the covering layer gradually becomes thicker toward the protruding particulate polymer, and preferably does not include discontinuous changes due to deficiencies of the covering layer. The absence of deficiencies of the covering layer tends to improve heat resistance and/or cycle characteristics. The gradient may be gentler as it moves away from the protruding particulate polymer, and may be steeper as it approaches the protruding portion of the protruding particulate polymer.

When the inorganic filler covers a part of the protruding portion, the gradient of the protruding portion may become gentle again towards the center of the protruding portion. The average value of the gradient ratio L2/L1 of the covering layer is preferably 1.2 (for example, 1.20) or more, 1.3 (for example, 1.30) or more, 1.4 (for example, 1.40) or more, 1.5 (for example, 1.50) or more, or 1.7 (for example, 1.70) or more.

By forming the covering layer in a gradient shape so as to become thicker toward the protruding particulate polymer, the inorganic filler may follow the contour of the particulate polymer to cover a part of the protruding portion. It is preferable that the inorganic filler follow the contour of the particular polymer to cover a part of the periphery of the protruding portion.

It is also preferable that the vicinity of the center of the protruding portion be exposed on the surface of the covering layer. When the maximum distance from the boundary line between the substrate and the covering layer to the contour of the protruding particulate polymer (the distance from the boundary line between the substrate and the covering layer to the point on the contour of the protruding particulate polymer that is the farthest from the boundary line between the substrate and the covering layer) is defined as L3, the average value of the coverage rate (L2-L1) / (L3-L1) of the protruding portion is preferably 0.4 (for example, 0.40) or more.

Regarding the relationship between L1, L2 and L3, refer to the schematic view of FIG. 2 as an example. By setting the average value of the gradient ratio L2/L1 to 1.1 or more, or the average value of the coverage rate (L2-L1)/(L3-L1) to 0.4 or more, disengagement of the particulate polymer from the covering layer is prevented, and the adhesive strength with the electrodes is increased. The upper limit of the average value of the gradient ratio L2/L1 may be 5.0 or less, 4.0 or less, 3.0 or less, 2.8 or less, 2.5 or less, 2.3 or less, 2.0 or less, or 1.8 or less, from the viewpoint of securing the adhesive area between the particulate polymer and the electrodes and increasing the adhesive strength with the electrodes.

The upper limit of the coverage rate (L2-L1) / (L3-L1) is preferably less than 1.0 (for example, 1.00), 0.9 (for example, 0.90) or less, 0.8 (for example, 0.80) or less, or 0.7 (for example, 0.70) or less. A coverage rate of 1.0 or more means that the inorganic filler on the protruding portion of the particulate polymer reaches the top of the contour of the protruding particulate polymer (the point farthest from the boundary line between the substrate and the covering layer). When the coverage rate is less than 1.0, the contact area between the particulate polymer and the electrodes is secured, and the adhesive strength with the electrodes is increased. When the coverage rate is 0.8 or less, the contact area between the particulate polymer and the electrodes is increased, and the adhesive strength with the electrodes is increased.

### Feature (2):

In the separator for an electricity storage device, the contact ratio between the protruding particulate and the surface of the substrate is preferably 20% or more, more preferably 50% or more, and further preferably 70% or more. The "contact ratio" is calculated from an image obtained by observing the cross section of the covering layer of the separator for an electricity storage device with an SEM. By increasing the protruding particulate polymer contacting the substrate, the binding strength between the substrate and the particulate polymer is further increased, the 180° peel strength is improved, and the adhesive strength with the electrodes is increased. The upper limit of the contact ratio between the protruding particulate polymer and the surface of the substrate may be less than 100% or may be 100%.

### Feature (3):

The separator for an electricity storage device has a 180° peel strength of preferably 200 gf/cm or more, more preferably 230 gf/cm or more, and further preferably 250 gf/cm or more. The "180° peel strength" is the strength when the covering layer is peeled off so that the surface of the covering layer facing the substrate forms an angle of 180° with the substrate. By setting the 180° peel strength to 200 gf/cm or more, the adhesive strength with the electrodes is increased and thermal shrinkage is suppressed. The upper limit of the 180° peel strength may be 500 gf/cm or less.

The separator for an electricity storage device of the present embodiment has any combination of the above features (1) to (3), i.e.: (1) and (2); (1) and (3); (2) and (3); and (1), (2), and (3). Among these, from the viewpoint of higher adhesive strength and smaller thermal shrinkage rate, the combination of (1), (2), and (3) is preferable, and specifically, it is preferable that the covering layer be formed in a gradient shape so as to become thicker toward the protruding particulate polymer, the contact ratio between the protruding particulate polymer and the surface of the substrate be 20% or more, and the 180° peel strength be 200 gf/cm or more.

The separator for an electricity storage device of the present embodiment has the following features (4) and/or (5) in addition to features (1) to (3) described above or in addition to any combination of features (1) to (3) described above.

### Feature (4):

In the separator for an electricity storage device, in surface observation of the covering layer, a coefficient of variation (cv) of areas (sᵢ) of Voronoi polygons which are obtained by Voronoi division using the protruding particulate polymers as generating points is 0.10 or more and 0.60 or less. In the covering layer having a coefficient of variation (cv) within this range, the distribution of the protruding particular polymer is highly uniform. The coefficient of variation (cv) is preferably 0.20 or more, 0.25 or more, or 0.30 or more, and is preferably 0.55 or less, 0.50 or less, or 0.45 or less.

In a separator having feature (4) described above, the distribution of the protruding particulate polymer is highly uniform, and thus, the distribution of the region between the protruding particulate polymers is also highly uniform. Thus, by using a separator having feature (4) described above, the uniformity of the in-plane distribution of lithium-ion migration through the region between the electrodes can be improved, and thus, the rate characteristics and/or cycle characteristics can be improved.

In a separator having feature (4) described above, the distribution of the protruding particulate polymers is highly uniform, and thus, the contact region between the protruding particulate polymers and the electrodes before and after hot-pressing processing is also highly uniform in distribution. Thus, by using a separator having feature (4) described above, the uniformity of the in-plane distribution of stresses of the protruding particulate polymers exerted on the electrodes can be improved, and thus, adhesion with the electrodes can be improved.

In a separator having feature (4) described above, the distribution of the protruding particulate polymer is highly uniform, and thus, the distribution of the proportion of the heat-resistant inorganic filler is also highly uniform. Thus, by using a separator having feature (4) described above, the uniformity of the in-plane distribution of the heat resistance provided by the inorganic filler can be improved, and thus, the heat shrinkage resistance can be improved.

It has been conventionally believed that there may be a trade-off between "adhesion with the electrodes" and the "heat shrinkage resistance", and that there may be a trade-off between "adhesion with the electrodes" and the "rate characteristics" and/or "cycle characteristics." Specifically, it has been believed that since particulate polymers do not have sufficient heat resistance, increasing the content of particulate polymers to improve "adhesion with the electrodes" makes it difficult to improve the "heat shrinkage resistance." Since the presence of particulate polymers acts as resistance to ions, it has been believed that increasing the content of particulate polymers makes it difficult to improve "rate characteristics" and/or "cycle characteristics." In response to these points, according to the present embodiment, by adjusting the coefficient of variation (cv) to a predetermined range, it is possible to simultaneously achieve an improvement in adhesive strength with the electrodes, an improvement in heat shrinkage resistance, and an improvement in the rate characteristics and/or cycle characteristics of the electricity storage device, as described above.

The coefficient of variation (cv) can be adjusted to the range described above by, for example, changing the particle size and content of the thermoplastic polymer in the coating liquid applied to the substrate, the viscosity and application amount of the coating liquid, and the coating method and coating conditions. For example, the viscosity of the coating liquid applied to the substrate can be adjusted to a predetermined range; the particle size of the thermoplastic polymer in the coating liquid can be reduced; turbulent stirring can be performed when the coating liquid is supplied to the substrate in a coating step; and ultrasonic treatment can be performed on the coating liquid applied to the substrate.

"Voronoi division" refers to dividing a certain metric space into regions based on which points are closer to a number of points (generating points) arranged at arbitrary positions within the same space. A diagram containing the regions obtained in this manner is referred to as a Voronoi diagram. In a Voronoi diagram, the boundaries of the plurality of regions are part of the bisectors of each generating point, and each region forms a polygon (Voronoi polygon). In the present description, the "protruding particulate polymer", more specifically, the center point of the protruding portion of the protruding particulate polymer when observed on the surface, serves as the generating point.

In the observation field of the covering layer, each protruding particulate polymer is regarded as a circle having an average diameter (1). A perpendicular bisector is drawn between adjacent protruding particulate polymers, and the polygon enclosed by the perpendicular bisector for each polymer is referred to as a "Voronoi polygon." When Voronoi division is performed in the observation field, any region that is not closed is not considered. An example of an unclosed region is a region obtained by performing Voronoi division on a polymer when the polymer is present at the boundary of the observation field and the entire protruding portion of the polymer is not observed.

The area (sᵢ) of a Voronoi polygon can be measured by image analysis if necessary, and the mean (m) of the areas (sᵢ) can be obtained by dividing the sum of the areas (sᵢ) of the Voronoi polygons by the total number (n) of Voronoi polygons to be considered. The standard deviation (sd) of the areas (sᵢ) of the Voronoi polygons can be obtained by a conventional method from the areas (sᵢ) of the Voronoi polygons, the total number (n) of Voronoi polygons to be considered, and the mean (m). The coefficient of variation (cv) of the areas (sᵢ) of the Voronoi polygons is calculated from the following formula:$Coefficient of variation \left(cv\right) = standard deviation \left(sv\right) / mean \left(m\right)$

The coefficient of variation (cv) is considered to represent the in-plane distribution or aggregation state of the protruding particulate polymers. When the coefficient of variation (cv) is 0.10 or more, it can be determined that the protruding particulate polymers are randomly dispersed and arranged on the surface of the covering layer. When the coefficient of variation (cv) is 0.60 or less, it can be determined that the protruding particulate polymers are not excessively aggregated.

The observation means for the covering layer is preferably selected appropriately depending on the dimensions or distribution state of the thermoplastic polymer. Regarding the microscope, an electron microscope, an atomic force microscope, an optical microscope, or a differential interference microscope can be used, and among these, when handling the distribution state of dispersed particles in the manner of the present embodiment, it is preferable to use an electron microscope or an atomic force microscope. As the observation means for the covering layer, it is particularly preferable that the method shown in the Examples section be adopted.

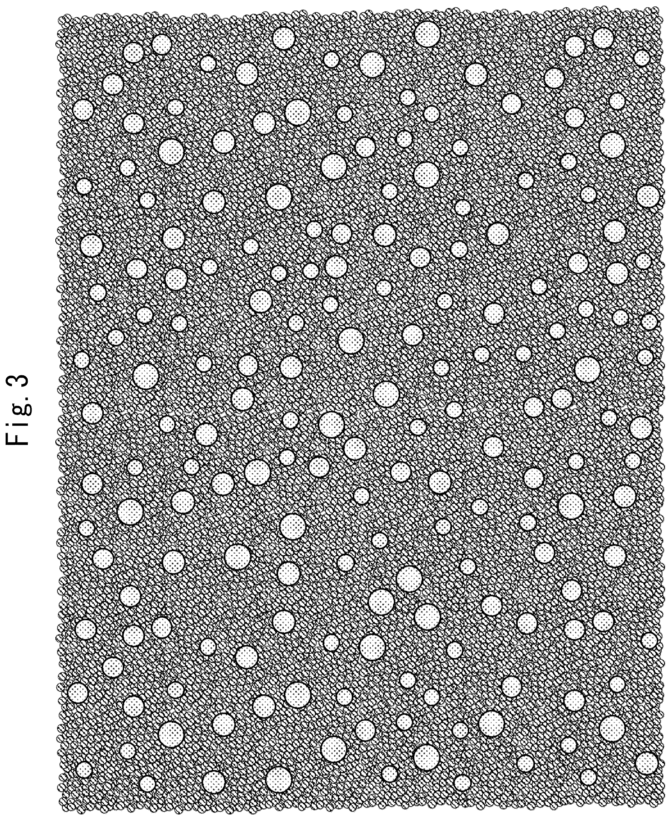

An average observation field of the covering layer should be ensured within the observation field. The projected area in the observation field should be appropriately adjusted so that the average distribution state of the protruding particulate polymers can be understood. For example, the protruding particulate polymers to be considered is preferably about 80 to 200 polymers/field of view. This observation field can be obtained by observing the covering layer with a preset observation means and magnification. For example, FIG. 3 is a schematic view of an example of observation of the surface of the covering layer with a scanning electron microscope as the observation means and a magnification of 1000-fold. The dispersion state of such thermoplastic polymer particles can be analyzed by Voronoi division.

In the observation using a scanning electron microscope, a magnification appropriate for the analysis by Voronoi division is set in accordance with the particle diameter of the thermoplastic polymer particles. Specifically, the magnification is set so that the number of thermoplastic polymer particles observed in one field of view is preferably 40 or more and 300 or less, more preferably 60 or more and 240 or less, and further preferably 80 or more and 200 or less. This allows the analysis by Voronoi division to be appropriately performed. For example, when the content of thermoplastic polymer particles having a particle size of approximately 2.0 µm is approximately 10 parts by weight relative to 100 parts by weight of the inorganic filler of the covering layer, a magnification of 5000-fold is appropriate, and when the content of thermoplastic polymer particles having a particle size of approximately 3.5 µm is approximately 10 parts by weight relative to 100 parts by weight of the inorganic filler of the covering layer, a magnification of approximately 1000-fold is appropriate for the analysis by Voronoi division.

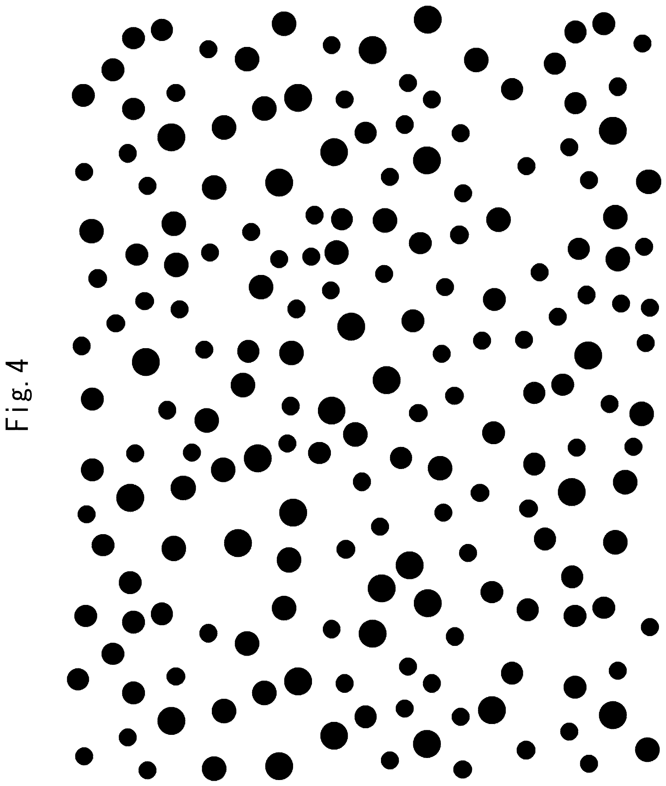

The protruding particulate polymers included in the observation field obtained by the observation method described above are identified. For example, the protruding particulate polymers are identified from the observation field by the naked eye or using image processing software. FIG. 4 shows an example of the result of identifying the protruding particulate polymer included in the observation field of FIG. 3 using image processing software.

The protruding particulate polymers identified by observing the surface of the covering layer can be subjected to Voronoi division as defined above. Specifically, the surface of the coating film after the substrate is coated with a coating liquid containing a thermoplastic polymer is photographed to obtain an image. The protruding portions of the protruding particulate polymers identified in the obtained image can be regarded as a circle having an average diameter (1 (L) and subjected to Voronoi division to draw Voronoi polygons. For example, the Voronoi polygons may be drawn manually or using image processing software. The areas (sᵢ) of the drawn Voronoi polygons are calculated.

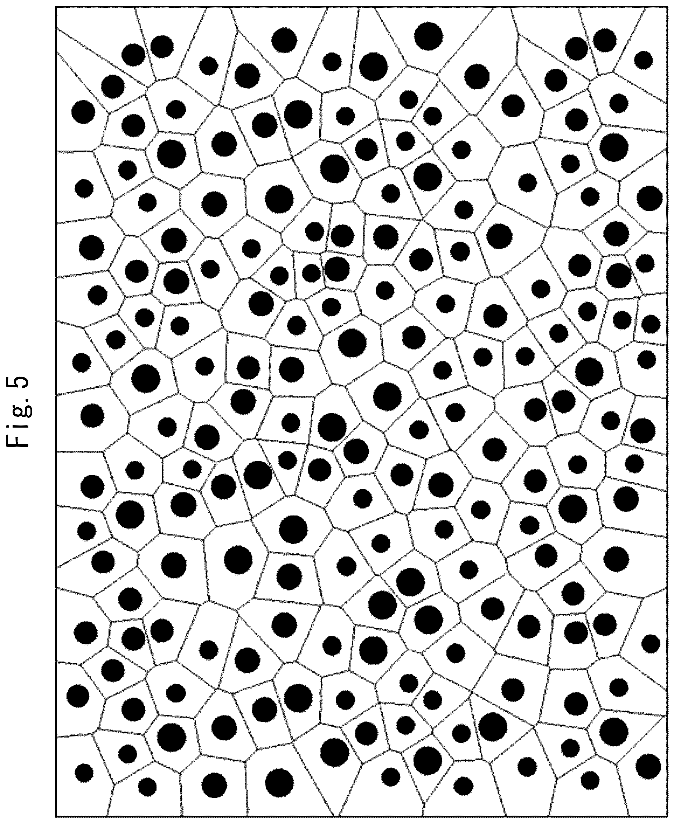

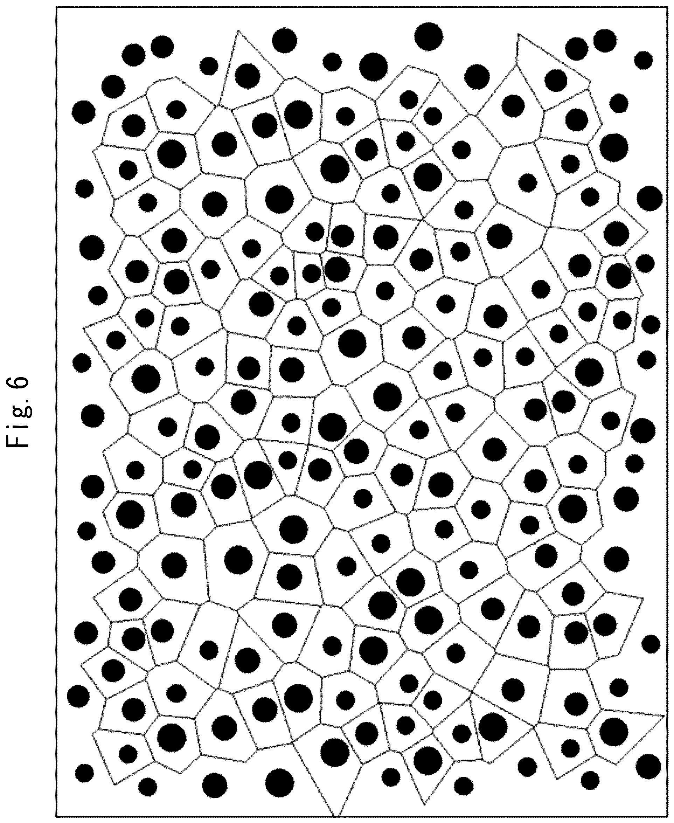

For example, FIG. 5 shows an example of the results of obtaining Voronoi polygons by Voronoi division using the protruding particulate polymers identified in FIG. 4 as generating points. Among the Voronoi polygons shown in FIG. 5, the Voronoi polygons corresponding to closed regions were automatically extracted using image processing software, and the results are shown in FIG. 6.

The sum of the protruding particulate polymers and the areas (sᵢ) of the Voronoi polygons in the observation field can be obtained by the observation method and image processing method described above. The coefficient of variation (cv) can be calculated according to the foregoing. The distribution of protruding particulate polymers may vary depending on the observation field. Thus, the coefficient of variation (cv) is preferably the average value of the values calculated for each of a plurality of observation fields. The number of fields of view is preferably 3 or more.

It is particularly preferable to adopt the average value of the values calculated for ten fields of view determined as follows.
i) Each measurement field: an image captured with a scanning electron microscope
ii) Field of view setting method:
   a) set the starting field of view; and
   b) set a total of ten fields of view, consisting of the starting field of view and nine fields of view consisting of regions adjacent to the starting field of view in a uniaxial direction at intervals of 5 mm, as measurement fields.

It is preferable that each of the measurement fields be an image captured at a magnification set so that the number of protruding particulate polymers observed in one field of view is 80 or more and 200 or less.

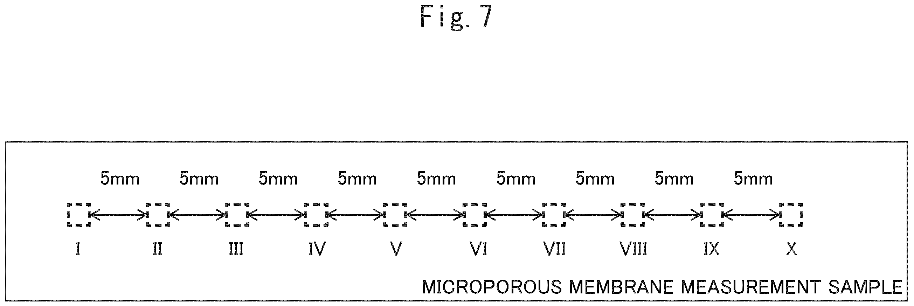

A preferred method for setting the ten fields of view in the present embodiment will be described below with reference to FIG. 7.
i) Regarding the captured images, as described above, images captured with a scanning electron microscope at a magnification of 1000-fold can be used. In the image of FIG. 7, first, a starting field of view (I) is set. Since one field of view is composed of an image captured with a scanning electron microscope with a magnification of 1000-fold, the scale of one field of view is approximately 100 µm × 100 µm, whereby a field of view suitable for Voronoi division evaluation based on the protruding particulate polymer is formed. Next, nine fields of view (II to X) adjacent to the starting field of view (I) in a uniaxial direction at intervals of 5 mm are set. Each of these fields of view (II to X) is composed of an image captured at the same magnification as the starting field of view (I).

The observation of the surface of the covering layer is preferably performed on regions not involved in ion conduction. For example, the covering layer of the separator immediately after production and not yet incorporated in an energy storage element can be observed. When the energy storage element is in use or has been used, it is also a preferred aspect of the present embodiment to observe the so-called "ear" portion of the separator (the region near the outer edge of the separator not involved in ion conduction). As can be understood from the evaluation method described above, when ten fields of view are observed, since a portion of the separator having a length of about 45 mm is measured, the dispersion state of the thermoplastic polymer on the surface can be accurately evaluated.

Voronoi division being possible as described above is presumed to indicate that the particulate polymers do not substantially overlap with each other in the covering layer and are each present as a single-layer particle. For example, when particulate polymers overlap with each other multiple times in the covering layer, since the concept of the area occupied by a single particle does not hold, Voronoi division cannot be performed.

In the separator of the present embodiment, it is preferable that the particulate polymers in the covering layer be arranged so as not to substantially overlap with each other, and that the requirements described above be adjusted to fall within the above-mentioned ranges.

The presence (pattern) of the covering layer on the substrate is preferably such that the particulate polymer is dispersed throughout the entire surface of the substrate. Though the particulate polymer may form aggregates in some regions, it is preferable that the particulate polymer be suitably dispersed overall to the extent that the coefficient of variation (cv) described above is satisfied. It is preferable that the particulate polymer be suitably dispersed overall to the extent that the coefficient of variation (cv) is satisfied.

### Feature (5):

In the separator for an electricity storage device, the coefficient of static friction of the covering layer is 0.40 or more and 0.60 or less. When the coefficient of static friction of the covering layer is within this range, it is possible to prevent winding misalignment of the separator for an electricity storage device and/or to prevent winding misalignment of a wound body of the separator for an electricity storage device and the electrodes, thereby improving the productivity of the separator for an electricity storage device.

In the separator for an electricity storage device having feature (5), when the coefficient of static friction of the covering layer is in the range of 0.40 or more and 0.60 or less, for example, in the production of the separator for an electricity storage device or an electricity storage device, the gripping performance between the membrane of the separator for an electricity storage device and the roller can be improved, whereby the membrane can be transported with low tension during slitting, and MD curling of the separator can be reduced or eliminated, thereby improving productivity.

From the viewpoint of further improving the productivity of the separator for an electricity storage device, the coefficient of static friction of the covering layer is preferably 0.41 or more and 0.59 or less, more preferably 0.41 or more and 0.57 or less, and further preferably 0.41 or more and 0.55 or less.

In the separator for an electricity storage device having feature (5), it is preferable that the particulate polymer protruded from the surface of the inorganic filler portion included in the covering layer be composed of a thermoplastic polymer, and it is preferable that at least a part of the surface of the protruding particulate polymer be missing. When a part of the surface of the protruding particulate polymer is missing, a sufficient exposed area of the thermoplastic polymer can be secured to prevent winding misalignment during winding of the separator or during production of the electricity storage device and to improve gripping performance with the roller and gripping performance with the electrodes.

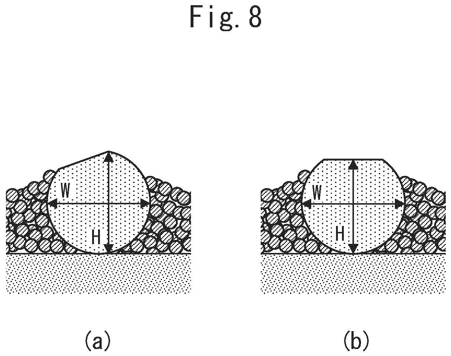

In the present description, a part of the surface of the protruding particulate polymer being missing means that the exposed surface of at least one of the protruding polymer particles is not spherical or that a part of the exposed surface thereof has a discontinuous surface. A part of the surface of the particulate polymer protruded from the surface of the inorganic filler portion included in the covering layer being missing makes it possible to increase the contact area between a wound body and the protruding particulate polymer when the separator for an electricity storage device is wound into the wound body, thereby preventing the separator from becoming misaligned during winding, improving productivity. FIG. 8 is a schematic view showing a part of the particulate polymer surface protruding from the inorganic filler portion in the covering layer of the separator for an electricity storage device having feature (5) being missing. For example, when the outer shape of the protruding particulate polymer is observed as a trapezoid, parallelogram, or polygon in cross-sectional observation, it may be considered that a part of the surface of the protruding particulate polymer is missing. Among them, from the viewpoint of further improving the productivity of the separator for an electricity storage device, it is more preferable that a part of the spherical surface composed of the particulate polymer be scraped into a flat surface as shown in FIG. 8(a), that a part of the spherical surface have a flat region as shown in FIG. 8(b), or that a part of the spherical surface composed of the particulate polymer be missing.

From the same viewpoints as above, the missing ratio in the spherical surface of the protruding particulate polymer is preferably within the range of 0.74 to 0.93, and in observation of the surface of the covering layer, the ratio of the area of the particulate polymer-shedding portion to the total area of the particulate polymer is preferably 10 % or less, more preferably less than 0.1%, for example, 0%. The method of calculating the missing ratio, the method of observing the surface of the covering layer, and the method of calculating the ratio of the area of the particulate polymer-shedding portion to the total area of the particulate polymer will be described in detail in the Examples.

Means for adjusting the coefficient of static friction of the covering layer within the range described above and/or causing a part of the surface of the protruding particulate polymer to be missing include, for example, controlling the conditions of the coating and drying steps, in which a coating liquid is applied to a substrate in the production process for the separator for an electricity storage device, such as the particle size and content of the thermoplastic polymer in the coating liquid applied to the substrate, the viscosity and application amount of the coating liquid, as well as the coating method and coating conditions, or the conditions after the coating and drying steps, such as the pressure applied to the coated surface, the speed of the transport roller with which the coated surface comes into contact, the shape of the inorganic filler in the covering layer, and the peel strength of the covering layer.

More specifically, means for controlling the conditions of the coating and drying steps include, for example, adjusting the viscosity of the coating liquid applied to the substrate within a predetermined range; reducing the particle size of the thermoplastic polymer in the coating liquid; performing turbulent stirring when supplying the coating liquid to the substrate in the coating step; and subjecting the coating liquid applied to the substrate to ultrasonic treatment.

More specifically, examples of means for controlling the conditions after the coating and drying steps include controlling the tension applied in the direction perpendicular to the surface where the coated surface contacts the transport roller to a predetermined value or higher; setting the speed of the transport roller with which the coated surface contacts slower than the separator transport speed; forming the inorganic filler into a gradient shape so that the protruding particulate polymer does not flake off from the surrounding inorganic filler portions; and increasing the peel strength of the covering layer.

### <Methylene Chloride Soluble Content>

In the separator for an electricity storage device of the present embodiment, the methylene chloride soluble content is preferably 0.05% by weight or more and 0.80% by weight or less, more preferably 0.10% by weight or more and 0.60% by weight or less, and further preferably 0.15% by weight or more and 0.50% by weight or less, based on the total weight of the separator for an electricity storage device. The "soluble content" of methylene chloride means the component extracted into methylene chloride when the separator is immersed in methylene chloride. The plasticizer mixed when producing the substrate is mainly extracted as the methylene chloride soluble content. By containing 0.10% by weight or more of the methylene chloride soluble content, the binding strength between the substrate and the covering layer is further increased, and it is easier to adjust the 180° peel strength to 200 gf/cm or more. By containing a methylene chloride soluble content of 0.60% by weight or less, the internal resistance of the battery can be reduced. Methods for adjusting the methylene chloride soluble content to 0.05% by weight or more and 0.80% by weight or less include a method involving, at the plasticizer extraction step during substrate production, adjusting the extraction time, type of extraction solvent, temperature of the extraction solvent, number of extractions, etc., in a batchwise system, and adjusting the extraction time, type of extraction solvent, temperature of the extraction solvent, supply amount of the extraction solvent, etc., in a continuous system.

### <Metal Cations>

In the separator for an electricity storage device of the present embodiment, the total amount of metal cations contained in the covering layer is preferably 0.1 ppm or more and 100 ppm or less, more preferably 0.1 ppm or more and 70 ppm or less, and further preferably 0.1 ppm or more and 50 ppm or less, based on the total weight of the covering layer. When the total amount of metal cations is adjusted to be small, the inorganic filler and the particulate polymer are easily uniformly dispersed and applied in the formation of the covering layer. Examples of metal cations include sodium ions (Na⁺), calcium ions (Ca²⁺), and magnesium ions (Mg²⁺). Examples of the method for adjusting the total amount of metal cations to 0.1 ppm or more and 100 ppm or less include a method of washing the filler, which is the raw material of the covering layer, with water before use. The number of washings may be one or more, but the total amount of metal cations contained in the filler becomes less as the number of washings increases.

### <Thermal Shrinkage Rate>

In the separator for an electricity storage device of the present embodiment, the TD thermal shrinkage rate at 130°C for 1 hour is preferably 5% or less, more preferably 0% or more and 3% or less, and further preferably 0% or more and 1% or less.

The TD thermal shrinkage rate at 150°C for 1 hour of the separator for an electricity storage device of the present embodiment is preferably 5% or less, more preferably 0% or more and 3% or less, and further preferably 0% or more and 1% or less. When the TD thermal shrinkage rate is 5% or less, it is possible to more effectively suppress the occurrence of short circuits in locations other than the location to which an external force is applied when heat is generated due to short circuit during a crash test. This makes it possible to more reliably prevent temperature rise of the entire battery, and the smoke and fire that may occur as a result.

The thermal shrinkage rate of the separator for an electricity storage device of the present embodiment can be adjusted by appropriately combining a stretching operation and heat treatment of the substrate described above. At the same time as suppressing the TD thermal shrinkage rate, the MD thermal shrinkage rate is also preferably 5% or less, more preferably 0% or more and 3% or less, and further preferably 0% or more and 1% or less.

### <Air Permeability of Separator>

The air permeability of the separator for an electricity storage device is preferably 10 sec/100 cm³ or more and 10,000 sec/100 cm³ or less, more preferably 40 sec/100 cm³ or more and 500 sec/100 cm³ or less, further preferably 50 sec/100 cm³ or more and 250 sec/100 cm³ or less, and particularly preferably 60 sec/100 cm³ or more and 200 sec/100 cm³ or less. This allows high ion permeability to be obtained. The air permeability is the air permeability resistance measured in accordance with JIS P-8117.

### <Substrate>

The substrate is a polyolefin microporous membrane comprising polyolefin as a primary component, and preferably has the following Aspect (1) or (2) or a combination thereof: (1) the membrane thickness is 1 µm to 30 µm, the air permeability is 500 sec/100 cm³ or less, and the post-compression porosity measured in a compression test under conditions of a temperature of 70°C, a pressure of 8 MPa, and a compression time of 3 minutes is 30% or more; and (2) the crystal long-period of the polyolefin microporous membrane as measured by small-angle X-ray scattering (SAXS) is 37.0 nm or more.

### Aspect (1):

Without being bound by theory, it is believed that when the polyolefin microporous membrane has an air permeability of 500 sec/100 cm³ or less and a post-compression porosity of 30% or more within a membrane thickness range of 1 µm to 30 µm, for example, in the production of a nonaqueous secondary battery using a polyolefin microporous membrane as a separator, the electrical resistance of the polyolefin microporous membrane can be reduced or an increase in electrical resistance can be suppressed after a pressing step, whereby high output and high cycle characteristics of the nonaqueous secondary battery can be achieved. The suppression of the increase in resistance by the polyolefin microporous membrane is remarkable when an electrode that easily expands and contracts in the cell of the nonaqueous secondary battery is used, and is more remarkable when a high-capacity electrode used in an on-board battery or a silicon (Si)-containing negative electrode is used.

The post-compression porosity is considered to be related to the structure of the primary component of the polyolefin microporous membrane, which reduces the resistance and/or suppresses the increase in resistance in non-aqueous secondary batteries. From the viewpoints described above, the post-compression porosity of the polyolefin microporous membrane is preferably 31% or more, more preferably 32% or more, and further preferably 33% or more. The upper limit of the post-compression porosity of the polyolefin microporous membrane can be determined in accordance with the porosity before compression, and may be, for example, preferably 60% or less, and more preferably 50% or less.

The post-compression porosity of the polyolefin microporous membrane can be adjusted within the above-described numerical range in, for example, the production process of the polyolefin microporous membrane by controlling the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the MD/TD stretching temperature in the biaxial stretching step, the heat setting temperature, etc. Alternatively, the post-compression porosity of the polyolefin microporous membrane can be adjusted within the above-described numerical range by controlling the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the ratio of the preheating coefficient to the stretching coefficient, etc.

It is preferable to compare the porosity of the polyolefin microporous membrane before and after the compression test in order to specify the structure of the primary component of the membrane that can reduce the resistance and/or suppress the increase in resistance in a nonaqueous secondary battery and achieve high output and high cycle characteristics. The preferable numerical range of the porosity of the polyolefin microporous membrane before the compression test or not subjected to the compression test (hereinafter simply referred to as "porosity") is described later.

### Aspect (2):

Without being bound by theory, when the polyolefin microporous membrane has a crystal long-period of 37.0 nm or more, surprisingly, the structural uniformity and compression resistance of the polyolefin microporous membrane are improved, and the reaction uniformity in the nonaqueous secondary battery is also improved accordingly. As a result, it is believed that the nonaqueous secondary battery can achieve high output and high cycle characteristics even after the pressing step in the production of the nonaqueous secondary battery using the polyolefin microporous membrane as a separator. The improvement in the structural uniformity and compression resistance of the polyolefin microporous membrane is remarkable when an electrode that is prone to expansion and contraction is used in the cell of a nonaqueous secondary battery, and is more remarkable when a high-capacity electrode or a silicon (Si)-containing negative electrode used in an in-vehicle battery or the like is used.

Without being bound by theory, it is believed that the crystal long-period obtained by the SAXS measurement is related to the structure of polyethylene that improves the structural uniformity and compression resistance of the membrane and the reaction uniformity in the nonaqueous secondary battery. In addition, it is believed that the crystal long-period of the polyolefin microporous membrane correlates with the post-compression porosity of the membrane. From the viewpoints described above, the crystal long-period of the polyolefin microporous membrane is preferably 37.0 nm to 60.0 nm, 38.0 nm to 55.0 nm, 40.0 nm to 50.0 nm, or 42.0 nm to 50.0 nm.

The crystal long-period of the polyolefin microporous membrane can be adjusted within the above-described numerical range by controlling, for example, the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the MD/TD stretching temperature in the biaxial stretching step, the heat setting temperature, etc., in the production process of the polyolefin microporous membrane.

The separator for an electricity storage device of the present embodiment comprises a substrate which is a polyolefin microporous membrane comprising a polyolefin as a primary component. "Comprising...as a primary component" means that the weight of the target component (polyolefin) constitutes the largest weight in the entire substrate. The content of polyolefin in the polyolefin microporous membrane is, for example, more than 50 parts by weight, preferably 75 parts by weight or more, more preferably 85 parts by weight or more, further preferably 90 parts by weight or more, even further preferably 95 parts by weight or more, particularly preferably 98 parts by weight or more, and may be 100 parts by weight, based on the total weight of the substrate.

Since polyolefins have excellent applicability of their coating liquid when applying the coating liquid on the membrane, they are advantageous for making the separator thinner, increasing the active material ratio in the electricity storage device, and increasing the capacity per volume. The polyolefin microporous membrane can be one that has been used as a substrate for conventional separators, and is preferably a porous membrane with fine pores that has no electronic conductivity, has ionic conductivity, and is highly resistant to organic solvents.

The polyolefin may be a polyolefin that can be used in convention extrusion, injection, inflation, blow molding, etc. Examples of polyolefins include homopolymers containing ethylene, propylene, 1-butene, 4-methyl-1-pentene, 1-hexene, or 1-octene as a monomer, as well as copolymers and multi-stage polymers of two or more of these monomers. These homopolymers, copolymers, and multi-stage polymers may be used alone or in combination of two or more thereof.

From the viewpoints of reducing or suppressing an increase in the electrical resistance of the membrane, compressive resistance and structural uniformity of the membrane, examples of the polyolefin include polyethylene, polypropylene, and polybutene, and more specifically, low-density polyethylene, linear low-density polyethylene, medium-density polyethylene, high-density polyethylene, ultra-high molecular weight polyethylene, isotactic polypropylene, atactic polypropylene, ethylene-propylene random copolymers, polybutene, and ethylene propylene rubber.

These may be used alone or in combination of two or more thereof. Among these, the polyolefin is preferably at least one selected from the group consisting of low-density polyethylene, linear low-density polyethylene, medium-density polyethylene, high-density polyethylene, and ultra-high molecular weight polyethylene, from the viewpoint of the shutdown property in which the pores are occluded by thermal melting. In particular, high-density polyethylene is preferable because of the low melting point and high strength thereof, and polyethylene having a density of 0.93 g/cm³ or more as measured in accordance with JIS K7112 is more preferable. Examples of the polymerization catalyst used in the production of these polyethylenes include Ziegler-Natta catalysts, Phillips catalysts, and metallocene catalysts. It is preferable that the primary component of the polyolefin be polyethylene, and the content ratio of polyethylene to the total weight of the polyolefin in the substrate be 50 parts by weight or more.

In order to improve the heat resistance of the substrate, the polyolefin microporous membrane preferably contains polypropylene and a polyolefin other than polypropylene. Examples of polyolefin resins other than polypropylene include homopolymers containing ethylene, 1-butene, 4-methyl-1-pentene, 1-hexene, or 1-octene as a monomer, as well as copolymers and multi-stage polymers of two or more of these monomers.

The amount of the polypropylene relative to the total weight of polyolefin in the substrate (polypropylene/polyolefin) may be 0% and is not particularly limited, and from the viewpoints of heat resistance and suitable shutdown function, it is preferably 1 part by weight or more and 35 parts by weight or less, more preferably 3 parts by weight or more and 20 parts by weight or less, and further preferably 4 parts by weight or more and 10 parts by weight or less. From the same viewpoints, the content ratio of olefin resin other than polypropylene, for example, polyethylene, relative to the total weight of polyolefin in the polyolefin microporous membrane (olefin resin other than polypropylene / polyolefin) is preferably 65 parts by weight or more and 99 parts by weight or less, more preferably 80 parts by weight or more and 97 parts by weight or less, and further preferably 90 parts by weight or more and 96 parts by weight or less.

From the viewpoint of crystallinity, high strength, and compression resistance, during the formation of the polyolefin microporous membrane for a non-aqueous secondary battery, the polyolefin microporous membrane is preferably a porous membrane formed from a polyethylene composition in which polyethylene accounts for 50% by weight or more and 100% by weight or less of the resin components constituting the microporous membrane. The proportion of polyethylene in the resin components constituting the porous membrane is more preferably 60% by weight or more and 100% by weight or less, further preferably 70% by weight or more and 100% by weight or less, and further preferably 90% by weight or more and 100% by weight or less.

The viscosity average molecular weight (Mv) of the polyolefin is preferably 30,000 or more and 6,000,000 or less, more preferably 80,000 or more and 3,000,000 or less, and further preferably 150,000 or more and 2,000,000 or less. It is preferable that the viscosity average molecular weight be 30,000 or more because the polymers tend to be entangled to achieve high strength. Conversely, it is preferable that the viscosity average molecular weight be 6,000,000 or less from the viewpoint of making it easy to achieve uniform melt-kneading thereby improving the moldability in the extrusion and stretching steps. It is preferable that the viscosity average molecular weight be less than 1,000,000 because the pores tend to easily become blocked when the temperature rises, whereby a better shutdown function tends to be obtained.

When the polyolefin microporous membrane comprises polyethylene as a primary component, the lower limit of Mv of at least one polyethylene is preferably 600,000 or more, and more preferably 700,000 or more, from the viewpoint of orientation and rigidity of the membrane, and the upper limit of Mv of the polyethylene may be, for example, 2,000,000 or less. From the same viewpoint, the proportion of the polyethylene having an Mv of 700,000 or more in the polyolefin microporous membrane is preferably 50% by weight or more, more preferably 60% by weight or more, and further preferably 70% by weight or more, and may be 100% by weight. From the viewpoint of a reduction in fluidity when the membrane melts and short circuit resistance during pin penetration testing, the proportion of the polyethylene having an Mv of 600,000 or more in the polyolefin resin constituting the polyolefin microporous membrane is preferably 30% by weight or more, more preferably 50% by weight or more, further preferably 60% by weight or more, and even further preferably 70% by weight or more, and may be 100% by weight.

The viscosity average molecular weight (Mv) is calculated from the intrinsic viscosity [η] measured at a measurement temperature of 135°C using decalin as a solvent in accordance with ASTM-D4020, using the following formula:
Polyethylene: $\left[η\right] = 6.77 \times {10}^{- 4} {Mv}^{0.67}$
Polypropylene: $\left[η\right] = 1.10 \times {10}^{- 4} {Mv}^{0.80}$

For example, instead of using a polyolefin having a viscosity average molecular weight of less than 1 million alone, a mixture of a polyolefin having a viscosity average molecular weight of 2 million and a polyolefin having a viscosity average molecular weight of 270,000, the viscosity average molecular weight of which is less than 1 million, may be used.

The substrate may contain other resins besides polyolefins, such as polyethylene terephthalate, polycycloolefin, polyethersulfone, polyamide, polyimide, polyimideamide, polyaramid, polycycloolefin, nylon, and polytetrafluoroethylene.

The substrate may comprise arbitrary additives. Such additives are not particularly limited, and examples thereof include plasticizers, polymers other than polyolefins, inorganic particles, antioxidants such as phenol-based, phosphorus-based, and sulfur-based, metal soaps such as calcium stearate and zinc stearate, ultraviolet absorbers, light stabilizers, antistatic agents, antifogging agents, and coloring pigments. The total content of these additives is preferably 20 parts by weight or less, more preferably 10 parts by weight or less, and further preferably 5 parts by weight or less, relative to 100 parts by weight of the polyolefin resin in the polyolefin microporous membrane.

The substrate preferably comprises a plasticizer. When the substrate comprises a plasticizer, the binding strength between the substrate and the covering layer is improved, and the 180° peel strength can more easily be controlled to 200 gf/cm or more. The amount of the plasticizer is preferably 0.1 parts by weight or more and 1.6 parts by weight or less, more preferably 0.2 parts by weight or more and 1.2 parts by weight or less, and further preferably 0.3 parts by weight or more and 1.0 part by weight or less, based on the total weight of the substrate. By using the plasticizer in an amount within the above range, the binding strength between the substrate and the covering layer can be improved while reducing the internal resistance of the battery. Examples of plasticizers include hydrocarbons such as liquid paraffin, esters such as dioctyl phthalate and dibutyl phthalate, and higher alcohols such as oleyl alcohol and stearyl alcohol. Among these, the plasticizer is preferably liquid paraffin.

The porosity of the substrate is preferably 30% or more and 65% or less, and more preferably 35% or more and 60% or less. It is further preferably 35% or more and 50% or less, and may be 40% or more and 50% or less. As a result, the covering layer can be appropriately impregnated into the micropores of the substrate, making it easier to control the 180° peel strength to 200 gf/cm or more. The porosity is calculated from the volume (cm³), mass (g), and membrane density (g/cm³) of the substrate sample using the following formula: $Porosity = \left(volume-mass/membrane density\right) / volume \times 10$

For example, in the case of a polyolefin microporous membrane composed of polyethylene, the membrane density can be calculated assuming 0.95 g/cm³. The porosity can be adjusted by changing the stretching ratio of the polyolefin microporous membrane.

The air permeability of the substrate is preferably 10 sec/100 cm³ or more and 450 sec/100 cm³ or less, more preferably 40 sec/100 cm³ or more and 300 sec/100 cm³ or less, further preferably 50 sec/100 cm³ or more and 250 sec/100 cm³ or less, and particularly preferably 60 sec/100 cm³ or more and 200 sec/100 cm³ or less. It can also be 60 sec/100 cm³ or more and 150 sec/100 cm³ or less. As a result, the covering layer can be appropriately impregnated into the micropores of the substrate, making it easier to control the 180° peel strength to 200 gf/cm or more. The air permeability is the air permeability resistance measured in accordance with JIS P-8117. The air permeability can be adjusted by changing the stretching temperature and/or stretching ratio of the substrate.

The average pore size of the substrate is preferably 0.15 µm or less, and more preferably 0.10 µm or less, and is preferably 0.01 µm or more. An average pore size of 0.15 µm or less is suitable from the viewpoint of suppressing self-discharge of the electricity storage device and suppressing capacity reduction. From the viewpoint of improving density, an average pore size of 0.08 µm or less is preferable. The average pore size can be adjusted by changing the stretching ratio during production of the substrate.

The puncture strength of the substrate is preferably 200 gf or more, more preferably 300 gf or more, and further preferably 400 gf or more, and is preferably 2,000 gf or less, and more preferably 1,000 gf or less. A puncture strength of 200 gf or more is preferable from the viewpoint of suppressing rupture of the membrane due to active material shedding when the separator is wound together with the electrodes, and from the viewpoint of suppressing concerns regarding short circuit due to expansion and contraction of the electrodes accompanying charge and discharge. Conversely, a puncture strength of 2000 gf or less is preferable from the viewpoint of reducing width contraction due to orientation relaxation during heating. The puncture strength is measured in accordance with the method described in the Examples. The puncture strength can be adjusted by adjusting the stretching ratio and/or stretching temperature of the substrate.

The type, molecular weight, and composition of the polyolefin resin constituting the polyolefin microporous membrane can be adjusted, for example, by controlling the type, molecular weight, and blending ratio of polymer raw materials such as polyolefin in the production process of the polyolefin microporous membrane. For a multilayer polyolefin resin microporous membrane having a structure in which two or more layers of the same or different polyolefin resin microporous membranes are stacked, the adjustment can be made as described above.

Since polyolefin microporous membranes have a porous structure in which a large number of very fine pores gather to form dense interconnected pores, they are excellent in ion permeability when containing an electrolyte solution, and are very strong.

The thickness of the substrate (hereinafter referred to as the substrate membrane thickness) is preferably 2 µm or more, more preferably 5 µm or more, further preferably 6 µm or more, and particularly preferably 7 µm or more, and is preferably 100 µm or less, more preferably 60 µm or less, further preferably 50 µm or less, and particularly preferably 16 µm or less. A substrate membrane thickness of 2 µm or more is preferable from the viewpoint of improving mechanical strength. Conversely, a substrate membrane thickness of 100 µm or less is preferable since it reduces the volume occupied by the separator in the electricity storage device, which tends to be advantageous in terms of increasing the capacity of the electricity storage device.

### <Covering Layer>

The separator for an electricity storage device of the present embodiment comprises a covering layer arranged on at least one surface of the substrate. Specifically, the covering layer may be arranged on only one surface of the substrate, or on both surfaces. "Arranged on...surface" means that it may be arranged on the entire surface of the substrate, or on a part of it. The covering layer is intended to be directly bonded to the electrodes. It is preferable that the covering layer be arranged so that the substrate and the electrodes are bonded via the covering layer, and so that the covering layer is directly bonded to the electrodes. The covering layer is preferably a coating layer formed by applying a coating liquid containing an inorganic filler and a particulate polymer to the substrate.

The covering layer comprises an inorganic filler and a particulate polymer of a thermoplastic polymer. The covering layer may further comprise a resin binder, a water-soluble polymer, and other additives. The covering layer may have at least two Tgs, including a Tg based on the particulate polymer composed of a thermoplastic polymer and a Tg based on the thermoplastic polymer serving as the binding binder.

### (Inorganic Filler)

The inorganic filler is preferably one which has a melting point of 200°C or higher or has a thermal decomposition temperature of 200°C or higher, has high electrical insulation, and is electrochemically stable within the range of use of an electricity storage device such as a lithium-ion secondary battery. Examples of such an inorganic filler include inorganic oxides (oxide ceramics) such as alumina, silica, titania, zirconia, magnesia, ceria, yttria, zinc oxide, and iron oxide; inorganic nitrides (nitride ceramics) such as silicon nitride, titanium nitride, and boron nitride; ceramics such as silicon carbide, calcium carbonate, magnesium sulfate, aluminum sulfate, barium sulfate, aluminum hydroxide, aluminum oxide hydroxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fibers. These can be used alone or in combination of two or more thereof. Among these, the inorganic filler is preferably at least one selected from the group consisting of alumina, barium sulfate, and aluminum oxide hydroxide (boehmite).

The lower limit of the average particle size of the inorganic filler is preferably 50 nm or more, 100 nm or more, 150 nm or more, 200 nm or more, 250 nm or more, 300 nm or more, 350 nm or more, or 400 nm or more, and the upper limit is preferably 2000 nm or less, 1100 nm or less, 800 nm or less, 450 nm or less, 400 nm or less, 350 nm or less, or 300 nm or less.

The average particle size of the inorganic filler is preferably 50 nm or more, from the viewpoint of maintaining the gap for ion permeation through the covering layer and improving the rate characteristics. The average particle size of the inorganic filler is preferably 2000 nm or less, from the viewpoint of increasing the filling rate of the inorganic filler in the covering layer and improving the heat shrinkage resistance. The average particle size of the inorganic filler is preferably, for example, 180 nm or more and 300 nm or less. The reason is that, in particular when the thickness of the covering layer is small, a uniform covering layer thickness is formed and the heat shrinkage resistance is improved. It is also preferable that the average particle size of the inorganic filler be, for example, 150 nm or more and 500 nm or less, or 200 nm or more and 450 nm or less. This is because it is possible to achieve a high degree of compatibility between rate characteristics and heat shrinkage resistance. The "average particle size" of the inorganic filler is measured by the method described in the Examples. Examples of methods for adjusting the particle size and the distribution thereof include a method of pulverizing the inorganic filler using an appropriate pulverization device such as a ball mill, a bead mill, or a jet mill to reduce the particle size. The particle size distribution of the inorganic filler can have one peak in a graph of frequency against particle size. However, it may have two peaks or a trapezoidal chart with no peak. The coefficient of variation of the particle size distribution of the inorganic filler is preferably 0.55 or less, more preferably 0.50 or less, and further preferably 0.45 or less. It is preferable that the coefficient of variation of the particle size distribution be 0.55 or less from the viewpoint of suppressing deformation at temperatures exceeding the melting point of the substrate, and from the viewpoint of improving the gradient ratio of the covering layer and increasing the adhesive strength with the electrode.

Examples of the shape of the inorganic filler include plate-like, scale-like, needle-like, columnar, spherical, polyhedral, and block-like. A combination of inorganic fillers having these shapes may be used. Block-like is preferable from the viewpoint of improving the gradient ratio of the covering layer to increase the adhesive strength with the electrodes.

The aspect ratio of the inorganic filler is preferably 1.0 or more and 2.5 or less, and more preferably 1.1 or more and 2.0 or less. The aspect ratio is preferably 2.5 or less, because this suppresses the moisture adsorption amount of the separator, suppresses the capacity deterioration when cycles are repeated, suppresses deformation at temperatures exceeding the melting point of substrate, and improves the gradient ratio of covering layer to enhance the adhesive strength with electrodes. The reason why the gradient ratio increases when the aspect ratio of the inorganic filler is 1.0 or more and 2.5 or less is considered to be because the orientation of particles in the covering layer is small whereby the inorganic filler is more likely to form a laminated structure.

The particle size distribution of the inorganic filler, which is obtained by dividing the standard deviation SD value of the volume average particle size of the inorganic filler by the value of D50, is preferably 0.55 or less, more preferably 0.50 or less, and further preferably 0.45 or less. A particle size distribution of 0.55 or less is preferable from the viewpoint of suppressing deformation at temperatures exceeding the melting point of substrate, and from the viewpoint of improving the gradient ratio of covering layer and increasing the adhesive strength with electrode. The reason why the gradient ratio increases when the particle size distribution of the inorganic filler is 0.55 or less is considered to be that the uniformity of particles is increased, and the contact ratio between particles is improved, whereby a laminated structure is more likely to form.

The amount of the inorganic filler relative to the total weight of the covering layer is, for example, 20 parts by weight or more and less than 100 parts by weight, 30 parts by weight or more and 80 parts by weight or less, 35 parts by weight or more and 70 parts by weight or less, or further 40 parts by weight or more and 60 parts by weight or less.

### (Particulate Polymer)

The particulate polymer is particles of a thermoplastic polymer. In order to enhance the adhesion between the separator and the electrodes, the particulate polymer preferably contains a thermoplastic polymer having a glass transition temperature or melting point of 20°C or higher and 200°C or lower. The glass transition temperature refers to the midpoint glass transition temperature described in JIS K7121, and is determined from a DSC curve obtained by differential scanning calorimetry (DSC). Specifically, the temperature at the point where the curve of the step-like change during the glass transition intersects with a straight line that is equidistant from a straight line obtained by extending the baseline on the low temperature side of the DSC curve to the high temperature side and a straight line obtained by extending the baseline on the high temperature side of the DSC curve to the low temperature side in the vertical axis direction can be used as the glass transition temperature. More specifically, it may be determined in accordance with the method described in the Examples.

The "glass transition" refers to a change in heat flow rate that occurs on the endothermic side due to a change in the state of the test sample polymer in DSC. Such a change in heat flow rate is observed as a step-like change in the shape of a DSC curve. "Step-like change" refers to the portion of the DSC curve where the curve leaves the previous low-temperature baseline and transitions to a new high-temperature baseline. It should be noted that a combination of a step-like change and a peak is also included in the step-like change.

In the step-like change portion, it can be expressed as the point where the curve changes from being convex upwards to convex downwards, with the upper side being the heat generation side.

"Peak" refers to the portion of the DSC curve where the curve leaves the low-temperature baseline and transitions back to the same baseline. "Baseline" refers to the DSC curve in the temperature range where no transition or reaction occurs in the test sample.

The glass transition temperature (Tg) of the particulate polymer is preferably 10°C or higher and 110°C or lower, more preferably 45°C or higher, further preferably 80°C or higher, and further preferably 90°C or higher, and is particularly preferably greater than 90°C in terms of improving the adhesive strength after injection of the electrolyte solution and from the viewpoint of improving blocking resistance. The glass transition temperature can be set to 92°C or higher from the viewpoint wherein shape stability can be maintained up to higher temperatures.

The Tg of the particulate polymer is 10°C or higher from the viewpoint of preventing adjacent separators from sticking together (blocking) through the covering layer during storage and transportation of the separator for an electricity storage device and during the production process of the electricity storage device.

Conversely, the Tg of the particulate polymer is preferably 110°C or lower from the viewpoint of obtaining suitable adhesive strength with the electrodes. The Tg of the particulate polymer can be appropriately adjusted by, for example, changing the type of the monomer used in the production of the particulate polymer and the blending ratio of each monomer when the particulate polymer is a copolymer. Specifically, for each monomer used in the production of the particulate polymer, the glass transition temperature can be roughly estimated from the generally-stated Tg of the homopolymer (for example, as described in the "Polymer Handbook" (A Wiley-Interscience Publication)) and the blending ratio of the monomers. For example, a copolymer obtained by copolymerizing a high ratio of monomers such as methyl methacrylate, acrylonitrile, and methacrylic acid, which give a homopolymer with a Tg of about 100°C, has a high Tg, while a copolymer obtained by copolymerizing a high ratio of monomers such as n-butyl acrylate and 2-ethylhexyl acrylate, which give a homopolymer with a Tg of about -50°C, has a low Tg. The Tg of a copolymer can also be roughly calculated by the FOX formula shown below: $1 / Tg = {W}_{1} / {Tg}_{1} + {W}_{2} / {Tg}_{2} + ⋯ + {W}_{i} / {Tg}_{i} + … {W}_{n} / {Tg}_{n}$ where Tg(K) is the Tg of the copolymer, Tgᵢ (K) is the Tg of the homopolymer of the i-th monomer, and Wᵢ is the weight fraction of each monomer. i is an integer from 1 to n, and n is the number of types of monomers constituting the copolymer. However, the glass transition temperature Tg of the particulate polymer in the present embodiment is a value measured by the method using DSC described above.

The average particle size of the particulate polymer is preferably 0.5-fold or more and 5-fold or less, more preferably 1-fold or more and 2-fold or less, further preferably 1.1-fold or more and less than 1.5-fold, and particularly preferably 1.2-fold or more and 1.4-fold or less the thickness of the covering layer, from the viewpoint of adhesion between the separator and the electrodes and preventing the particulate polymer from shedding from the covering layer. In the present disclosure, the "average particle size" of the particulate polymer means the volume average particle size (D50) measured by the measurement method described in the Examples.

The "primary particle" of the particulate polymer means an independent particle that is united by a covalent bond. Conversely, a form in which two or more primary particles are in contact with each other to form an aggregate is referred to as a "secondary particle."

The particle size distribution MV/MN of the particulate polymer, calculated by dividing the volume average particle size MV of the particulate polymer by the number average particle size MN, is preferably 1.1 or less, more preferably 1.10 or less, and further preferably less than 1.05. A particle size distribution of the particulate polymer within the above range is preferable from the viewpoints of ensuring the uniformity of the thickness of the covering layer, improving cycle characteristics, improving adhesion to the electrodes, reducing the amount of particulate polymer on the small particle size side of the distribution embedded in the covering layer, improving adhesion to the electrode, improving heat resistance, and reducing the total thickness of the separator. The lower limit of the particle size distribution MV/MN of the particulate polymer is not particularly limited, and may be, for example, 1.01 or more, or 1.01.

The particulate polymer contained in the covering layer is preferably in the form of primary particles. The average particle size of the primary particles of the particulate polymer is preferably 1 µm or more and 10 µm or less, more preferably 1 µm or more and 5 µm or less, and further preferably 2 µm or more and 5 µm or less. The particulate polymer being in the form of primary particles means that the particulate polymer is uniformly dispersed in the covering layer, which improves the 180° peel strength, increases the adhesive strength with the electrodes, suppresses thermal shrinkage, and ensures the uniformity of the thickness of the covering layer. When the average particle size of the primary particles is 1 µm or more and 10 µm or less, the particulate polymer is likely to form a structure protruding from the surface of the covering layer, which increases the adhesive strength with the electrodes and suppresses thermal shrinkage.

Examples of the thermoplastic polymer include (meth)acrylic polymers, conjugated diene polymers, polyvinyl alcohol resins, and fluorine-containing resins.

From the viewpoint of high adhesion to the electrodes and low thermal shrinkage rate, the thermoplastic polymer preferably contains a (meth)acrylic polymer. The term "(meth)acrylic polymer" refers to a polymer or copolymer containing a (meth)acrylic compound as a monomer. A (meth)acrylic compound can be represented by the following general formula:

CH₂ = CR^{Y1}-COO-R^{Y2}

where R^{Y1} represents a hydrogen atom or a methyl group, and R^{Y2} represents a hydrogen atom or a monovalent hydrocarbon group. When R^{Y2} is a monovalent hydrocarbon group, it may have a substituent or a heteroatom. Examples of the monovalent hydrocarbon group include linear or branched chain alkyl groups, cycloalkyl groups, and aryl groups. Examples of the substituent include a hydroxyl group and a phenyl group, and examples of the heteroatom include a halogen atom and an oxygen atom. The (meth)acrylic compound is used alone or in combination of two or more thereof. Examples of the (meth)acrylic compound include (meth)acrylic acid, linear alkyl (meth)acrylates, cycloalkyl (meth)acrylates, (meth)acrylates having a hydroxyl group, and (meth)acrylic acid aryl esters.

More specific examples of chain alkyl (meth)acrylates include (meth)acrylates having chain alkyl groups having 1 or more and 3 or fewer carbon atoms, such as methyl, ethyl, n-propyl, and isopropyl groups; n-butyl, isobutyl, t-butyl, n-hexyl, and 2-ethylhexyl groups; and chain alkyl groups having 4 or more carbon atoms, such as lauryl groups. An example of the (meth)acrylic acid aryl ester is phenyl (meth)acrylate.

Specific examples of (meth)acrylates include (meth)acrylates having a chain alkyl group such as methyl acrylate, ethyl acrylate, propyl acrylate, isopropyl acrylate, butyl acrylate, isobutyl acrylate, t-butyl acrylate, n-hexyl acrylate, 2-ethylhexyl acrylate, lauryl acrylate, methyl methacrylate, ethyl methacrylate, propyl methacrylate, isopropyl methacrylate, butyl methacrylate, isobutyl methacrylate, t-butyl methacrylate, n-hexyl methacrylate, 2-ethylhexyl methacrylate, and lauryl methacrylate; and (meth)acrylates having an aromatic ring such as phenyl (meth)acrylate and benzyl (meth)acrylate.

Conjugated diene polymers are preferable because they have a conjugated diene compound as a monomer unit and are compatible with electrodes. Examples of conjugated diene compounds include 1,3-butadiene, 2-methyl-1,3-butadiene, 2,3-dimethyl-1,3-butadiene, 2-chloro-1,3-butadiene, substituted linear conjugated pentadienes, substituted, and side-chain conjugated hexadienes, which may be used alone or in combination of two or more thereof. Among these, 1,3-butadiene is particularly preferable. Conjugated diene polymers may contain a (meth)acrylic compound or another monomer as a monomer unit, as described below. Examples of such monomers include styrene-butadiene copolymers and hydrogenated products thereof, acrylonitrile-butadiene copolymers and hydrogenated products thereof, and acrylonitrile-butadiene-styrene copolymers and hydrogenated products thereof.

Examples of polyvinyl alcohol-based resins include polyvinyl alcohol and polyvinyl acetate.

Fluorine-containing resins are preferable from the viewpoint of voltage resistance, and examples thereof include polyvinylidene fluoride, polytetrafluoroethylene, and copolymers containing fluorine atoms, such as vinylidene fluoride-hexafluoropropylene copolymers, vinylidene fluoride-hexafluoropropylene-tetrafluoroethylene copolymers, and ethylene-tetrafluoroethylene copolymers. The fluorine-containing resin is preferably a copolymer containing fluorine atoms.

Among the thermoplastic polymers listed above, the particulate polymer preferably contains at least one selected from the group consisting of copolymers containing (meth)acrylate as a monomer, styrene-butadiene copolymers, and copolymers containing fluorine atoms. Copolymers containing (meth)acrylate as a monomer more preferably contain copolymers containing (meth)acrylic acid, butyl (meth)acrylate, and ethylhexyl (meth)acrylate as monomers. By including these specific thermoplastic polymers in the particulate polymer, it is possible to provide a separator for electricity storage devices that has higher adhesive strength with the electrodes and a smaller thermal shrinkage rate.

The particulate polymer preferably contains a crosslinkable monomer. The crosslinkable monomer is not particularly limited, and examples thereof include monomers having two or more radically polymerizable double bonds, and monomers having a functional group that gives a selfcrosslinking structure during or after polymerization. These are used alone or in combination of two or more thereof.

Examples of monomers having two or more radically polymerizable double bonds include divinylbenzene and polyfunctional (meth)acrylates, and polyfunctional (meth)acrylates are preferable. The polyfunctional (meth)acrylate may be at least one selected from the group consisting of bifunctional (meth)acrylates, trifunctional (meth)acrylates, and tetrafunctional (meth)acrylates. Specific examples thereof include polyoxyethylene diacrylate, polyoxyethylene dimethacrylate, polyoxypropylene diacrylate, polyoxypropylene dimethacrylate, neopentyl glycol diacrylate, neopentyl glycol dimethacrylate, butanediol diacrylate, butanediol dimethacrylate, trimethylolpropane triacrylate, trimethylolpropane trimethacrylate, pentaerythritol tetraacrylate, and pentaerythritol tetramethacrylate. These may be used alone or in combination of two or more thereof. Among these, from the same viewpoint as above, at least one of trimethylolpropane triacrylate or trimethylolpropane trimethacrylate is preferable.

### (Resin Binder)

The covering layer preferably contains a resin binder for binding the inorganic fillers together and binding the inorganic filler and the substrate. The type of the resin for the resin binder is not particularly limited, and any resin that is insoluble in the electrolyte solution of an electricity storage device such as a lithium-ion secondary battery and is electrochemically stable within the range of use of an electricity storage device such as a lithium-ion secondary battery can be used.

Specific examples of the resin of the resin binder include polyolefins such as polyethylene and polypropylene; fluorine-containing resins such as polyvinylidene fluoride and polytetrafluoroethylene; fluorine-containing rubbers such as vinylidene fluoride-hexafluoropropylene-tetrafluoroethylene copolymers and ethylene-tetrafluoroethylene copolymers; rubbers such as styrene-butadiene copolymers and hydrogenated products thereof, acrylonitrile-butadiene copolymers and hydrogenated products thereof, acrylonitrile-butadiene-styrene copolymers and hydrogenated products thereof, methacrylate-acrylate copolymers, styrene-acrylate copolymers, acrylonitrile-acrylate copolymers, ethylene propylene rubbers, polyvinyl alcohol, and polyvinyl acetate; cellulose derivatives such as ethyl cellulose, methyl cellulose, hydroxyethyl cellulose, and carboxymethyl cellulose; and resins having a melting point of 180°C or higher, or resins having no melting point but a decomposition temperature of 200°C or higher, such as polyphenylene ether, polysulfone, polyethersulfone, polyphenylene sulfide, polyetherimide, polyamideimide, polyamide, and polyester. These may be used alone or in combination of two or more thereof.

The resin binder may comprise, for example, a resin latex binder. As the resin latex binder, for example, a copolymer of an unsaturated carboxylic acid monomer and another monomer copolymerizable therewith may be used. Examples of aliphatic conjugated diene monomers include butadiene and isoprene, examples of unsaturated carboxylic acid monomers include (meth)acrylic acid, and examples of other monomers include styrene. The polymerization method of such a copolymer is not particularly limited, and emulsion polymerization is preferable. The emulsion polymerization method is not particularly limited, and known methods can be used. The method of adding the monomer and other components is not particularly limited, and any of a lump-sum addition method, a divided addition method, and a continuous addition method can be adopted, and any of a single-stage polymerization method, a two-stage polymerization method, and a multi-stage polymerization method of three or more stages can be adopted as the polymerization method.

Specific examples of the resin binder include the following (1) to (7):
(1) polyolefins, for example, polyethylene, polypropylene, ethylene propylene rubber, and modified products thereof;
(2) conjugated diene polymers, for example, styrene-butadiene copolymers and hydrogenated products thereof, acrylonitrile-butadiene copolymers and hydrogenated products thereof, and acrylonitrile-butadiene-styrene copolymers and hydrogenated products thereof;
(3) acrylic polymers, for example, methacrylate-acrylate copolymers, styrene-acrylate copolymers, and acrylonitrile-acrylate copolymers;
(4) polyvinyl alcohol-based resins, for example, polyvinyl alcohol and polyvinyl acetate;
(5) fluorine-containing resins, for example, polyvinylidene fluoride, polytetrafluoroethylene, vinylidene fluoride-hexafluoropropylene-tetrafluoroethylene copolymers, and ethylene-tetrafluoroethylene copolymers;
(6) cellulose derivatives, for example, ethyl cellulose, methyl cellulose, hydroxyethyl cellulose, and carboxymethyl cellulose; and
(7) resins having a melting point and/or a glass transition temperature of 180°C or higher, or polymers having no melting point but a decomposition temperature of 200°C or higher, for example, polyphenylene ether, polysulfone, polyethersulfone, polyphenylene sulfide, polyetherimide, polyamideimide, polyamide, and polyester.

When the resin binder is a resin latex binder, the volume average particle size (D50) thereof may be, for example, 50 nm or more and 500 nm or less, 60 nm or more and 460 nm or less, or 80 nm or more and 250 nm or less. The volume average particle size of the resin binder can be controlled by, for example, adjusting the polymerization time, polymerization temperature, raw material composition ratio, raw material charging order, pH, etc.

From the viewpoint of improving the 180° peel strength, the glass transition temperature of the resin binder is preferably 25°C or lower, more preferably 10°C or lower, and further preferably -15°C or lower. From the viewpoint of transparency, the glass transition temperature of the resin binder is preferably -60°C or higher.

The volume average particle size (D50) of the resin binder is preferably 1-fold or more, more preferably 2-fold or more, and further preferably 2.5-fold or more the average pore size of the polyolefin microporous membrane from the viewpoint of improving the 180° peel strength. By selecting the volume average particle size (D50) of the resin binder in this manner, it is possible to hold the resin binder on the surface of the polyolefin microporous membrane, whereby the 180° peel strength is improved. From the viewpoint of improving the rate characteristics, the volume average particle size (D50) of the resin binder is preferably 10-fold or less the average pore size of the polyolefin microporous membrane. From the viewpoint of maintaining low permeability and suppressing blocking, the content ratio of the resin binder in the covering layer may be, for example, more than 0 parts by weight and 50 parts by weight or less, 1 part by weight or more and 20 parts by weight or less, 2 parts by weight or more and 10 parts by weight or less, or 3 parts by weight or more and 5 parts by weight or less, relative to the total amount of the covering layer.

From the viewpoints of wettability to the substrate, binding between the substrate and the particulate polymer, binding between the covering layer and the particulate polymer, binding between the substrate and the covering layer, and adhesion with the electrodes, the Tg of the resin binder is preferably lower than 40°C. From the viewpoint of ion permeability, the Tg of the resin binder is more preferably -100°C or higher, further preferably -50°C or higher, and particularly preferably -40°C or higher, and from the viewpoint of binding between the substrate and the particulate polymer, it is more preferably lower than 20°C, further preferably lower than 15°C, and particularly preferably lower than 0°C.

### (Water-Soluble Polymer)

The covering layer may further contain a water-soluble polymer in addition to the inorganic filler and the particulate polymer of the thermoplastic polymer. The water-soluble polymer may be incompatible with the thermoplastic polymer constituting the particulate polymer. In general, the water-soluble polymer functions as a dispersant in the coating liquid for forming the covering layer containing the inorganic filler and the particulate polymer of the thermoplastic polymer, and functions as a dispersant and/or a water retention agent when the coating liquid is a water-based coating material.

The content of the water-soluble polymer in the covering layer is preferably 0.04 parts by weight or more and 5 parts by weight or less, more preferably 0.04 parts by weight or more and 1.5 parts by weight or less, and further preferably 0.1 parts by weight or more and 1 part by weight or less, relative to 100 parts by weight of inorganic filler. By setting the content of the water-soluble polymer in the covering layer to 0.04 parts by weight or more, the binding between the inorganic components is improved, and thermal shrinkage can be further suppressed. Furthermore, the precipitation of the components during the preparation of the slurry of the covering layer can be suppressed, whereby they can be stably dispersed. By setting the content of the water-soluble polymer in the covering layer to 5 parts by weight or less, streaking and unevenness during the formation of the covering layer can be suppressed.

The water-soluble polymer also contributes to the binding between inorganic fillers in the covering layer. From the viewpoint of suppressing thermal shrinkage of the separator, the water-soluble polymer preferably exhibits a weight loss rate of less than 10% at 150°C when the weight at 50°C is taken as 100% in thermogravimetry.

The water-soluble polymer may be a polymer derived from a natural product, a synthetic product, or a semi-synthetic product, and from the viewpoint of forming a coating material from the inorganic components and organic components, and in particular, a water-based coating material, it is preferable that the water-soluble polymer be an anionic, cationic, amphoteric, or nonionic polymer, and more preferably be an anionic, cationic, or amphoteric polymer.

Examples of the anionic polymer include modified starches such as carboxymethyl starch and starch phosphate; anionic cellulose derivatives such as carboxymethyl cellulose; ammonium salts or alkali metal salts of polyacrylic acid; gum arabic; carrageenan; sodium chondroitin sulfate; sulfonic acid compounds such as sodium polystyrene sulfonate, sodium polyisobutylene sulfonate, and naphthalene sulfonic acid condensate salts; and polyethyleneimine xanthate salts.

Among these, from the viewpoint of achieving an appropriate balance between rigidity, rate characteristics, and cycle characteristics of the electricity storage device, an anionic polymer containing a metal salt as a counter cation is preferable; an anionic cellulose derivative, and an ammonium salt or an alkali metal salt of polyacrylic acid are also preferable; and from the viewpoint of the balance between heat resistance and rate characteristics, an alkali metal salt of polyacrylic acid is more preferable, and sodium polyacrylate is further preferable.

The ammonium salt or alkali metal salt of polyacrylic acid refers to a polymer in which at least one of the -COO- moieties derived from multiple carboxylic acid groups forms a salt with an ammonium ion or an alkali metal ion, such as a sodium ion (Na⁺) or a potassium ion (K⁺).

The ammonium or alkali metal salt of polyacrylic acid may be at least one of the following (I) to (III):
(I) a homopolymer of a monomer (Cᵢ) having one ammonium salt or alkali metal salt of a carboxylic acid, or a copolymer of a plurality of monomers (Cᵢ) with other monomers;
(II) a homopolymer of a monomer (Cᵢᵢ) having a plurality of ammonium salts or alkali metal salts of a carboxylic acid, or a copolymer of the monomer (Cᵢᵢ) and another monomer; and
(III) an ammonium salt or alkali metal salt of a polymer or copolymer obtained by polymerizing or copolymerizing a monomer having one or more carboxylic acids.

Examples of the monomer (Cᵢ) having one ammonium salt or alkali metal salt of a carboxylic acid include sodium (meth)acrylate and ammonium (meth)acrylate.

Examples of the monomer (Cᵢᵢ) having a plurality of ammonium salts or alkali metal salts of a carboxylic acid include ammonium salts or sodium salts of 11-(methacryloyloxy)undecane-1,1-dicarboxylic acid; ammonium salts, monosodium salts or disodium salts of ethylenically unsaturated dicarboxylic acids such as fumaric acid, maleic acid, itaconic acid, and citraconic acid; and alicyclic polycarboxylic acids having a (meth)acryloyl group.

Examples of the monomer copolymerizable with the monomer (Cᵢ) or the monomer (Cᵢᵢ) include (meth)acrylamides; ethylenically unsaturated dicarboxylic acids such as fumaric acid, maleic acid, itaconic acid, and citraconic acid; and ethylenically unsaturated dicarboxylic anhydrides such as maleic anhydride, itaconic anhydride, and citraconic anhydride.

Examples of the ammonium salt or alkali metal salt of a polymer or copolymer obtained by polymerizing or copolymerizing a monomer having one or more carboxylic acids include sodium polyacrylate and ammonium polyacrylate.

The structures of the ammonium salt or alkali metal salt of polyacrylic acid described in (I) to (III) above may overlap with each other. It is desirable that the ammonium salt or alkali metal salt of polyacrylic acid described in (I) to (III) above have a small content of polyvalent cations when dissolved in water. Examples of polyvalent cations include magnesium ions, calcium ions, and iron ions. By reducing the content of these ions, the dispersibility of the particulate polymer in the mixed slurry with the particulate polymer is stabilized.

Examples of cationic polymers include cationic starch; chitosan; gelatin; homopolymers or copolymers of quaternary salts of dimethylaminoethyl (meth)acrylate; homopolymers or copolymers of dimethylallylammonium chloride; polyamidines and copolymers thereof; polyvinylimidazoline; dicyandiamide-based condensates; epichlorohydrin-dimethylamine condensates; and polyethyleneimine.

Examples of amphoteric polymers include dimethylaminoethyl (meth)acrylate quaternary salt-acrylic acid copolymers and Hofmann degradation products of polyacrylamide.

Examples of non-ionic polymers include starch and derivatives thereof; cellulose derivatives such as methyl cellulose, hydroxyethyl cellulose, and hydroxypropyl cellulose, and ammonium salts or alkali metal salts thereof; gums such as guar gum and modification products thereof; and synthetic polymers such as polyvinyl alcohol, polyacrylamide, polyethylene glycol, polymethyl vinyl ether, polyisopropylacrylamide, copolymers of vinyl alcohol and another monomer, and modification products thereof.

The water-soluble polymer may or may not have an amide bond-containing cyclic structure. The water-soluble polymer having an amide bond-containing cyclic structure refers to a homopolymer or copolymer having a group having an amide bond-containing cyclic structure and a skeleton derived from a polymerizable double bond. The water-soluble polymer having an amide bond-containing cyclic structure may have one or more amide bond-containing cyclic structures.

The group having an amide bond-containing cyclic structure includes a group represented by the following formula (2):

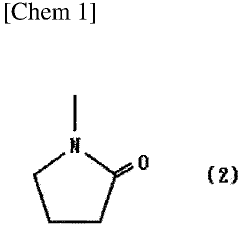

Specific examples of water-soluble polymers having an amide bond-containing cyclic structure include homopolymers of monomers having a group having an amide bond-containing cyclic structure and a polymerizable double bond, such as poly(N-vinylcaprolactam), which is a homopolymer of N-vinylcaprolactam, and polyvinylpyrrolidone (PVP), which is a homopolymer of vinylpyrrolidone; copolymers of two or more monomers having a group having an amide bond-containing cyclic structure and a polymerizable double bond (N-vinylcaprolactam, vinylpyrrolidone, etc.); and copolymers of one or more monomers having a group having an amide bond-containing cyclic structure and a polymerizable double bond (N-vinylcaprolactam, vinylpyrrolidone, etc.) with one or more monomers having other polymerizable double bonds (monomers other than the monomers having a group having an amide bond-containing cyclic structure and a polymerizable double bond).

Examples of monomers copolymerizable with the monomer having a group having an amide bond-containing cyclic structure and a polymerizable double bond include vinyl acyclic amides; (meth)acrylic acid and esters thereof; (meth)acrylamide and derivatives thereof; styrene and derivatives thereof; vinyl esters such as vinyl acetate; α-olefins; basic unsaturated compounds such as vinylimidazole and vinylpyridine and derivatives thereof; carboxyl group-containing unsaturated compounds and acid anhydrides thereof; vinyl sulfonic acid and derivatives thereof; vinyl ethylene carbonate and derivatives thereof; and vinyl ethers.

### (Additives)

The covering layer may be composed of only the inorganic filler, particulate polymer of the thermoplastic polymer, and arbitrary water-soluble polymer, or may further contain additives other than these. Examples of additives include low molecular weight dispersants other than water-soluble polymers; thickeners; antifoaming agents; and pH adjusters such as ammonium hydroxide. Specific examples of low molecular weight dispersants include monomers (Cᵢᵢ) having a plurality of ammonium salts or alkali metal salts of carboxylic acid, and non-polymerizable compounds having a plurality of ammonium salts or alkali metal salts of carboxylic acid (for example, sodium alginate and sodium hyaluronate).

As specific examples of defoaming agents, surfactants containing an ethoxylated acetylene glycol (acetylenic surfactants) represented by the following formula (A) are preferable: 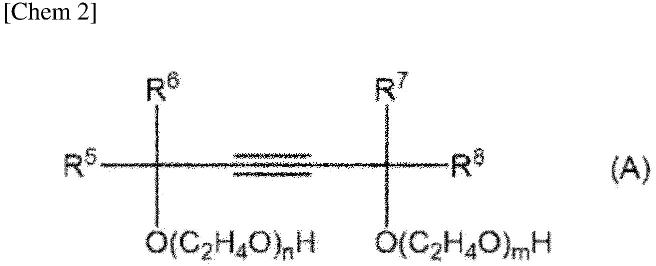 where R⁵ to R⁸ each independently represent an alkyl group having 1 or more and 10 or fewer carbon atoms, and n and m each independently represent an integer of 0 or more, under the proviso that n+m = 0 or more and 40 or less.

Specific examples of the alkyl group having 1 or more and 10 or fewer carbon atoms may be linear, branched, or cyclic, and include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group.

Specific examples of acetylene glycols represented by formula (A) include 2,5,8,11-tetramethyl-6-dodecyne-5,8-diol, 5,8-dimethyl-6-dodecyne-5,8-diol, 2,4,7,9-tetramethyl-5-decyne-4,7-diol, 4,7-dimethyl-5-decyne-4,7-diol, 2,3,6,7-tetramethyl-4-octyne-3,6-diol, 3,6-dimethyl-4-octyne-3,6-diol, 2,5-dimethyl-3-hexyne-2,5-diol, ethoxylated 2,4,7,9-tetramethyl-5-decyne-4,7-diol (number of moles of ethylene oxide added: 1.3), ethoxylated 2,4,7,9-tetramethyl-5-decyne-4,7-diol (number of moles of ethylene oxide added: 4), ethoxylated 3,6-dimethyl-4-octyne-3,6-diol (number of moles of ethylene oxide added: 4), ethoxylated 2,5,8,11-tetramethyl-6-dodecyne-5,8-diol (number of moles of ethylene oxide added: 6), ethoxylated 2,4,7,9-tetramethyl-5-decyne-4,7-diol (number of moles of ethylene oxide added: 10), ethoxylated 2,4,7,9-tetramethyl-5-decyne-4,7-diol (number of moles of ethylene oxide added: 30), and ethoxylated 3,6-dimethyl-4-octyne-3,6-diol (number of moles of ethylene oxide added: 20). These defoaming agents may be used alone or in combination of two or more thereof.

Acetylenic surfactants are also available as commercial products, and examples of such commercial products include Olfine SPC (manufactured by Nissin Chemical Industry Co., Ltd., active ingredient 80 parts by weight, pale yellow liquid), Olfine AF-103 (manufactured by Nissin Chemical Industry Co., Ltd., pale brown liquid), Olfine AF-104 (manufactured by Nissin Chemical Industry Co., Ltd., pale brown liquid), Olfine SK-14 (manufactured by Nissin Chemical Industry Co., Ltd., pale yellow viscous liquid), Olfine AK-02 (manufactured by Nissin Chemical Industry Co., Ltd., pale yellow viscous liquid), Olfine AF-201F (manufactured by Nissin Chemical Industry Co., Ltd., pale yellow viscous liquid), Olfine D-10PG (manufactured by Nissin Chemical Industry Co., Ltd., active ingredient 50 parts by weight, pale yellow liquid), Olfine E-1004 (manufactured by Nissin Chemical Industry Co., Ltd., active ingredient 100 parts by weight, pale yellow liquid), Olfine E-1010 (manufactured by Nissin Chemical Industry Co., Ltd., active ingredient 100 parts by weight, pale yellow liquid), Olfine E-1020 (manufactured by Nissin Chemical Industry Co., Ltd., active ingredient 100 parts by weight, pale yellow liquid), Olfine E-1030W (manufactured by Nissin Chemical Industry Co., Ltd., active ingredient 75 parts by weight, pale yellow liquid), Surfynol 420 (manufactured by Nissin Chemical Industry Co., Ltd., active ingredient 100 parts by weight, pale yellow viscous substance), Surfynol 440 (manufactured by Nissin Chemical Industry Co., Ltd., active ingredient 100 parts by weight, pale yellow viscous substance), and Surfynol 104E (manufactured by Nissin Chemical Industry Co., Ltd., active ingredient 50 parts by weight, pale yellow viscous substance).

As the surfactant of the additive, polyether surfactants and/or silicone surfactants can be used instead of or together with the acetylenic surfactant. Representative examples of polyether surfactants include polyethylene glycol, polypropylene glycol, polytetramethylene glycol, polyoxyethylene oleyl ether, polyoxyethylene stearyl ether, polyoxyethylene lauryl ether, polyoxyethylene dodecyl ether, polyoxyethylene nonylphenyl ether, polyoxyethylene octylphenyl ether, and polyoxyethylene-polyoxypropylene block copolymers. Among these, polyethylene glycol is particularly preferable. These surfactants may be used alone or in combination of two or more thereof.

Polyether surfactants are also available as commercially available products, and examples of such commercially available products include E-D052, E-D054, and E-F010 (manufactured by San Nopco Ltd.).

The silicone surfactant may be linear, branched, or cyclic, as long as it contains at least a silicone chain, and may contain either a hydrophobic group or a hydrophilic group. Specific examples of the hydrophobic group include alkyl groups such as methyl, ethyl, n-propyl, isopropyl, n-butyl, sec-butyl, tert-butyl, n-pentyl, n-hexyl, n-heptyl, n-octyl, n-nonyl, and n-decyl; cyclic alkyl groups such as cyclohexyl; and aromatic hydrocarbon groups such as phenyl. Specific examples of the hydrophilic group include amino groups, thiol groups, hydroxyl groups, alkoxy groups, carboxylic acid, sulfonic acid, phosphoric acid, nitric acid, and organic or inorganic salts thereof, ester groups, aldehyde groups, glycerol groups, and heterocyclic groups. Representative examples of silicone surfactants include dimethyl silicone, methylphenyl silicone, chlorophenyl silicone, alkyl-modified silicone, fluorine-modified silicone, amino-modified silicone, alcoholmodified silicone, phenol-modified silicone, carboxy-modified silicone, epoxy-modified silicone, fatty acid ester-modified silicone, and polyether-modified silicone.

Silicone-based surfactants are also available as commercial products, and examples of such commercial products include BYK-300, BYK-301, BYK-302, BYK-306, BYK-307, BYK-310, BYK-313, BYK-320, BYK-333, BYK-341, BYK-345, BYK-346, BYK-347, BYK-348, BYK-349 (all trade names, manufactured by BYK Japan KK), KM-80, KF-351A, KF-352A, KF-353, KF-354L, KF-355A, KF-615A, KF-945, KF-640, KF-642, KF-643, KF-6020, X-22-4515, KF-6011, KF-6012, KF-6015, KF-6017 (all trade names, manufactured by Shin-Etsu Chemical Co., Ltd.), SH-28PA, SH8400, SH-190, SF-8428 (all trade names, manufactured by Dow Corning Toray Co., Ltd.), Polyflow KL-245, Polyflow KL-270, Polyflow KL-100 (all trade names, manufactured by Kyoeisha Chemical Co., Ltd.), Silface SAG002, Silface SAG005, and Silface SAG0085 (all trade names, manufactured by Nissin Chemical Industry Co., Ltd.).

### (Amount of Covering Layer)

The amount of the covering layer relative to the substrate, i.e., the amount of the covering layer per unit area of one surface of the substrate, is preferably 0.5 g/m² or more, more preferably 1.0 g/m² or more, by weight, and preferably 0.15 cm³/m² or more, more preferably 0.30 cm³/m² or more, by volume. The upper limit of the amount of the covering layer is preferably 10.0 g/m² or less, more preferably 7.0 g/m² or less, by weight, and preferably 3.50 cm³/m² or less, more preferably 2.50 cm³/m² or less, by volume. It is preferable that the amount of the covering layer be equal to or greater than the lower limit from the viewpoint improving the adhesive strength between the covering layer and the electrodes and suppressing thermal shrinkage. It is preferable that the amount of the covering layer be equal to or less than the upper limit from the viewpoint suppressing a decrease in ion permeability.

### (Thickness of Covering Layer)

The thickness of either one of the covering layers arranged on at least one of the substrates (the thickness of the inorganic filler portion) is preferably 0.3 µm or more and 5.0 µm or less, more preferably 0.5 µm or more and 2.5 µm or less, and further preferably 0.7 µm or more and 1.3 µm or less. When the thickness of the covering layer is 0.3 µm or more, thermal shrinkage can be further suppressed, and the adhesive strength between the electrodes and the substrate can easily be made uniform, and as a result, the characteristics of the electricity storage device can be improved.

When the above thickness is 1.3 µm or less, it is preferable in that a decrease in ion permeability can be suppressed and a thin separator for an electricity storage device can be obtained. Specifically, by reducing the thickness of the separator, an electricity storage device with a large capacity per volume can be produced.

Conversely, from the viewpoint of further suppressing thermal shrinkage and preventing the particulate polymer from flaking from the covering layer, the thickness of the covering layer is preferably 1.6 µm or more, or 2.1 µm or more.

The thickness can be adjusted by, for example, changing the type or concentration of the particulate polymer in the coating liquid applied to the substrate, the coating amount of the coating liquid, the coating method, and the coating conditions. However, the method for adjusting the thickness of the covering layer is not limited to these.

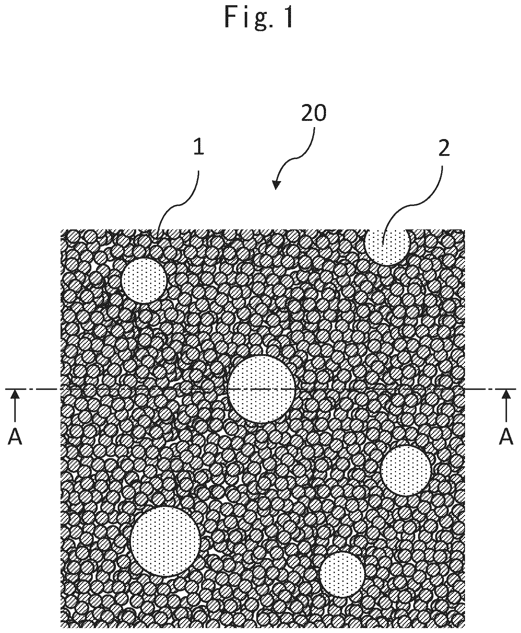

FIG. 1 is a schematic diagram of the surface of the covering layer of the separator for an electricity storage device of the present embodiment. As schematically shown in FIG. 1, the surface of the covering layer (10) comprises an inorganic filler (1) and a particulate polymer (2) that is a thermoplastic polymer protruding from the organic filler portion. In FIG. 1, the particulate polymer is present in the form of primary particles without agglomerating with other particulate polymers.

FIG. 2 is a cross-sectional view of the separator for an electricity storage device of FIG. 1 taken along line A-A. As schematically shown in FIG. 2, the covering layer (20) is formed in a gradient shape so as to become continuously thicker from an inorganic filler portion that is 1.5D or more away from the volume center of each particulate polymer in the horizontal direction (the surface direction of the covering layer) toward the protruding particulate polymer (2). The gradient of the covering layer formed in a gradient shape is gentler the farther it is from the protruding particulate polymer, and becomes greater the closer it is to the protruding particulate polymer. The inorganic filler (1) covers a part of the periphery of the protruding portion so as to follow the contour of the particulate polymer, and the vicinity of the center of the protruding portion is exposed on the surface of the covering layer.

### <Method for Production of Separator for Electricity Storage Device>

### <Substrate Production Method>

Any known production method can be used as the method for the production of the substrate, for example, either a wet porosity method or a dry porosity method. Example of the wet porosity method include, in the case where the substrate is a polyolefin microporous membrane, a method in which a polyolefin resin composition and a plasticizer are melt-kneaded to form a sheet, which is then optionally stretched, and the plasticizer is extracted to make the membrane porous; a method in which a polyolefin resin composition comprising a polyolefin resin as a primary component is melt-kneaded, extruded at a high draw ratio, and then heat-treated and stretched to peel the polyolefin crystal interface to make the membrane porous; a method in which a polyolefin resin composition and an inorganic filler are melt-kneaded to form a sheet, and then stretched and the interface between the polyolefin and the inorganic filler is peeled to make the membrane porous; and a method in which a polyolefin resin composition is dissolved, immersed in a poor solvent for polyolefin, and the polyolefin is solidified while the solvent is removed to make the membrane porous.

Examples of the method for producing the substrate include the chemical bonding method, in which a web is immersed in a binder and dried to bond the fibers together; the thermal bonding method, in which heat-fusible fibers are mixed into a web and the fibers are partially melted to bond the fibers together; the needle punch method, in which barbed needles are repeatedly pierced into a web to mechanically entangle the fibers; and the hydroentanglement method, in which a high-pressure water stream is sprayed from a nozzle through a net (screen) onto a web to entangle the fibers.

As an example of the method for producing a polyolefin microporous membrane, a method in which the polyolefin resin composition and a plasticizer are melt-kneaded and formed into a sheet, and the plasticizer then is extracted will be described below.

The polyolefin resin composition and the plasticizer are melt-kneaded. Examples of the melt-kneading method include a method in which the polyolefin resin and, if necessary, other additives are put into a resin kneading device such as an extruder, a kneader, a lab plastomill, a kneading roll, and a Banbury mixer, and the plasticizer is introduced at an arbitrary ratio while the resin component is heated and melted, and kneading. At this time, it is preferable to pre-knead the polyolefin resin, the other additives, and the plasticizer at predetermined ratios using a Henschel mixer or the like before putting them into the resin kneading device. More preferably, only a part of the plasticizer is put in during the pre-kneading, and the remaining plasticizer is kneaded while being side-fed into the resin kneading device.

As the plasticizer, a non-volatile solvent that can form a homogeneous solution at or above the melting point of the polyolefin can be used.

Examples of the plasticizer include hydrocarbons such as liquid paraffin and paraffin wax; esters such as dioctyl phthalate and dibutyl phthalate; and higher alcohols such as oleyl alcohol and stearyl alcohol. Among these, liquid paraffin is preferable.

The polyolefin resin composition and the plasticizer are not particularly limited as long as they can be uniformly melted and kneaded to for a sheet. For example, the weight fraction of the plasticizer in the composition consisting of the polyolefin resin composition and the plasticizer is preferably 30 parts by weight or more and 80 parts by weight or less, and more preferably 40 parts by weight or more and 70 parts by weight or less. Setting the weight fraction of the plasticizer within this range is preferable from the viewpoint of achieving both melt tension during melt molding and formability of a uniform and fine pore structure.

The molten kneaded product obtained by heating, melting, and kneading as described above is molded into a sheet. Examples of the method for producing a sheet-like molded product include a method in which the molten kneaded product is extruded into a sheet shape through a T-die or the like, and is brought into contact with a thermal conductor to cool to a temperature sufficiently lower than the crystallization temperature of the resin component to solidify. Examples of thermal conductors used for cooling and solidifying include metal, water, air, and the plasticizer itself, but a metal roller is preferable because of the high thermal conduction efficiency thereof. In this case, it is more preferable to interpose the molten kneaded product between rollers when brought into contact with metal roller, because this further increases the thermal conduction efficiency, and the sheet is oriented, whereby the membrane strength is improved and the surface smoothness of the sheet also tends to be improved. The die lip distance when extruding the product into a sheet from a T-die is preferably 400 µm or more and 3000 µm or less, and more preferably 500 µm or more and 2500 µm or less.

The sheet-like molded product obtained in this manner is then preferably stretched. As the stretching process, either uniaxial stretching or biaxial stretching can be suitably used. Biaxial stretching is preferable from the viewpoint of strength of the resulting microporous membrane. When the sheet-like molded product is biaxially stretched at a high ratio, the molecules are oriented in the planar direction, whereby the ultimately obtained porous substrate is less likely to tear and has high puncture strength. Examples of the stretching method include simultaneous biaxial stretching, sequential biaxial stretching, multi-stage stretching, and multiple stretching. Simultaneous biaxial stretching is preferable from the viewpoints of improving puncture strength, uniformity of stretching, and shut-down property.

The stretching ratio is preferably in the range of 20-fold or more and 100-fold or less, and more preferably in the range of 25-fold or more and 50-fold or less. The stretching ratio in each axial direction is preferably in the range of 4-fold or more and 10-fold or less in the MD direction and 4-fold or more and 10-fold or less in the TD direction, and more preferably in the range of 5-fold or more and 8-fold or less in the MD direction and more preferably in the range of 5-fold or more and 8-fold or less in the TD direction. By setting the stretching ratio within this range, it is possible to impart more sufficient strength, and it is possible to prevent membrane breakage in the stretching step and obtain high productivity, which is preferable. Furthermore, the MD direction means, for example, the machine direction when continuously molding a polyolefin microporous membrane, and the TD direction means the direction crossing the MD direction at an angle of 90°.

The sheet-like molded product obtained as described above may be further rolled. The rolling can be performed by, for example, a pressing method using a double belt press or the like. By applying rolling, the orientation of the surface layer part of the sheet-like molded product in particular can be increased. The rolling surface ratio is preferably greater than 1-fold and 3-fold or less, and more preferably greater than 1-fold and 2-fold or less. By using a rolling ratio within this range, the membrane strength of the ultimately obtained porous substrate is increased, and a more uniform porous structure can be formed in the thickness direction of the membrane, which is preferable.

Next, the plasticizer is removed from the sheet-like molded body to obtain a porous substrate. For example, the plasticizer is removed by immersing the sheet-like molded body in an extraction solvent to extract the plasticizer, and then sufficiently drying the sheet-like molded body. The method for extracting the plasticizer may be either a batch method or a continuous method. In order to suppress shrinkage of the porous substrate, it is preferable to restrain the ends of the sheet-like molded body during the series of steps of immersion and drying.

The amount of the plasticizer can be controlled to be preferably 0.1 or more and 1.6 or less parts by weight and more preferably 0.2 or more and 1.2 or less parts by weight, or 0.3 or more and 1.0 or less parts by weight, based on the total weight of the obtained substrate. By controlling the amount of the plasticizer within the above range, the internal resistance of the battery can be reduced while improving the binding strength between the substrate and the covering layer.

The extraction solvent is preferably a poor solvent for the polyolefin resin and a good solvent for the plasticizer, and has a boiling point lower than the melting point of the polyolefin resin. Examples of such an extraction solvent include hydrocarbons such as n-hexane and cyclohexane; halogenated hydrocarbons such as methylene chloride and 1,1,1-trichloroethane; non-chlorinated halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be recovered and reused by operations such as distillation.

In order to suppress shrinkage of the porous substrate, a heat treatment such as heat setting or heat relaxation may be performed after the stretching step or after the formation of the porous substrate. The porous substrate may be subjected to post-treatment such as hydrophilization treatment with a surfactant or crosslinking treatment with ionizing radiation.

An example of a dry porosity method, which is different from the above wet porosity method, will be described.

First, a film is produced by being directly stretched and oriented after melt-kneaded in an extruder without using a solvent, and the film is then subjected to an annealing step, a cold stretching step, and a hot stretching step in this order to produce a microporous membrane. Examples of the dry porosity method include a method in which a molten resin is stretched and oriented through a T-die from an extruder, and an inflation method, and the method is not particularly limited.

### <Covering Layer Arrangement Method>

A covering layer is arranged on at least one surface of the substrate produced as described above. Examples of the arrangement method of the covering layer including applying a coating liquid containing the inorganic filler and the particulate polymer of the thermoplastic polymer to the substrate and then removing the medium, as will be described later.

The coating liquid may be a dispersion in which the inorganic filler and the particulate polymer are dispersed in a solvent or dispersion medium (hereinafter simply referred to as a "medium") that does not dissolve the particulate polymer. Preferably, the particulate polymer is synthesized by emulsion polymerization, and the emulsion obtained by the emulsion polymerization may be used as-is as the coating liquid.

The medium of the coating liquid is preferably one that can uniformly and stably disperse or dissolve the inorganic filler, the particulate polymer, and, if necessary, the water-soluble polymer, and examples thereof include N-methylpyrrolidone, N,N-dimethylformamide, N,N-dimethylacetamide, water, ethanol, methanol, toluene, hot xylene, methylene chloride, and hexane.

The medium of the coating liquid is preferably water, or a mixed medium composed of water and a water-soluble organic medium.

The water-soluble organic medium is not particularly limited, and examples thereof include ethanol and methanol. Among these, water is more preferable.

When the coating liquid is applied to the substrate, if the coating liquid penetrates into the interior of the substrate, the particulate polymer containing the polymer will block the surface and interior of the pores of the substrate, whereby the permeability will tend to be reduced. In this regard, in the case of an aqueous dispersion using water as the medium of the coating liquid, the coating liquid will not easily penetrate into the interior of the substrate, whereby the particulate polymer containing the polymer will tend to be mainly present on the outer surface of the substrate, and a decrease in permeability can be more effectively suppressed, which is preferable.

The volume average particle size (D50) of the particulate polymer in the coating liquid may be, for example, 1.0 µm or more and 12 µm or less. From the viewpoint of obtaining a suitable distribution state of the protruding particulate polymer in the covering layer, the volume average particle size (D50) is preferably 1.5 µm or more, and is preferably 10 µm or less, 6.0 µm or less, 5.0 µm or less, 3.5 µm or less, 3.0 µm or less, or 2.5 µm or less. When the volume average particle size (D50) is equal to or greater than the lower limit described above, it is easy to preferably prevent aggregation of the particulate polymers. Furthermore, when the volume average particle size (D50) is equal to or less than the upper limit described above, the particle diameter difference with the inorganic filler can be maintained within a predetermined range, whereby it is easy to suitably control sedimentation of the particulate polymer in the coating liquid. The volume average particle size of the particulate polymer can be controlled by adjusting, for example, the polymerization time, polymerization temperature, raw material composition ratio, raw material charging order, pH, etc., for obtaining the particulate polymer.

The coating liquid may contain arbitrary additives such as dispersants such as surfactants; thickeners; wetting agents; antifoaming agents; and pH adjusters including acids and alkalis.

Examples of the method for dispersing or dissolving the inorganic filler, particulate polymer, and optionally the water-soluble polymer, in the medium of the coating liquid include a ball mill, a bead mill, a planetary ball mill, a vibrating ball mill, a sand mill, a colloid mill, an attritor, a roller mill, high-speed impeller dispersion, a disperser, a homogenizer, a high-speed impact mill, ultrasonic dispersion, and mechanical stirring using a stirring blade or the like.

The procedure for preparing the coating liquid preferably includes first adding the water-soluble polymer to the coating liquid in which the inorganic filler is dispersed, and then adding the resin binder and particulate polymer. By preparing the coating liquid in this order, the water-soluble polymer adsorbs and protects the metal ions contained in the inorganic filler, whereby the aggregation of the resin binder and particulate polymer can be prevented.

From the viewpoint of obtaining a suitable distribution state of the protruding particulate polymer in the covering layer, the viscosity of the coating liquid is preferably 10 mPa·s or more, or 20 mPa·s or more, and preferably 100 mPa·s or less, 80 mPa·s or less, 60 mPa·s or less, or 40 mPa·s or less.

In the present embodiment, the thermoplastic polymer contained in the coating liquid is preferably particles having a large particle size of 1 µm to 10 µm. Thus, when the viscosity of the coating liquid is 10 mPa·s or more, the thermoplastic polymer can be prevented from sediment in the coating liquid. Conversely, when the viscosity of the coating liquid is 100 mPa·s or less, turbulence of the liquid is likely to occur during stirring, whereby the dispersion of the particulate polymer in the coating liquid flow is improved, and it is easier to control the coefficient of variation (CV) of the area (si) of the Voronoi polygon within the above range.

The viscosity of the coating liquid is preferably 10 mPa·s or more and 100 mPa·s or less, from the viewpoints of suitably controlling sedimentation of the particulate polymer, increasing the gradient ratio of the covering layer, and increasing the contact ratio between the particulate polymer and the substrate surface in the process of removing the solvent from the coating film after the coating to form the covering layer. As a means for controlling the viscosity of the coating liquid, for example, the aspect ratio of the inorganic filler, the coefficient of variation of the particle size distribution of the inorganic filler, and the type of thickener can be adjusted. By using these means, it is possible to reduce the viscosity of the coating liquid and improve the meniscus of the coating liquid on the particulate polymer (improve wettability) during the process of immobilizing the coating liquid (forming a covering layer by drying), thereby improving the gradient ratio of the covering layer and increasing the adhesive strength with the electrodes.

Before the coating, the substrate may be surface-treated. Surface treatment is preferable because it makes it easier to apply the coating liquid, improves adhesion between the substrate and the thermoplastic polymer, and makes it easier to control the 180° peel strength to 200 gf/cm or more.

Examples of surface treatment methods include corona discharge treatment, plasma treatment, mechanical roughening, solvent treatment, acid treatment, and ultraviolet oxidation. Examples of surface treatment include corona discharge treatment.

The method of coating the substrate with the coating liquid is not particularly limited as long as it can achieve the desired coating pattern, coating film thickness, and coating area.

Examples of the coating method include the gravure coater method, small diameter gravure coater method, reverse roller coater method, transfer roller coater method, kiss coater method, dip coater method, knife coater method, air doctor coater method, blade coater method, rod coater method, squeeze coater method, cast coater method, die coater method, screen printing method, spray coating method, and inkjet coating method. Among these, the gravure coater method or the spray coating method is preferable from the viewpoint of achieving a high degree of freedom in the application shape of the particulate polymer and easily obtaining a preferable area ratio.

The coating method is preferably, for example, a gravure coater method in which the coating is performed at a high shear rate, and the shear rate is preferably 40,000 sec⁻¹ or more and 120,000 sec ⁻¹ or less. When the shear rate is within this range, the particulate polymer is well dispersed as primary particles, and it is easier to control the 180° peel strength to 200 gf/cm or more.

Before or during coating, the coating liquid may be stirred so that the particulate polymer can be uniformly dispersed in the coating liquid. Examples of the stirring method include:
a method of stirring the coating liquid by turbulence in a supply tank; and
a method in which the coating liquid is subjected to ultrasonic treatment (vibration and stirring treatment using ultrasonic waves) immediately before coating. It is advantageous to carry out these stirring methods in a suitable manner in order to obtain a suitable distribution state of the protruding particulate polymer in the covering layer.

The method for removing the medium from the coating film after coating is not particularly limited so long as it does not adversely affect the substrate and covering layer. Examples include a method of drying at a temperature below the melting point of the substrate while fixing the substrate, a method of drying under reduced pressure at a low temperature, a method of immersing in a medium that is a poor solvent for the particulate polymer to solidify the particulate polymer into particles and simultaneously extract the medium, etc.

From the viewpoint of adjusting the coefficient of static friction of the covering layer to within the above range and/or from the viewpoint of causing a part of the surface of the protruding particulate polymer to be missing, it is preferable to control the conditions after the coating and drying steps as follows:
· the tension applied in the direction perpendicular to the surface where the coated surface contacts the transport roller is controlled to a predetermined value or more, for example, 120 N/m or more;
· the speed of the transport roller with which the coated surface comes into contact is made slower than the separator transport speed;
· the inorganic filler is formed into a gradient shape so that the protruding particulate polymer does not flake from the surrounding inorganic filler portion; and
· the peel strength of the covering layer is increased to, for example, 200 gf/cm or more.

### <Production of Separator Wound Body>

The obtained separator for an electricity storage device is preferably wound into a wound body. By forming the separator into a wound body, it can be easily fed at high speed, whereby productivity in the production steps of the electricity storage device can be increased.

### <<Electricity Storage Device>>

The electricity storage device of the present embodiment comprises the separator for an electricity storage device of the present embodiment. The electricity storage device is not particularly limited, and examples thereof include batteries such as non-aqueous electrolyte secondary batteries, condensers, and capacitors. Among these, in order to utilize the advantages of the separator for an electricity storage device of the present embodiment, a battery is preferable, a non-aqueous electrolyte secondary battery is more preferable, and a lithium-ion secondary battery is further preferable.

The lithium-ion secondary battery comprises a positive electrode, a negative electrode, the separator for an electricity storage device of the present embodiment arranged between the positive electrode and the negative electrode, and a non-aqueous electrolyte solution. The electricity storage device of the present embodiment comprises the separator for an electricity storage device, and thus, has excellent characteristics such as power storage performance, and in the case of a lithium-ion secondary battery, has excellent battery characteristics.

When the electricity storage device of the present embodiment is a lithium-ion secondary battery, the positive electrode, the negative electrode, and the nonaqueous electrolyte solution are not limited, and known materials can be used.

As the positive electrode, a positive electrode having a positive electrode active material layer containing a positive electrode active material on a positive electrode current collector can be suitably used. As the positive electrode current collector, for example, aluminum foil can be used. Examples of the positive electrode active material include lithium-containing composite oxides such as LiCoO₂, LiNiO₂, spinel type LiMnO₄, and olivine LiFePO₄. In addition to the positive electrode active material, the positive electrode active material layer may appropriately contain a binder, a conductive material, and the like.

As the negative electrode, a negative electrode having a negative electrode active material layer containing a negative electrode active material on a negative electrode current collector can be suitably used. As the negative electrode current collector, for example, copper foil can be used. Examples of the negative electrode active material include carbon materials such as graphite, nongraphitizable carbonaceous, graphitizable carbonaceous, and composite carbon bodies; silicon, tin, metallic lithium, and various alloy materials.

The non-aqueous electrolyte solution is not particularly limited, and may be an electrolyte solution obtained by dissolving an electrolyte in an organic solvent. Examples of the organic solvent include propylene carbonate, ethylene carbonate, dimethyl carbonate, diethyl carbonate, and ethyl methyl carbonate. Examples of the electrolyte include lithium salts such as LiClO₄, LiBF₄, and LiPF₆.

### <Production Method of Electricity Storage Device>

The method for the production of an electricity storage device using the separator of the present embodiment is not particularly limited. Examples thereof include the following method.

First, the separator of the present embodiment is produced by the method described above. The size and shape of the separator may be, for example, a vertically elongated shape having a width of 10 mm or more and 500 mm or less, preferably 80 mm or more and 500 mm or less, and a length of 200 m or more and 10,000 m or less, preferably 1,000 m or more and 6,000 m or less.

Next, the positive electrode-separator-negative electrode-separator, or negative electrode-separator-positive electrode-separator, are laminated in this order and wound into a circular or flat spiral shape to obtain a wound body. The wound body is stored in a device can (for example, a battery can), and further an electrolyte solution is injected to produce the device. Alternatively, the electrode and the separator may be folded to form a wound body, which is then arranged in a device container (for example, an aluminum film) and the electrolyte solution is injected to produce the device.

At this time, the wound body can be pressed. Specific examples of this method include a method in which a separator, a current collector, and an electrode having an active material layer formed on at least one surface of the current collector are stacked such that the covering layer faces the active material layer, and then pressed.

The pressing temperature is preferably T_{1.00} or higher, which is a temperature at which adhesiveness can be effectively exhibited. T_{1.00} is the temperature at which the minimum value of DDSC, defined as the temperature derivative of heat flow difference per unit time measured by DSC (differential scanning calorimetry), is observed between 0°C and 150°C.

By pressing at a temperature of T_{1.00} or more, the covering layer is sufficiently deformed and suitable adhesive strength can be obtained. For example, a temperature of 35°C or higher is preferable. In order to prevent clogging of the pores in the separator or thermal shrinkage of the separator due to heat pressing, the pressing temperature is preferably lower than the melting point of the material contained in the substrate, and is more preferably 130°C or lower.

In order to prevent clogging of the pores in the separator, the pressing pressure is preferably 20 MPa or less. The pressing time may be 1 second or shorter when a roller press is used, or several hours when a flat press is used, and is preferably 2 hours or shorter from the viewpoint of productivity.

By using the separator for an electricity storage device of the present embodiment through the production steps described above, spring-back can be suppressed when a wound body composed of electrodes and a separator is press-molded. Thus, a decrease in yield in the device assembly step can be suppressed and the production process time can be shortened.

Adhesion may be imparted to the wound body without pressing. Specifically, examples of the method include imparting adhesion between the covering layer of the separator and the opposing electrodes by housing the wound body in a device can and injecting an electrolyte solution, and using the pressure generated in the device can when producing an electricity storage device, or by pressure accompanying expansion and contraction of the electrodes due to charging and discharging of the electricity storage device.

The electricity storage device produced as described above, particularly the lithium-ion secondary battery, comprises the separator of the present embodiment, which has high adhesion to the electrodes and a small thermal shrinkage rate, and thus, has excellent battery characteristics (rate characteristics) and long-term continuous operation resistance (cycle characteristics).

### EXAMPLES

The embodiments of the present disclosure will be specifically described below using Examples and Comparative Examples, but the present disclosure is not limited to these Examples and Comparative Examples.

### <<Measurement and Evaluation Methods>>

### <Thickness of Inorganic Filler Portion, Gradient Ratio of Covering Layer, and Protruding Amount of Particulate Polymer>

The separator was freeze-fractured, and the cross section was observed with a SEM (model S-4800, manufactured by Hitachi, Ltd.). The thickness of the inorganic filler portion of the covering layer, the gradient ratio of the covering layer, and the protruding amount of the particulate polymer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 5,000-fold magnification. As schematically shown in FIG. 2, in the SEM image of the fractured sample cross section, the distance from the boundary line between the substrate and the covering layer to the outer surface of the covering layer in the inorganic filler portion of the covering layer was measured as the thickness L1 (µm) of the inorganic filler portion of the covering layer.

The maximum distance L2 (µm) from the boundary between the substrate and covering layer to the outer surface of the inorganic filler of the covering layer formed in a gradient shape, and the maximum distance L3 (µm) from the boundary between the substrate and covering layer to the contour of the protruding particulate polymer were measured, and the gradient ratio L2/L1 of the covering layer, the coverage rate (L2-L1)/(L3-L1) of the protruding portion, and the protruding amount L3-L1 of the particulate polymer were calculated. For the gradient ratio L2/L1 of the covering layer, the coverage rate (L2-L1)/(L3-L1) of the protruding portion, and the protruding amount L3-L1 of the particulate polymer, 200 points were measured, and the average value thereof was calculated.

As the method for measuring L1, L2, and/or L3, a method in which each L1 value is obtained while polishing the cross section to be observed by SEM can also be used.

### <180° Peel Strength>

The surface of the separator cut to 2 mm × 7 mm opposite to the covering layer to be measured was attached to a glass plate with double-sided tape, and tape (product name "Mending Tape MP-12", manufactured by 3M Co.) was attached to the covering layer. 5 mm of the tip of the tape was peeled off, and the tip of the tape was clamped in a chuck using a tensile tester (model "AG-IS, SLBL-1kN, manufactured by Shimadzu Corporation) so that the tape was peeled off at an angle of 180° relative to the surface direction of the separator. A tensile test was performed at a pulling rate of 50 mm/sec, a temperature of 25°C, and a relative humidity of 40%, and the tensile strength (gf/cm) was measured.

### <Friction Test>

A friction test was performed on the surface of the separator sample on which the covering layer was formed twice in the TD by a horizontal method using an MH-3 friction tester manufactured by Toyo Seiki Seisakusho Co., Ltd., with a table material of SKD61 (surface roughness Ra: 0.4 µm) under the conditions of a sled mass of 200 g, a load capacity of 20 N, a contact element area of 63 mm × 63 mm (felt material), a test speed of 100 mm/min, a measurement distance of 30 mm, a temperature of 23°C, and a humidity of 50%, to measure the coefficient of static friction, and the average value was calculated and is shown in the table below. In this friction test, a specimen which was a separator sample cut to 100 mm × 100 mm was set so that the back surface of the specimen was in contact with the surface of the felt material side of the sled.

### <Contact Ratio Between Protruding Particulate Polymer and Substrate>

The separator was freeze-fractured, and the cross section was observed with an SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 5,000-fold magnification. In the SEM image, the number of particles in contact with the substrate was counted for 200 particulate polymers having a fractured surface among the particulate polymers protruding from the thickness of the inorganic filler portion, and this was taken as the contact ratio between the protruding particulate polymer and the substrate.

### <Ratio of Numbers of Particulate Polymers Protruding from Thickness of Inorganic Filler Portion of Covering Layer>

The separator was freeze-fractured, and the cross section was observed with an SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 5,000-fold magnification. 200 particulate polymers present on the fractured surface were observed in the SEM image, and of these the number of particulate polymers protruding from the thickness of the inorganic filler portion of the covering layer was counted, and this was taken as the ratio of the number of particulate polymers protruding from the thickness of the inorganic filler portion of the covering layer.

### <Methylene Chloride Soluble Content>

The methylene chloride soluble content in the substrate and the separator was measured by the following method. The substrate or the separator sampled at a size of 100 × 100 mm was neutralized and weighed using a precision balance (W₀ (g)). Next, 200 ml of methylene chloride was added to a sealed container, and the separator was immersed at room temperature for 15 minutes. Thereafter, the separator was removed, dried at room temperature for 3 hours, neutralized in the same manner as above, and weighed using a precision balance (W₁ (g)). The methylene chloride soluble content was calculated using the following formula. $Methylene chloride soluble content \left(weight%\right) = \left\{\left({W}_{1}-{W}_{0}\right)/{W}_{0}\right\} \times 100$

### <Total Amount of Metal Cations>

0.60 g of the separator was placed in a Teflon^{™} pressure decomposition vessel, 10 ml of sulfuric acid was added, and the vessel was sealed and heated in an air bath at 200°C for 15 hours. After cooling, the solution in the vessel was transferred to a 100 ml resin measuring flask, which was measured up to the mark to obtain a sample solution. The sample solution was measured using an inductively coupled plasma atomic emission spectrometry (ICP-OES) (model "ICPE-9000", manufactured by Shimadzu Corporation), and the content of each element was calculated using a calibration curve prepared from the standard solution.

### <Thermal Shrinkage Rate>

As a sample, the separator was cut to 100 mm in the MD and 100 mm in the TD, and allowed to stand in an oven at 130°C or 150°C for 1 hour. At this time, the sample was interposed between two pieces of paper so that the hot air would not directly hit the sample. After removing the sample from the oven and cooling, the length (mm) was measured and the thermal shrinkage rate was calculated using the following formula. Measurements were performed in the MD and TD, and the measurement in the TD was displayed as the thermal shrinkage rate. $Thermal shrinkage rate \left(%\right) = \left\{\left(100-length after heating\right)/100\right\} \times 100$

### <Basis Weight (g/m²) >

The basis weight is the weight (g) of the polyolefin microporous membrane per unit area (1 m²). After sampling to 1 m × 1 m, the weight was measured using an electronic balance (AUW120D) manufactured by Shimadzu Corporation. If it was not possible to sample to 1 m × 1 m, a sample was cut to an appropriate area, the weight thereof was measured and then converted to the weight (g) per unit area (1 m²).

### <Thickness of Substrate or Separator>

A 10 cm × 10 cm square test sample was cut from the substrate or separator, and 9 points (3 points × 3 points) were selected in a grid pattern to measure the thickness (µm) using a micro thickness gauge (Toyo Seiki Seisaku-sho, Ltd., type KBM) at room temperature of 23 ± 2°C. The average value of the measurements at the 9 points was calculated as the thickness of the substrate or separator.

### <Porosity of Substrate>

A 10 cm × 10 cm square test sample was cut from the substrate, and the volume (cm³) and mass (g) thereof were calculated. Using these values and the density of the substrate set at 0.95 (g/cm³), the porosity was calculated from the following formula. $Porosity \left(%\right) = \left(1-mass/volume/0.95\right) \times 100$

### <Density (g/cm³) >

The density of the sample was measured by the density gradient tube method (23°C) in accordance with JIS K7112:1999.

### <Air Permeability>

As air permeability, the air permeability resistance of the substrate and the separator for an electricity storage device was measured in accordance with JIS P-8117 using a Gurley air permeability meter G-B2 (model name) manufactured by Toyo Seiki Co., Ltd. When the covering layer is present on only one surface of the substrate, the needle can be inserted from the surface where the covering layer is present.

### <Puncture Strength>

Using a handy compression tester KES-G5 (model name) manufactured by Kato Tech Co., Ltd., the substrate was fixed with a sample holder having an opening diameter of 11.3 mm. Next, a puncture test was performed on the center of the fixed substrate using a needle with a tip curvature radius of 0.5 mm at a puncture speed of 2 mm/sec, and an atmosphere of 25°C, to measure the maximum puncture load as the puncture strength (gf). When the covering layer is present on only one surface of the substrate, the needle can be inserted from the surface where the covering layer is present.

### <Average Pore Size of Polyolefin Microporous Membrane>

It is known that the fluid inside a capillary follows a Knudsen flow when the mean free path of the fluid is larger than the pore diameter of the capillary, and follows a Poiseuille flow when it is smaller. Thus, it was assumed that the air flow in the air permeability measurement of the thermoplastic polymer-containing layer follows a Knudsen flow, and the water flow in the water permeability measurement of the substrate follows a Poiseuille flow.

The average pore size d (µm) of the polyolefin microporous membrane was calculated from the air permeation rate constant R_{gas} (m³/(m²·sec·Pa)), the water permeation rate constant R_{liq} (m³/(m²·sec·Pa)), the air molecular velocity v (m/sec), the water viscosity η (Pa·sec), the standard pressure Ps (= 101,325 Pa), the porosity ε (%), and the membrane thickness L (µm) using the following formula: $d = 2 v \times \left({R}_{liq}/{R}_{gas}\right) \times \left(16η/3Ps\right) \times {10}^{6}$

R_{gas} was calculated from the air permeability (sec) using the following formula: ${R}_{gas} = 0.0001 / \left(air permeability\times \left(6.424\times {10}^{- 4}\right)\times \left(0.01276\times 101325\right)\right)$

Furthermore, R_{liq} was calculated from the water permeability (cm³/(cm²·sec·Pa)) using the following formula. ${R}_{liq} = water permeability / 100$

The water permeability was determined as follows. A thermoplastic polymer-containing layer that had been soaked in ethanol beforehand was placed in a stainless-steel liquid permeability cell having a diameter of 41 mm, and the ethanol in this layer was washed away with water. Water was then permeated through the cell at a differential pressure of about 50,000 Pa, the amount of water permeation per unit time, unit pressure, and unit area was calculated from the amount of water permeation (cm³) after 120 seconds had elapsed, and this was taken as the water permeability.

Moreover, v was calculated using the following formula from the gas constant R (= 8.314), absolute temperature T (K), the circular constant π, and the average molecular weight (M) of air (=2.896 × 10⁻² kg/mol). $ν = {\left(\left(8\times RT\right)/\left(π\times M\right)\right)}^{1 / 2}$

### <Glass Transition Temperature of Thermoplastic Polymer>

An appropriate amount of the aqueous dispersion (solid content = 38 parts by weight or more and 42 parts by weight or less, pH = 9.0) containing a thermoplastic polymer was placed on an aluminum dish and allowed to stand at room temperature for 24 hours to obtain a dry film. Approximately 17 mg of the dry film was filled into an aluminum container for measurement, and a DSC curve under a nitrogen atmosphere and a DSC curve were obtained using a DSC measurement device (manufactured by Shimadzu Corporation, model name "DSC6220"). The measurement conditions were as follows.

First stage temperature rise program: temperature, starting at 30°C, is raised at a rate of 10°C per minute. After reaching 150°C, the temperature is maintained for 5 minutes.

Second stage temperature reduction program: temperature is reduced from 110°C at a rate of 10°C per minute. After reaching -50°C, the temperature is maintained for 5 minutes.

Third stage temperature rise program: temperature is raised from -50°C to 150°C at a rate of 10°C per minute. DSC and DDSC data were obtained during this third stage temperature rise.

The glass transition temperature of the obtained DSC curve was determined by the method described in JIS K7121. Specifically, the temperature at the point where the curve of the step-like change during the glass transition intersects with a straight line that is equidistant from a straight line obtained by extending the baseline on the low temperature side of the DSC curve to the high temperature side and a straight line obtained by extending the baseline on the high temperature side of the DSC curve to the low temperature side in the vertical axis direction was used as the glass transition temperature (Tg).

### <Aspect Ratio of Inorganic Filler in Covering Layer>

The surface of the separator for an electricity storage device on which osmium was vapor-deposited was observed at an acceleration voltage of 1.0 kV and 10,000-fold magnification, and the aspect ratio was measured using a scanning electron microscope (SEM) (model "S-4800", manufactured by Hitachi, Ltd.). The inorganic filler in the covering layer was image-processed in the SEM image to determine the aspect ratio. Even when inorganic fillers were bound to each other, inorganic fillers whose length and width as a single unit were clearly recognizable were selected to calculate the aspect ratio.

Specifically, 10 inorganic fillers whose length and width were clearly recognizable were selected, and the aspect ratio was calculated as the average ratio of the major axis to the minor axis of each filler. When there were fewer than 10 inorganic fillers whose length and width were clearly recognizable in one field of view, 10 inorganic fillers were selected from images of multiple fields of view.

### <Particle Size Distribution and Average Particle Size of Inorganic Filler>

The particle size distribution of the inorganic filler was measured using a particle size measuring device (manufactured by Nikkiso Co., Ltd., product name "Microtrac UPA150"). The sample solution to be measured was the pre-application dispersion, and the measurement conditions were loading index = 0.20, a measurement time of 300 seconds, and the particle size distribution (Cv value) of the inorganic filler was calculated by dividing the standard deviation SD value of the volume average particle size (D50) in the obtained data by the value D50.

### <Volume Average Particle Size (D50) of Thermoplastic Polymer in Aqueous Dispersion and Volume Average Particle Size (D50) of Resin Binder>

The volume average particle size (D50) of the thermoplastic polymer in the aqueous dispersion and the volume average particle size (D50) of the resin binder were measured using a particle diameter measuring device (product name "Microtrac UPA150" manufactured by Nikkiso Co., Ltd.). The measurement conditions were a loading index of 0.20 and a measurement time of 300 seconds, and the particle diameter (D50) value at which the cumulative volume in the obtained data became 50% was recorded as the volume average particle size (D50).

### <Observation of Presence/Absence of Missing Portions on Spherical Surface of Particulate Polymer and Calculation of Missing Ratio>

The cross section of the separator for an electricity storage device on which osmium was vapor-deposited was observed with a scanning electron microscope (SEM) (model "S-4800", manufactured by Hitachi, Ltd.) at an acceleration voltage of 1.0 kV and 10,000-fold magnification for measurement. Specifically, the maximum width (W) in the horizontal direction relative to the separator surface and the maximum height (H) in the vertical direction relative to the separator surface were measured for 200 arbitrary particulate polymers as shown in FIG. 8, and the missing ratio was calculated by dividing the maximum height (H) by the maximum width (W), and the average value thereof was taken as the missing ratio of the particulate polymer.

### <Volume Average Particle Size (D50) and Particle Size Distribution of Particulate Polymer in Covering Layer>

The cross section of the separator for an electricity storage device on which osmium was vapor-deposited was observed with a scanning electron microscope (SEM) (model "S-4800", manufactured by Hitachi, Ltd.) at an acceleration voltage of 1.0 kV and 10,000-fold magnification for measurement. Specifically, the area circle equivalent diameter was measured for 200 arbitrary particulate polymers, the number average particle diameter MN and volume average particle diameter MV were calculated from these values, and the particle size distribution of the particulate polymer was calculated as MV/MN.

### <Surface Observation of Covering Layer and Voronoi Division>

The surface of the separator for an electricity storage device on which osmium was vapor-deposited was subjected to elemental mapping using a scanning electron microscope (SEM) (model "SU-8220", manufactured by Hitachi, Ltd.) and energy dispersive X-ray spectroscopy (EDX) (model "ULTIM EXTREME", manufactured by Oxford Instruments). At this time, secondary electrons were selected as the SEM detector, and mapping measurements of carbon atoms on the covering layer surface on the separator were performed in 10 fields of view at a magnification of 500-fold or 3000-fold depending on the particle size of the particulate polymer, with an acceleration transmission of 3 kV and 20 mapping integrations, as shown in FIG. 7.

The area (si) of the Voronoi polygons, the total number (n) of Voronoi polygons, the mean value (m), the standard deviation (sd), and the coefficient of variation (cv) for the protruding particulate polymers contained in these 10 fields of view were each obtained as the average value of the 10 fields of view.

Specifically, the mapping image of the carbon atoms was subjected to Gausian Blur processing (Sigma = 5) using image processing software (ImageJ), then binarized using the Threshold function (Auto), and further subjected to watershed processing.

This processed image was subjected to Voronoi division using the cv2.Subdiv2D.getVoronoiFacetList method of the opencv -python library (version 4.5.4.60) in the programming language Python.

When Voronoi division was performed on the observation field, unclosed regions were not included in the calculation of the area of the Voronoi polygon.

### <Particulate Polymer Shedding Ratio>

The surface of the separator for an electricity storage device on which osmium was vapor-deposited was subjected to elemental mapping using a scanning electron microscope (SEM) (model "SU-8220", manufactured by Hitachi, Ltd.) and energy dispersive X-ray spectroscopy (EDX) (model "ULTIM EXTREME", manufactured by Oxford Instruments). At this time, secondary electrons were selected as the SEM detector, and mapping measurements of carbon atoms were performed in 10 fields of view at a magnification of 500-fold or 3000-fold depending on the particle size of the particulate polymer, with an acceleration transmission of 3 kV and 20 mapping integrations. From the carbon atom mapping images, Gausian Blur processing (Sigma = 5) was performed using image processing software (ImageJ), and binarization was then performed using the Threshold function (Auto), and the projected area of the particulate polymer when the covering layer surface was viewed in a plan view was calculated. The average value thereof in these 10 fields of view was used as the projected area (Sr) of the particulate polymer when the covering layer surface was viewed in a plan view. From the SEM images of the same 10 fields of view where the carbon atom mapping measurement was performed, by similarly performing image processing using image processing software (ImageJ), the shedding area of the particulate polymer when the covering layer surface was viewed in a plan view was calculated. The average value thereof in these 10 fields of view was calculated as the shedding area (Sd) of the particulate polymer when the covering layer surface was viewed in a plan view. From the calculated Sr and Sd values, the ratio of shedding area Sd/(Sr+Sd)×100(%) of the particulate polymer was calculated.

### <Rate Characteristics>

### a. Preparation of Positive Electrode

A slurry was prepared by mixing 90.4 parts by weight of nickel, manganese, and cobalt composite oxide (NMC) (Ni:Mn:Co=1:1:1 (element ratio), density 4.70 g/cm³) as a positive electrode active material, 1.6 parts by weight of graphite powder (KS6) (density 2.26 g/cm³, number average particle size 6.5 µm) as a conductive additive, 3.8 parts by weight of acetylene black powder (AB) (density 1.95 g/cm³, number average particle size 48 nm) as a conductive additive, and 4.2 parts by weight of polyvinylidene fluoride (PVdF) (density 1.75 g/cm³) as a binder, and dispersing these in N-methylpyrrolidone (NMP).

This slurry was applied to one surface of an aluminum foil having a thickness of 20 µm, which serves as the positive electrode current collector, using a die coater, and then dried at 130°C for 3 minutes, followed by compression molding using a roller press to prepare a positive electrode. The amount of the positive electrode active material applied was 109 g/m².

### b. Preparation of Negative Electrode

87.6 parts by weight of graphite powder A (density 2.23 g/cm³, number average particle size 12.7 µm) and 9.7 parts by weight of graphite powder B (density 2.27 g/cm³, number average particle size 6.5 µm) as negative electrode active materials, as well as 1.4 parts by weight (solid content equivalent) of ammonium salt of carboxymethylcellulose (solid content concentration 1.83 parts by weight aqueous solution), and 1.7 parts by weight (solid content equivalent) of diene rubber latex (solid content concentration 40 parts by weight aqueous solution) were dispersed in purified water to prepare a slurry.

This slurry was applied to one surface of a copper foil having a thickness of 12 µm, which serves as the negative electrode current collector, with a die coater, dried at 120°C for 3 minutes, and then compression molded with a roller press to prepare a negative electrode. The amount of negative electrode active material applied at this time was 5.2 g/m².

### c. Preparation of Non-Aqueous Electrolyte Solution

A non-aqueous electrolyte solution was prepared by dissolving LiPF₆ as a solute in a mixed solvent of ethylene carbonate:ethyl methyl carbonate=1:2 (volume ratio) to a concentration of 1.0 mol/L.

### d. Battery Assembly

The separator or substrate was cut to a circle of 24 mmϕ, and the positive and negative electrodes were each cut into a circle of 16 mmϕ. The negative electrode, separator or substrate, and positive electrode were stacked in this order so that the active material surfaces of the positive and negative electrodes faced each other, and then placed in a stainless-steel metal container with a lid. The container and the lid were insulated, the container was in contact with the copper foil of the negative electrode, and the lid was in contact with the aluminum foil of the positive electrode. 0.4 ml of the nonaqueous electrolyte solution was poured into this container and the container was sealed to assemble a battery.

### e. Evaluation of Rate Characteristics

The simple battery assembled in "d." was charged at 25°C at a current value of 3 mA (about 0.5 C) to a battery voltage of 4.2 V, and the current value was then reduced from 3 mA so as to maintain 4.2 V, and the initial charging after the battery was made was performed for a total of about 6 hours. The battery was then discharged at a current value of 3 mA to a battery voltage of 3.0 V. Next, it was charged at 25°C at a current value of 6 mA (about 1.0 C) to a battery voltage of 4.2 V, and the current value was then reduced from 6 mA so as to maintain 4.2 V, and charging was performed for a total of about 3 hours. The discharge capacity when it was discharged at a current value of 6 mA to a battery voltage of 3.0 V was taken as the 1 C discharge capacity (mAh).

Next, it was charged at 25°C at a current value of 6 mA (about 1.0 C) to a battery voltage of 4.2 V, and the current value was then reduced from 6 mA so as to maintain 4.2 V, and charging was performed for a total of about 3 hours. Thereafter, the discharge capacity when the battery was discharged at a current value of 12 mA (about 2.0 C) to a battery voltage of 3.0 V was defined as the 2 C discharge capacity (mAh). The ratio of the 2 C discharge capacity to the 1 C discharge capacity was then calculated, and this value was defined as the rate characteristic.$Rate characteristic \left(%\right) = \left(2 C discharge capacity / 1 C discharge capacity\right) \times 100$

### Evaluation criteria for rate characteristics (%)

A (Good): Rate characteristic exceeds 85%
B (Acceptable): Rate characteristic exceeds 80% and is 85% or less
C (Poor): rate characteristic is 80% or less

### <Adhesive Strength with Electrodes (Before Electrolyte Solution Injection)>

The separator was cut into a rectangular shape of 20 mm width × 70 mm length, and was stacked on a positive electrode cut to a size of 15 mm × 60 mm to form a laminate of the separator and electrode. This laminate was then pressed under the following conditions.
Temperature: 90°C
Pressing pressure: 1 MPa
Pressing time: 5 seconds

The peel strength between the separator and the electrodes after pressing was measured by a 90° peel test at a peel speed of 50 mm/min using force gauges ZP5N and MX2-500N (product names) manufactured by IMADA Co., Ltd. At this time, the average value of the peel strength in the peel test for a length of 40 mm conducted under the above conditions was adopted as the peel strength.

### Adhesion Evaluation Criteria

A (Superior): Peel strength is 5 N/m or more
B (Excellent): Peel strength is 2N/m or more and less than 5 N/m
C (Good): Peel strength is 1 N/m or more and less than 2 N/m
D (Unacceptable): Peel strength is less than 1 N/m

### <Adhesive Strength with Electrodes (After Electrolyte Solution Injection)>

The separator was cut into a rectangular shape of 20 mm wide × 70 mm long, and was stacked with a positive electrode cut to a size of 15 mm × 60 mm to form a laminate of the separator and the electrode. This laminate was inserted into an aluminum laminate film, and 0.4 ml of electrolyte solution (a mixture of EC/DEC = 1/2 containing 1 mol/L LiPF₆) was added thereto. This was sealed and allowed to stand for 12 hours, and pressed under the following conditions.
Temperature: 90°C
Pressing pressure: 1 MPa
Pressing time: 1 minute

The peel strength between the separator and the electrodes after pressing was measured by a 90° peel test at a peel speed of 50 mm/min using force gauges ZP5N and MX2-500N (product names) manufactured by IMADA Co., Ltd. At this time, the average value of the peel strength in the peel test for a length of 40 mm conducted under the above conditions was adopted as the peel strength.

### Adhesion Evaluation Criteria

A (Good): Peel strength is 5 N/m or more
B (Acceptable): Peel strength is 2 N/m or more and less than 5 N/m
C (Poor): Peel strength is 1 N/m or more and less than 2 N/m
D (Unacceptable): Peel strength is less than 1 N/m

### <Powder Flaking>

A tape (manufactured by 3M Co.) measuring 12 mm wide and 100 mm long was attached to the covering layer surface of the separator. The force required to peel the tape from the sample at a rate of 50 mm/min was measured using a 90° peel strength measuring device (manufactured by IMADA Co., Ltd., product name IP-5N). Based on the measurement results, the adhesive strength was evaluated according to the following criteria.
A (Good): 59 N/m (6 gf/mm) or more
B (Acceptable): 40 N/m or more and less than 59 N/m
C (Poor): Less than 40 N/m

### <Cycle Characteristics>

### a. Preparation of Positive Electrode

100 parts by weight of a nickel, cobalt, aluminum composite oxide (NCA) (Ni:Co:Al = 90:5:5 (element ratio), density 3.50 g/cm³) as a positive electrode active material, 1.25 parts by weight of acetylene black powder (AB) as a conductive material, and 1.0 part by weight of polyvinylidene fluoride (PVdF) as a binder were mixed, and these were dispersed in N-methylpyrrolidone (NMP) to prepare a slurry. This slurry was applied to both sides of an aluminum foil having a thickness of 15 µm serving as a positive electrode current collector using a die coater, dried at 130°C for 3 minutes, and then compression molded using a roller press to prepare a positive electrode. The amount of positive electrode active material applied at this time was 456 g/m².

### b. Preparation of Negative Electrode

A slurry was prepared by dispersing 86.0 parts by weight of graphite powder as a negative electrode active material, 4.5 parts by weight of silicon oxide (SiO), and 1 part by weight of sodium salt of carboxymethylcellulose and 1.0 part by weight of styrene-butadiene rubber (SBR) as a binder in purified water. This slurry was applied to both sides of a 7.5 µm-thick copper foil serving as a negative electrode current collector using a die coater, dried at 120°C for 3 minutes, and then compression molded using a roller press to prepare a negative electrode. The amount of negative electrode active material applied at this time was 266 g/m².

### c. Preparation of Non-Aqueous Electrolyte Solution

A non-aqueous electrolyte solution was prepared by dissolving LiPF₆ as a solute in a mixed solvent of ethylene carbonate:dimethyl carbonate:ethyl methyl carbonate = 25:70:5 (weight ratio) to a concentration of 1.4 mol/L.

### d. Battery Assembly

The positive electrode (width 63 mm), negative electrode (width 64 mm), and separator (width 67 mm) were stacked and spirally wound to prepare a wound body, which was then placed in a cylindrical battery can having an outer diameter of 21 mm and a height of 70 mm, and the nonaqueous electrolyte solution was poured into the can and sealed to assemble the battery.

### e. Evaluation of Cycle Characteristics

The battery assembled in "d." was charged at 25°C at a current value of 3 mA (about 0.5 C) until the battery voltage was 4.2 V, and then charged until the current value was 50 mA while maintaining 4.2 V. Discharge was then performed at 0.2 C until the battery voltage was 2.5 V, and the initial capacity was obtained. Next, the battery was charged at 0.3 C until the battery voltage was 4.2 V, and then charged until the current value was 50 mA while maintaining 4.2 V, and then discharged at 1 C until the battery voltage was 2.5 V. This was set as one cycle, and charging and discharging were repeated. The cycle characteristics were evaluated according to the following criteria, using the capacity retention rate after 500 cycles relative to the initial capacity (capacity in the first cycle).
A (Good): capacity retention rate of 80% or more
B (Acceptable): capacity retention rate of 75% or more and less than 80%
C (Unacceptable): capacity retention rate less than 75%

### <<Substrate Production Examples>>

### <Production of Polyolefin Microporous Membrane B1>

45 parts by weight of a homopolymer high density polyethylene having Mv of 700,000, 45 parts by weight of a homopolymer high density polyethylene having an Mv of 300,000, and 10 parts by weight of a mixture of a homopolymer polypropylene having an Mv of 400,000 and a homopolymer polypropylene having an Mv of 150,000 (weight ratio = 4:3) were dry blended using a tumbler blender. 1 part by weight of tetrakis-[methylene-(3',5'-di-t-butyl-4'-hydroxyphenyl)propionate]methane was added as an antioxidant to 99 parts by weight of the obtained polyolefin mixture, and the mixture was dry blended again using a tumbler blender to obtain a mixture. The obtained mixture was fed to a twin-screw extruder by a feeder under a nitrogen atmosphere.

Liquid paraffin (kinematic viscosity at 37.78°C: 7.59×10⁻⁵ m²/s) was injected into the extruder cylinder by a plunger pump. The operating conditions of the feeder and pump were adjusted so that the proportion of liquid paraffin in 100 parts by weight of the total mixture extruded was 65 parts by weight, i.e., the proportion of the resin composition was 35 parts by weight.

Next, these were melt-kneaded in a twin-screw extruder while being heated to 230°C, and the resulting melt-kneaded product was extruded through a T-die onto a cooling roller having a surface temperature controlled to 80°C, and the extrudate was brought into contact with the cooling roller and cast, followed by cooling and solidification to obtain a sheet-like molded product having a thickness of 1.5 mm.

This sheet was stretched at a stretching ratio of 7×6.4-fold at a temperature of 20°C using a simultaneous biaxial stretching machine, then immersed in methylene chloride to extract and remove the liquid paraffin, dried, and stretched in the transverse direction by 1.8-fold at a temperature of 130°C using a tenter stretching machine. Thereafter, this stretched sheet was relaxed by approximately 10% in the width direction and heat-treated to obtain polyolefin microporous membrane B1 as a substrate.

The obtained polyolefin microporous membrane was evaluated according to the methods described above. The evaluation results are shown in the table below.

### <Production of Polyolefin Microporous Membrane B2>

Polyolefin microporous membrane B2 was produced in the same manner as polyolefin microporous membrane B1, except that the thickness of the sheet-like molded product was changed to 0.5 mm. The results of measurement and evaluation of the polyolefin microporous membrane B2 are likewise shown in Table 1.

**[Table 1]**

| Table 1. Substrate | | |
|---|---|---|
| Polyolefin microporous membrane No. | B1 | B2 |
| Basis weight (g/m²) | 6.4 | 3.5 |
| Thickness (µm) | 12 | 6 |
| Porosity (%) | 44 | 37 |
| Air permeability (sec/100 cm³) | 150 | 140 |
| Puncture strength (gf) | 500 | 255 |
| Average pore size (nm) | 50 | 50 |
| Methylene chloride solubles (weight%) | 0.7 | 0.5 |

### <<Preparation Examples of Aqueous Dispersions of Particulate Polymer>>

### <Preparation of Particulate Polymer Aqueous Dispersion A1>

70.4 parts by weight of ion-exchanged water, 0.5 parts by weight of "Aqualon KH1025" (registered trademark, 25% aqueous solution manufactured by DKS Co., Ltd., indicated as "KH1025" in the table; the same applies below), and 0.5 parts by weight of "ADEKA REASOAP SR1025" (registered trademark, manufactured by ADEKA Corporation, 25% aqueous solution, indicated as "SR1025" in the table; the same applies below) were charged into a reaction vessel equipped with a stirrer, reflux condenser, dropping tank, and thermometer, and the temperature inside the reaction vessel was raised to 95°C. Thereafter, while maintaining the temperature inside the vessel at 95°C, 7.5 parts by weight of ammonium persulfate (2% aqueous solution) (indicated as "APS (aq)" in the table; the same applies below) was added.

A mixture of 71.5 parts by weight of methyl methacrylate (MMA), 18.9 parts by weight of n-butyl acrylate (BA), 2 parts by weight of 2-ethylhexyl acrylate (EHA), 0.1 parts by weight of methacrylic acid (MAA), 0.1 parts by weight of acrylic acid (AA), 2 parts by weight of 2-hydroxyethyl methacrylate (HEMA), 5 parts by weight of acrylamide (AM), 0.4 parts by weight of glycidyl methacrylate (GMA), 0.4 parts by weight of trimethylolpropane triacrylate (A-TMPT) (manufactured by Shin-Nakamura Chemical Co., Ltd.), 0.3 parts by weight of γ-methacryloxypropyltrimethoxysilane (AcSi), 3.0 parts by weight of KH1025, 3.0 parts by weight of SR1025, 0.05 parts by weight of sodium p-styrenesulfonate (NaSS), 7.5 parts by weight of ammonium persulfate (2% aqueous solution), and 52 parts by weight of ion-exchanged water was mixed for 5 minutes using a homomixer to prepare an emulsion. The resulting emulsion was dripped from the dropping tank into the reaction vessel. The dripping started 5 minutes after the aqueous ammonium persulfate solution was added to the reaction vessel, and the entire amount of the emulsion was dripped over 150 minutes. During the dripping of the emulsion, the temperature inside the vessel was maintained at 80°C. At this time, the stirrer inserted in the reaction vessel was constantly stirred with a magnetic stirrer.

After the dripping of the emulsion, the temperature inside the reaction vessel was maintained at 80°C for 90 minutes, and then cooled to room temperature to obtain an emulsion. The obtained emulsion was adjusted to pH = 9.0 using an aqueous ammonium hydroxide solution (25% aqueous solution) to obtain an acrylic copolymer latex having a concentration of 40 parts by weight (aqueous dispersion A1). The glass transition temperature (Tg) and volume average particle size (D50) of the thermoplastic polymer contained in the obtained aqueous dispersion A1 were evaluated by the method described above. The obtained results are shown in the table below.

### <Preparation of Particulate Polymer Aqueous Dispersions A2 to A5>

Aqueous dispersions A2 to 5 were obtained and their physical properties were evaluated in the same manner as aqueous dispersion A1, except that the composition of the emulsion was changed as shown in the table below. The obtained results are shown in table below.

### <Preparation of Particulate Polymer Aqueous Dispersion A1-1>

A part of the aqueous dispersion A1 was taken and used as a seed polymer to carry out multistage polymerization to synthesize aqueous dispersion A1-1. Specifically, a mixture of 20 parts by weight of aqueous dispersion A1 converted into solid content and 70.4 parts by weight of ion-exchanged water was first charged into a reaction vessel equipped with a stirrer, a reflux condenser, a dropping tank, and a thermometer, and the temperature inside the reaction vessel was raised to 80°C. Thereafter, while maintaining the temperature inside the vessel at 80°C, 7.5 parts by weight of ammonium persulfate (2% aqueous solution) was added. This was the initial charge.

71.5 parts by weight of methyl methacrylate (MMA), 18.9 parts by weight of n-butyl acrylate (BA), 2 parts by weight of 2-ethylhexyl acrylate (EHA), 0.1 parts by weight of methacrylic acid (MAA), 0.1 parts by weight of acrylic acid (AA), 2 parts by weight of 2-hydroxyethyl methacrylate (HEMA), 5 parts by weight of acrylamide (AM), 0.4 parts by weight of glycidyl methacrylate (GMA), 0.4 parts by weight of trimethylolpropane triacrylate (A-TMPT), 0.3 parts by weight of γ-methacryloxypropyltrimethoxysilane (AcSi), 3 parts by weight of KH1025, 3 parts by weight of SR1025, 0.05 parts by weight of sodium p-styrenesulfonate (NaSS), 7.5 parts of ammonium persulfate (2% aqueous solution), and 52 parts by weight of ion-exchanged water was mixed for 5 minutes using a homomixer to prepare an emulsion. The resulting emulsion was dripped from the dropping tank into the reaction vessel. The dripping started 5 minutes after the aqueous ammonium persulfate solution was added to the reaction vessel, and the entire amount of the emulsion was dripped over 150 minutes. During the dripping of the emulsion, the temperature inside the vessel was maintained at 80°C. At this time, the stirrer inserted in the reaction vessel was constantly stirred with a magnetic stirrer.

After the dripping of the emulsion was completed, the temperature inside the reaction vessel was maintained at 80°C while stirring for 90 minutes, and then cooled to room temperature to obtain an emulsion. The obtained emulsion was adjusted to pH = 9.0 using an aqueous ammonium hydroxide solution (25% aqueous solution) to obtain an acrylic copolymer latex having a concentration of 40 parts by weight (aqueous dispersion A1-1). The obtained aqueous dispersion A1-1 was evaluated by the method described above. The obtained results are shown in Table 2.

### <Preparation of Aqueous Dispersions A2-1, A3-1 to A3-8, A4-1, and A5-1>

Copolymer latexes (aqueous dispersions A2-1, A3-1 to A3-8, A4-1, and A5-1) were obtained in the same manner as aqueous dispersion A1-1, except that the compositions of the seed polymer, monomers, and other raw materials were changed as shown in Table 2. The obtained aqueous dispersions were each evaluated by the methods described above. The obtained results are shown in Table 2.

**[Table 2-1]**

| | Type | Raw material name | Active ingredient ratio | Unit | Aqueous dispersion | | | | Aqueous dispersion | | | |
|---|---|---|---|---|---|---|---|---|---|---|---|---|
| | | | | | A1 | A1-1 | A2 | A2-1 | A3 | A3-1 | A3-2 | A3-3 |
| Initial charge | Seed polymer type | | - | --- | - | A1 | - | A2 | - | A3 | A3 | A3 |
| | Seed polymer diameter | | - | (nm) | - | 132 | - | 122 | - | 131 | 131 | 131 |
| | Seed polymer amount | | 100% by weight | (parts by weight) | - | 20 | - | 20 | - | 20 | 20 | 20 |
| | Emulsifier | KH1025 | 25% by weight | (parts by weight) | 0.5 | - | 0.5 | - | 0.5 | - | - | - |
| | | SR1025 | 25% by weight | (parts by weight) | 0.5 | - | 0.5 | - | 0.5 | - | - | - |
| | Ion-exchanged water | | - | (parts by weight) | 70.4 | 70.4 | 70.4 | 70.4 | 70.4 | 70.4 | 70.4 | 70.4 |
| | Initiator | APS(aq) | 2% by weight | (parts by weight) | 7.5 | 7.5 | 7.5 | 7.5 | 7.5 | 7.5 | 7.5 | 7.5 |
| | Acid monomer | MAA | 100% by weight | (parts by weight) | 0.1 | 0.1 | 1.0 | 1.0 | 1.0 | 1.0 | 1.0 | 1.0 |
| | | AA | 100% by weight | (parts by weight) | 0.1 | 0.1 | 1.0 | 1.0 | 1.0 | 1.0 | 1.0 | 1.0 |
| | (Meth)acrylic acid ester | MMA | 100% by weight | (parts by weight) | 71.5 | 71.5 | 51.0 | 51.0 | 20.0 | 20.0 | 20.0 | 20.0 |
| | | BA | 100% by weight | (parts by weight) | 18.9 | 18.9 | 37.0 | 37.0 | 0 | 0 | 0 | 0 |
| | | BMA | 100% by weight | (parts by weight) | 0 | 0 | 0 | 0 | 0 | 0 | 0 | 0 |
| | | EHA | 100% by weight | (parts by weight) | 2 | 2 | 0 | 0 | 0 | 0 | 0 | 0 |
| | | CHMA | 100% by weight | (parts by weight) | 0 | 0 | 0 | 0 | 0 | 0 | 0 | 0 |
| | Aromatic vinyl monomer | St | 100% by weight | (parts by weight) | 0 | 0 | 0 | 0 | 78 | 78 | 78 | 78 |
| Emulsion | Cyano group-containing monomer | AN | 100% by weight | (parts by weight) | 0 | 0 | 10 | 10 | 0 | 0 | 0 | 0 |
| | Functional group-containing monomer | HEMA | 100% by weight | (parts by weight) | 2 | 2 | 0 | 0 | 0 | 0 | 0 | 0 |
| | | AM | 100% by weight | (parts by weight) | 5 | 5 | 0 | 0 | 0 | 0 | 0 | 0 |
| | Crosslinkable monomer | GMA | 100% by weight | (parts by weight) | 0.4 | 0.4 | 0 | 0 | 0 | 0 | 0 | 0 |
| | | A-TMPT | 100% by weight | (parts by weight) | 0.4 | 0.4 | 1.0 | 1.0 | 1.0 | 1.0 | 1.0 | 1.0 |
| | | AcSi | 100% by weight | (parts by weight) | 0.3 | 0.3 | 0.5 | 0.5 | 0.5 | 0.5 | 0.5 | 0.5 |
| | Emulsifier | KH1025 | 25% by weight | (parts by weight) | 3.0 | 3.0 | 2.0 | 2.0 | 2.0 | 2.0 | 2.0 | 2.0 |
| | | SR1025 | 25% by weight | (parts by weight) | 3.0 | 3.0 | 0 | 0 | 0 | 0 | 0 | 0 |
| | | NaSS | 100% by weight | (parts by weight) | 0.05 | 0.05 | 0 | 0 | 0 | 0 | 0 | 0 |
| | Initiator | APS(aq) | 2% by weight | (parts by weight) | 7.5 | 7.5 | 7.5 | 7.5 | 7.5 | 7.5 | 7.5 | 7.5 |
| | Ion-exchanged water | | - | (parts by weight) | 52 | 52 | 52 | 52 | 52 | 52 | 52 | 52 |
| Physical properties | Glass transition temp (Tg) | | --- | (°C) | 60 | 60 | 24.8 | 24.8 | 95 | 95 | 95 | 95 |
| | Volume avg particle size (D50) | | --- | (nm) | 132 | 3460 | 122 | 1350 | 131 | 1470 | 2010 | 2490 |
| Polymer shape after covering layer formation | | | | --- | Particulate | Particulate | Film | Film | Particulate | Particulate | Particulate | Particulate |
| Particle size of polymer after covering layer formation | | | --- | (nm) | - | 3470 | - | 1360 | - | 1480 | 2020 | 2500 |
| Particle size distribution of polymer after covering layer formation | | | --- | --- | - | 1.08 | - | 1.06 | - | 1.08 | 1.02 | 1.04 |

**[Table 2-2]**

| | Type | Raw material name | Active ingredient ratio | Unit | Aqueous dispersion | | | | | | | | |
|---|---|---|---|---|---|---|---|---|---|---|---|---|---|
| | | | | | A3-4 | A3-5 | A3-6 | A3-7 | A3-8 | A4 | A4-1 | A5 | A5-1 |
| Initial charge | Seed polymer type | | - | --- | A3 | A3 | A3 | A3 | A3 | - | A4 | - | A3 |
| | Seed polymer diameter | | - | (nm) | 131 | 131 | 131 | 131 | 131 | - | 127 | - | 131 |
| | Seed polymer amount | | 100% by weight | (parts by weight) | 20 | 20 | 20 | 20 | 20 | - | 20 | - | 20 |
| | Emulsifier | KH 1025 | 25% by weight | (parts by weight) | - | - | - | - | - | 0.5 | - | 0.5 | - |
| | | SR1025 | 25% by weight | (parts by weight) | - | - | - | - | - | 0.5 | - | 0.5 | - |
| | Ion-exchanged water | | - | (parts by weight) | 70.4 | 70.4 | 70.4 | 70.4 | 70.4 | 70.4 | 70.4 | 70.4 | 70.4 |
| | Initiator | APS (aq) | 2% by weight | (parts by weight) | 7.5 | 7.5 | 7.5 | 7.5 | 7.5 | 7.5 | 7.5 | 7.5 | 7.5 |
| Emulsion | Acid monomer | MAA | 100% by weight | (parts by weight) | 1.0 | 1.0 | 1.0 | 1.0 | 1.0 | 1.0 | 1.0 | 1.0 | 1.0 |
| | | AA | 100% by weight | (parts by weight) | 1.0 | 1.0 | 1.0 | 1.0 | 1.0 | 1.0 | 1.0 | 1.0 | 1.0 |
| | (Meth)acrylic acid ester | MMA | 100% by weight | (parts by weight) | 20.0 | 20.0 | 20.0 | 20.0 | 20.0 | 87.0 | 87.0 | 20.0 | 20.0 |
| | | BA | 100% by weight | (parts by weight) | 0 | 0 | 0 | 0 | 0 | 0 | 0 | 0 | 0 |
| | | BMA | 100% by weight | (parts by weight) | 0 | 0 | 0 | 0 | 0 | 0 | 0 | 0 | 0 |
| | | EHA | 100% by weight | (parts by weight) | 0 | 0 | 0 | 0 | 0 | 0 | 0 | 0 | 0 |
| | | CHMA | 100% by weight | (parts by weight) | 0 | 0 | 0 | 0 | 0 | 0 | 0 | 0 | 0 |
| | Aromatic vinyl monomer | St | 100% by weight | (parts by weight) | 78 | 78 | 78 | 78 | 78 | 0 | 0 | 78 | 78 |

| | | | | | | | | | | | | | |
|---|---|---|---|---|---|---|---|---|---|---|---|---|---|
| | Cyano group-containing monomer | AN | 100% by weight | (parts by weight) | 0 | 0 | 0 | 0 | 0 | 0 | 0 | 0 | 0 |
| | Functional group-containing monomer | HEMA | 100% by weight | (parts by weight) | 0 | 0 | 0 | 0 | 0 | 0 | 0 | 0 | 0 |
| | | AM | 100% by weight | (parts by weight) | 0 | 0 | 0 | 0 | 0 | 5 | 5 | 0 | 0 |
| | Crosslinkable monomer | GMA | 100% by weight | (parts by weight) | 0 | 0 | 0 | 0 | 0 | 0 | 0 | 0 | 0 |
| | | A-TMPT | 100% by weight | (parts by weight) | 1.0 | 1.0 | 1.0 | 1.0 | 1.0 | 1.0 | 1.0 | 1.0 | 1.0 |
| | | AcSi | 100% by weight | (parts by weight) | 0.5 | 0.5 | 0.5 | 0.5 | 0.5 | 0.5 | 0.5 | 0.5 | 0.5 |
| | Emulsifier | KH 1025 | 25% by weight | (parts by weight) | 2.0 | 2.0 | 2.0 | 2.0 | 2.0 | 2.0 | 2.0 | 2.0 | 2.0 |
| | | SR1025 | 25% by weight | (parts by weight) | 0 | 0 | 0 | 0 | 0 | 0 | 0 | 0 | 0 |
| | | NaSS | 100% by weight | (parts by weight) | 0 | 0 | 0 | 0 | 0 | 0 | 0 | 0 | 0 |
| | Initiator | APS (aq) | 2% by weight | (parts by weight) | 7.5 | 7.5 | 7.5 | 7.5 | 7.5 | 7.5 | 7.5 | 7.5 | 7.5 |
| | Ion-exchanged water | | - | (parts by weight) | 52 | 52 | 52 | 52 | 52 | 52 | 52 | 52 | 52 |
| Physical properties | Glass transition temp (Tg) | | --- | (°C) | 95 | 95 | 95 | 95 | 95 | 105 | 105 | 95 | 95 |
| | Volume avg particle size (D50) | | --- | (nm) | 2970 | 3500 | 4980 | 7460 | 9960 | 127 | 3460 | 131 | 2020 |
| Polymer shape after covering layer formation | | | | --- | Particulate | Particulate | Particulate | Particulate | Particulate | Particulate | Particulate | Particulate | Particulate |
| Particle size of polymer after covering layer formation | | | --- | (nm) | 2980 | 3510 | 4990 | 7480 | 9980 | - | 3470 | - | 2020 |
| Particle size distribution of polymer after covering layer formation | | | --- | --- | 1.08 | 1.03 | 1.04 | 1.62 | 1.78 | - | 1.06 | - | 1.08 |

### <Explanation of Abbreviations>

### ·Emulsifier

KH1025: "Aqualon KH1025"^{™}, manufactured by DKS Co., Ltd., 25% aqueous solution
SR1025: "ADEKA REASOAP SR1025"^{™} , manufactured by ADEKA Corporation, 25% aqueous solution
NaSS: Sodium p-styrenesulfonate

### ·Initiator

APS(aq): Ammonium persulfate (2% aqueous solution)

### ·Monomer

MAA: methacrylic acid
AA: acrylic acid
MMA: methyl methacrylate
BA: n-butyl acrylate
BMA: n-butyl methacrylate
EHA: 2-ethylhexyl acrylate
CHMA: cyclohexyl methacrylate
St: styrene
AN: acrylonitrile
HEMA: 2-hydroxyethyl methacrylate
AM: Acrylamide
GMA: glycidyl methacrylate
A-TMPT: Trimethylolpropane triacrylate
AcSi: γ-methacryloxypropyltrimethoxysilane

### <<Separator Production Examples>>

### <Example 1>

100 parts by weight of water was mixed with 0.3 parts by weight of an aqueous solution of ammonium polycarboxylate (SN Dispersant 5468 manufactured by San Nopco Limited) and 100 parts by weight of aluminum hydroxide oxide (Boehmite; average particle size 450 nm) as an inorganic filler, and the mixture was processed with a bead mill to obtain a pre-application dispersion. In the pre-application dispersion, 0.2 parts by weight of carboxymethylcellulose (CMC) as a water-soluble polymer component was mixed with 100 parts by weight of the inorganic filler, and then 4 parts by weight as a solid content of an acrylic latex suspension (40% solid concentration, volume average particle size 150 nm, Tg -10°C) as a resin binder was mixed, and 10 parts by weight of aqueous dispersion A3-5 was mixed and uniformly dispersed to prepare a coating liquid (solid content 40 parts by weight) containing a thermoplastic polymer.

Both sides of the polyolefin microporous membrane B1 were surface-treated by corona discharge treatment. The coating liquid was then applied to one surface of the polyolefin microporous membrane B1 using a gravure coater. In the coating solution supply tank, the coating solution was stirred using a Bernoulli flow stirrer BEAG (manufactured by MEDEC, rotation speed 650 rpm), and the shear rate by the gravure coater was 80,000 sec⁻¹. At this time, the coverage area ratio of the covering layer to the polyolefin microporous membrane was 100%. The applied coating liquid was then dried at 60°C to remove the water. In this manner, a separator in which a covering layer was formed on one surface of the polyolefin microporous membrane B1 was obtained.

### <Examples 2 to 15 and Comparative Examples 1 to 4>

The separators of the Examples and Comparative Examples were obtained in the same manner as in Example 1, except that the polyolefin microporous membrane, the composition of the coating liquid, and the coating conditions were changed as shown in the table below.

In Comparative Example 1, an inclined paddle stirrer was used to stir the coating liquid.

In the separators of Examples 2 to 15 and Comparative Examples 1 and 2, the particulate polymer was dispersed in the form of primary particles, while in the separator of Comparative Example 4, the particulate polymer was dispersed in the form of secondary particles.

### <Evaluation of Presence/Absence of Curling, and Evaluation of Winding and Step Misalignments>

### (Curl Value)

The separator was cut to a size of MD 20 cm × TD 5 cm and placed on a flat table. After 30 seconds, the MD length (A cm) of the microporous membrane in contact with the table was measured and calculated as the curl value using the following formula: $\left[Curl value\right] = 20 cm - A cm$

The MD length (A cm) of the separator in contact with the base was measured at all points in the TD direction of the microporous membrane where the separator was in contact with the table. The measurements were performed at a temperature of 23±2°C and a relative humidity of 40%. The evaluation criteria for curl value are shown below.

### (Winding Misalignment)

As an index of winding stability, winding misalignment after slitting was evaluated.

A separator was slit to a width of 60 mm using a slitter TH4C (product name) manufactured by Nishimura MFG Co., Ltd. under the conditions of a feed tension of 100 N/m, a winding tension of 100 N/m, and a running speed of 100 m/min, and then wound up to 2000 m on a 3-inch paper tube to obtain a wound body. The degree of winding misalignment of the wound body at this time was evaluated. It should be noted that in the state after slitting, winding misalignment of less than 0.3 mm was judged as absent, and winding misalignment of 0.3 mm or more was judged as present.

Evaluation was carried out for 10 wound bodies, and winding misalignment was evaluated based on the number of the wound bodies that were determined to have winding misalignment. The evaluation criteria for winding misalignment are as follows.

### (Step Misalignment)

As an index of impact resistance stability of the separator wound body having a winding length of 2000 m wound on a 3-inch paper tube obtained in the above-mentioned "winding misalignment", the step misalignment was evaluated as follows.

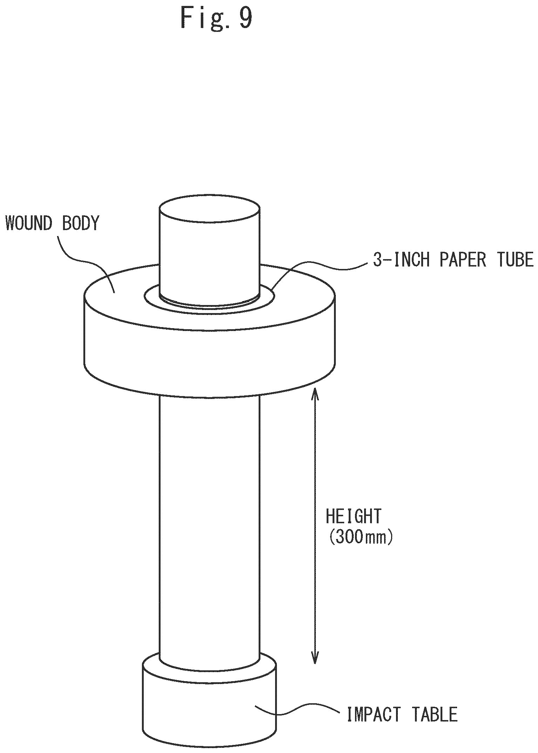

A wound body of the microporous membrane was set on the inspection jig shown in FIG. 9 and dropped from a height of 300 mm onto an impact table to apply an impact to the wound body. The wound body that was subjected to the impact was placed horizontally, the distance from the bottom surface of the wound body to the top surface of the wound body was measured, and the misalignment width was calculated using the following formula. The longer this distance, the greater the step misalignment. Misalignment width = (distance between top and bottom surfaces of wound body after step misalignment) - (wound body slit width)

The evaluation criteria for step misalignment are as follows.

### (Curl Evaluation Criteria)

A: 19 cm or more
B: less than 19 cm and 15 cm or more
C: less than 15 cm

### (Evaluation criteria for winding misalignment)

A: winding misalignment of 0 wound bodies/10 wound bodies
B: winding misalignment of 1 to 2 wound bodies/10 wound bodies
C: winding misalignment of 3 or more wound bodies

### (Evaluation criteria for step misalignment)

A: 0 mm or more and less than 1 mm
B: 1 mm or more and less than 10 mm
C: 10 mm or more

The measurement results and evaluation results of the Examples and Comparative Examples are shown in the tables below.

**[Table 3-1]**

| Table 3. Separator | | | | | | | | | |
|---|---|---|---|---|---|---|---|---|---|
| | | Ex 1 | Ex 2 | Ex 3 | Ex 4 | Ex 5 | Ex 6 | Ex 7 | Ex 8 |
| Substrate | | B1 | B1 | B1 | B1 | B1 | B1 | B1 | B1 |
| Methylene chloride solubles in substrate (weight%) | | 0.7 | 0.7 | 0.7 | 0.7 | 0.7 | 0.7 | 0.7 | 0.7 |
| Weight ratio of each component | Inorganic filler (parts by weight) | 100 | 100 | 100 | 100 | 100 | 100 | 100 | 100 |
| | Particulate polymer (parts by weight) | 10 | 10 | 10 | 10 | 5 | 15 | 30 | 10 |
| | Resin binder (parts by weight) | 4 | 4 | 4 | 4 | 4 | 4 | 4 | 4 |
| | Water-soluble polymer components (parts by weight) | 0.2 | 0.2 | 0.2 | 0.2 | 0.2 | 0.2 | 0.2 | 0.2 |
| Inorganic component | Type | Boehmite | Boehmite | Boehmite | Boehmite | Boehmite | Boehmite | Boehmite | Boehmite |
| | Average particle size (nm) | 450 | 450 | 450 | 450 | 450 | 450 | 450 | 450 |
| | Shape | Block-like | Block-like | Block-like | Block-like | Block-like | Block-like | Block-like | Block-like |
| | Aspect ratio | 1.8 | 1.8 | 1.8 | 1.8 | 1.8 | 1.8 | 1.8 | 1.8 |
| | Particle size distribution CV | 0.45 | 0.45 | 0.45 | 0.45 | 0.45 | 0.45 | 0.45 | 0.45 |
| Aqueous dispersion component | Type | A3-5 | A3-6 | A3-4 | A3-3 | A3-5 | A3-5 | A3-5 | A4-1 |
| | Average particle size (µm) | 3.5 | 5.0 | 3.0 | 2.5 | 3.5 | 3.5 | 3.5 | 3.5 |
| | Particle size distribution: MV/MN | 1.03 | 1.04 | 1.08 | 1.04 | 1.03 | 1.03 | 1.03 | 1.06 |
| Tension applied perpendicular to surface where coated surface contacts transport roller (N/m) | | 120 | 120 | 120 | 120 | 120 | 120 | 120 | 120 |
| Ratio of transport roller speed where coated surface contacts to separator transport speed | | 0.995 | 0.995 | 0.995 | 0.995 | 0.995 | 0.995 | 0.995 | 0.995 |
| Slurry B-type viscosity (mPas) | | 30 | 30 | 30 | 30 | 30 | 30 | 30 | 30 |
| Coefficient of static friction of covering layer | | 0.46 | 0.45 | 0.51 | 0.40 | 0.44 | 0.51 | 0.55 | 0.41 |
| Missing ratio of particulate polymer | | 0.88 | 0.74 | 0.91 | 1.04 | 0.88 | 0.90 | 0.90 | 0.91 |
| Ratio of shedding area of particulate polymer (%) | | 0 | 0.1 | 0 | 0 | 0 | 0 | 0 | 0 |
| Thickness of inorganic filler portion of covering layer L1 (µm) | 2.5 | 2.5 | 2.5 | 2.5 | 2.5 | 2.5 | 2.5 | 2.5 | |
| Covering layer thickness: L2 (µm) | 3.0 | 3.4 | 2.7 | 2.6 | 3.0 | 3.0 | 3.0 | 3.0 | |
| Maximum distance to contour of particulate polymer: L3 (µm) | 3.1 | 3.7 | 2.7 | 2.6 | 3.1 | 3.2 | 3.2 | 3.2 | |
| Gradient ratio of covering layer L2/L1 | 1.20 | 1.36 | 1.08 | 1.02 | 1.20 | 1.20 | 1.20 | 1.20 | |
| Coverage rate of protruding portion(L2-L1)/(L3-L1) | 0.83 | 0.75 | 1.00 | 0.50 | 0.83 | 0.77 | 0.77 | 0.77 | |
| Contact rate between particulate polymer and substrate (%) | 66 | 72 | 61 | 33 | 71 | 68 | 73 | 68 | |
| 180° peel strength (gf/cm) | 250 | 250 | 250 | 250 | 250 | 250 | 250 | 250 | |
| Coefficient of variation of Voronoi regions | 0.47 | 0.52 | 0.43 | 0.40 | 0.53 | 0.41 | 0.35 | 0.47 | |
| Number ratio of protruding particulate polymer (%) | 73 | 88 | 56 | 51 | 77 | 72 | 81 | 70 | |
| Particle size distribution of particulate polymer | 1.03 | 1.04 | 1.08 | 1.04 | 1.03 | 1.03 | 1.03 | 1.06 | |
| Metal cations (ppm) | 40 | 40 | 40 | 40 | 40 | 40 | 40 | 40 | |
| 130°C thermal shrinkage rate TD (%) | <1.0 | <1.0 | <1.0 | <1.0 | <1.0 | <1.0 | <1.0 | <1.0 | |
| 150°C thermal shrinkage rate TD (%) | <1.0 | <1.0 | <1.0 | <1.0 | <1.0 | <1.0 | 15.3 | <1.0 | |
| Adhesive strength to electrode before electrolyte solution injection | A | A | B | C | B | A | A | B | |
| Adhesive strength to electrode after electrolyte solution injection | A | A | A | B | B | A | A | A | |
| Rate characteristics | A | A | A | A | A | B | B | A | |
| Cycle characteristics | A | A | A | A | A | B | B | A | |
| Powder flaking | A | A | A | A | A | A | B | A | |
| Curling | A | A | A | A | A | A | A | A | |
| Winding misalignment (wound body/10 wound bodies) | A | A | A | A | A | A | A | A | |
| Step misalignment (mm) | A | A | A | A | A | A | A | A | |

**[Table 3-2]**

| Table 3. Separator | | | | | | | | |
|---|---|---|---|---|---|---|---|---|
| | | Ex 9 | Ex 10 | Ex 11 | Ex 12 | Ex 13 | Ex 14 | Ex 15 |
| Substrate | | B1 | B2 | B2 | B2 | B2 | B2 | B2 |
| Methylene chloride solubles in substrate (weight%) | | 0.7 | 0.5 | 0.5 | 0.5 | 0.5 | 0.5 | 0.5 |
| Weight ratio of each component | Inorganic filler (parts by weight) | 100 | 100 | 100 | 100 | 100 | 100 | 100 |
| | Particulate polymer (parts by weight) | 10 | 10 | 10 | 10 | 20 | 10 | 10 |
| | Resin binder (parts by weight) | 4 | 4 | 4 | 4 | 4 | 4 | 4 |
| | Water-soluble polymer components (parts by weight) | 0.2 | 0.2 | 1 | 0.2 | 0.2 | 0.2 | 0.2 |
| Inorganic component | Type | Boehmite | Boehmite | Boehmite | Boehmite | Boehmite | Alumina | Barium sulfate |
| | Average particle size (nm) | 450 | 200 | 200 | 200 | 200 | 200 | 200 |
| | Shape | Block-like | Block-like | Block-like | Block-like | Block-like | Spherical | Granular |
| | Aspect ratio | 1.8 | 1.7 | 1.7 | 1.7 | 1.7 | 1.3 | 1.4 |
| | Particle size distribution CV | 0.45 | 0.4 | 0.4 | 0.4 | 0.4 | 0.55 | 0.5 |
| Aqueous dispersion component | Type | A1-1 | A2-1 | A3-6 | A3-1 | A3-1 | A3-1 | A3-1 |
| | Average particle size (µm) | 3.5 | 1.4 | 5.0 | 1.5 | 1.5 | 1.5 | 1.5 |
| | Particle size distribution: MV/MN | 1.08 | 1.06 | 1.04 | 1.08 | 1.08 | 1.08 | 1.08 |
| Tension applied perpendicular to surface where coated surface contacts transport roller (N/m) | | 120 | 120 | 120 | 120 | 120 | 120 | 120 |
| Ratio of transport roller speed where coated surface contacts to separator transport speed | | 0.995 | 0.995 | 0.995 | 0.995 | 0.995 | 0.995 | 0.995 |
| Slurry B-type viscosity (mPas) | | 30 | 30 | 110 | 50 | 50 | 40 | 30 |
| Coefficient of static friction of covering layer | | 0.45 | 0.51 | 0.40 | 0.51 | 0.51 | 0.45 | 0.47 |
| Missing ratio of particulate polymer | | 0.88 | 0.88 | 0.93 | 0.84 | 0.84 | 0.84 | 0.84 |
| Ratio of shedding area of particulate polymer (%) | 0 | 0 | 8 | 0 | 0 | 0 | 0 | |
| Thickness of inorganic filler portion of covering layer L1 (µm) | 2.5 | 1.0 | 1.0 | 1.0 | 1.0 | 1.0 | 1.0 | |
| Covering layer thickness: L2 (µm) | 3.0 | 1.2 | 1.1 | 1.2 | 1.2 | 1.2 | 1.2 | |
| Maximum distance to contour of particulate polymer: L3 (µm) | 3.1 | 1.2 | 1.5 | 1.3 | 1.3 | 1.3 | 1.3 | |
| Gradient ratio of covering layer L2/L1 | 1.20 | 1.20 | 1.08 | 1.20 | 1.20 | 1.20 | 1.20 | |
| Coverage rate of protruding portion(L2-L1)/(L3-L1) | 0.91 | 1.00 | 0.16 | 0.80 | 0.80 | 0.80 | 0.80 | |
| Contact rate between particulate polymer and substrate (%) | 63 | 83 | 100 | 92 | 92 | 88 | 83 | |
| 180° peel strength (gf/cm) | 250 | 250 | 300 | 270 | 270 | 320 | 310 | |
| Coefficient of variation of Voronoi regions | 0.47 | 0.30 | 0.55 | 0.39 | 0.39 | 0.35 | 0.30 | |
| Number ratio of protruding particulate polymer (%) | 71 | 98 | 100 | 96 | 95 | 93 | 95 | |
| Particle size distribution of particulate polymer | 1.08 | 1.06 | 1.04 | 1.08 | 1.08 | 1.08 | 1.08 | |
| Metal cations (ppm) | 40 | 40 | 40 | 40 | 40 | 40 | 40 | |
| 130°C thermal shrinkage rate TD (%) | <1.0 | <1.0 | <1.0 | <1.0 | <1.0 | <1.0 | <1.0 | |
| 150°C thermal shrinkage rate TD (%) | <1.0 | 2.5 | 7.6 | <1.0 | 4.2 | <1.0 | <1.0 | |
| Adhesive strength to electrode before electrolyte solution injection | A | A | B | B | A | B | B | |
| Adhesive strength to electrode after electrolyte solution injection | B | B | B | B | A | B | B | |
| Rate characteristics | A | B | A | A | A | A | A | |
| Cycle characteristics | A | B | B | A | A | A | A | |
| Powder flaking | A | A | B | A | A | A | A | |
| Curling | A | A | A | A | A | A | A | |
| Winding misalignment (wound body/10 wound bodies) | A | A | A | A | A | A | A | |
| Step misalignment (mm) | A | A | A | A | A | A | A | |

**[Table 4]**

| Table 4. Separator | | | | | |
|---|---|---|---|---|---|
| | | Comp Ex 1 | Comp Ex 2 | Comp Ex 3 | Comp Ex 4 |
| Substrate | | B1 | B1 | B1 | B1 |
| Methylene chloride solubles in substrate (weight%) | | 0.7 | 0.7 | 0.7 | 0.7 |
| Weight ratio of each component | Inorganic filler (parts by weight) | 100 | 100 | 100 | 100 |
| | Particulate polymer (parts by weight) | 10 | 10 | 0 | 10 |
| | Resin binder (parts by weight) | 4 | 4 | 4 | 4 |
| | Water-soluble polymer components (parts by weight) | 1 | 1 | 1 | 1.5 |
| Inorganic component | Type | Boehmite | Boehmite | Boehmite | Boehmite |
| | Average particle size (nm) | 450 | 450 | 450 | 450 |
| | Shape | Block-like | Block-like | Block-like | Block-like |
| | Aspect ratio | 1.8 | 1.8 | 1.8 | 1.8 |
| | Particle size distribution CV | 0.45 | 0.45 | 0.45 | 0.45 |
| Aqueous dispersion component | Type | A3-7 | A3-2 | - | A3-8 |
| | Average particle size (µm) | 7.5 | 2.0 | - | 10.0 |
| | Particle size distribution: MV/MN | 1.62 | 1.02 | - | 1.78 |
| Tension applied perpendicular to surface where coated surface contacts transport roller (N/m) | | 40 | 40 | 40 | 40 |
| Ratio of transport roller speed where coated surface contacts to separator transport speed | | 1.000 | 1.000 | 1.000 | 1.000 |
| Slurry B-type viscosity (mPas) | | 110 | 110 | 110 | 220 |
| Coefficient of static friction of covering layer | | 0.38 | 0.32 | 0.32 | 0.34 |
| Missing ratio of particulate polymer | 1.00 | - | - | 0.97 | |
| Ratio of shedding area of particulate polymer (%) | 13 | 0 | - | 23 | |
| Thickness of inorganic filler portion of covering layer L1 (µm) | 2.5 | 2.5 | 2.5 | 2.5 | |
| Covering layer thickness: L2 (µm) | 2.8 | - | - | 2.9 | |
| Maximum distance to contour of particulate polymer: L3 (µm) | 4.5 | - | - | 9.0 | |
| Gradient ratio of covering layer L2/L1 | 1.12 | - | - | 1.16 | |
| Coverage rate of protruding portion(L2-L1)/(L3-L1) | 0.15 | - | - | 0.06 | |
| Contact rate between particulate polymer and substrate (%) | 40 | 10 | 0 | 60 | |
| 180° peel strength (gf/cm) | 300 | 300 | 300 | 320 | |
| Coefficient of variation of Voronoi regions | 0.72 | 0.82 | - | 0.68 | |
| Number ratio of protruding particulate polymer (%) | 96 | 18 | - | 98 | |
| Particle size distribution of particulate polymer | 1.62 | 1.02 | - | 1.78 | |
| Metal cations (ppm) | 40 | 40 | 40 | 40 | |
| 130°C thermal shrinkage rate TD (%) | <1.0 | <1.0 | <1.0 | <1.0 | |
| 150°C thermal shrinkage rate TD (%) | 10.1 | 8.1 | <1.0 | 50.0< | |
| Adhesive strength to electrode before electrolyte solution injection | C | D | D | C | |
| Adhesive strength to electrode after electrolyte solution injection | B | D | D | C | |
| Rate characteristics | C | B | A | C | |
| Cycle characteristics | C | B | A | C | |
| Powder flaking | B | A | A | C | |
| Curling | B | C | C | B | |
| Winding misalignment (wound body/10 wound bodies) | C | C | C | C | |
| Step misalignment (mm) | C | C | C | C | |

### INDUSTRIAL APPLICABILITY

The separator for an electricity storage device of the present disclosure can be suitably used for various electricity storage devices, and preferably lithium-ion secondary batteries.

### DESCRIPTION OF REFERENCE SIGNS

- 1: inorganic filler
- 2: particulate polymer
- 10: substrate (polyolefin microporous membrane substrate)
- 20: covering layer
- H: maximum height of particulate polymer in vertical direction relative to separator surface
- W: maximum width of particulate polymer in horizontal direction relative to separator surface

## Claims

1. A separator for an electricity storage device, comprising a substrate which is a polyolefin microporous membrane comprising a polyolefin as a primary component, and
a covering layer arranged on at least one surface of the substrate, wherein
the covering layer comprises an inorganic filler and a particulate, thermoplastic polymer,
the particulate, thermoplastic polymer comprises a protruding particulate polymer, which protrudes from a surface of the inorganic filler portion, and
a coefficient of static friction of the covering layer is 0.40 or more and 0.60 or less.

2. The separator for an electricity storage device according to claim 1, wherein a part of a surface of the protruding particulate polymer is missing.

3. The separator for an electricity storage device according to claim 1, wherein in surface observation of the covering layer, a ratio of an area of a particulate polymer-shedding portion to a total area of the particulate polymer is 10% or less.

4. The separator for an electricity storage device according to claim 1, wherein the covering layer is formed in a gradient shape so as to be thicker toward the protruding particulate polymer, and
when a thickness of the inorganic filler portion is defined as L1 and a maximum distance from a boundary between the substrate and the covering layer to an outer surface of the inorganic filler, which is formed in the gradient shape, is defined as L2, an average value of a gradient ratio L2/L1 of the covering layer is 1.2 or more.

5. The separator for an electricity storage device according to claim 1, wherein the covering layer is formed in a gradient shape so as to be thicker toward the protruding particulate polymer, and
when a thickness of the inorganic filler portion is defined as L1, a maximum distance from a boundary between the substrate and the covering layer to an outer surface of the inorganic filler, which is formed in the gradient shape, is defined as L2, and a maximum distance from a boundary between the substrate and the covering layer to a contour of the protruding particulate polymer is defined as L3, an average value of a coverage rate (L2-L1)/(L3-L1) of the protruding particulate polymer is 0.4 or more.

6. The separator for an electricity storage device according to claim 1, wherein 20% or more of the protruding particulate polymer is in contact with the surface of the substrate.

7. The separator for an electricity storage device according to claim 1, wherein the covering layer has a 180° peel strength from the substrate of 200 gf/cm or more.

8. The separator for an electricity storage device according to claim 1, wherein in surface observation of the covering layer, a coefficient of variation (cv) of areas (sᵢ) of Voronoi polygons which are obtained by Voronoi division using the protruding particulate polymers as generating points is 0.10 or more and 0.60 or less.

9. The separator for an electricity storage device according to claim 1, a number of the protruding particulate polymers is 50% or more of a total number of the particulate, thermoplastic polymers contained in the covering layer.

10. The separator for an electricity storage device according to claim 1, wherein a particle size distribution of the particulate, thermoplastic polymer is 1.1 or less.

11. The separator for an electricity storage device according to claim 1, wherein the particulate polymer is a primary particle.

12. The separator for an electricity storage device according to claim 11, wherein an average particle size of the primary particles is 1 µm or more and 10 µm or less.

13. The separator for an electricity storage device according to claim 1, wherein a TD thermal shrinkage rate at 130°C for 1 hour is 5% or less.

14. The separator for an electricity storage device according to claim 1, wherein a TD thermal shrinkage rate at 150°C for 1 hour is 5% or less.

15. An electricity storage device, comprising the separator for an electricity storage device according to any one of claims 1 to 14.
